(19) Europäisches Patentamt
European Patent Office
Office européen des brevets

(11) **EP 3 334 174 B1**

(12) **EUROPEAN PATENT SPECIFICATION**

(45) Date of publication and mention
of the grant of the patent:
**25.05.2022 Bulletin 2022/21**

(21) Application number: **16858616.2**

(22) Date of filing: **21.04.2016**

(51) International Patent Classification (IPC):
*H04N 21/60* (2011.01)    *H04N 21/2662* (2011.01)
*H04N 21/462* (2011.01)    *H04N 21/61* (2011.01)
*H04N 21/6377* (2011.01)   *H04N 21/643* (2011.01)
*H04N 21/81* (2011.01)     *H04N 21/218* (2011.01)
*H04N 21/414* (2011.01)    *H04N 21/422* (2011.01)
*H04N 13/00* (2018.01)     *H04N 19/597* (2014.01)
*H04N 19/164* (2014.01)    *H04N 19/17* (2014.01)

(52) Cooperative Patent Classification (CPC):
**H04N 21/21805; H04N 21/2662; H04N 21/414;
H04N 21/422; H04N 21/4621; H04N 21/6125;
H04N 21/6175; H04N 21/6377; H04N 21/64322;
H04N 21/816;** H04N 13/161; H04N 13/194;
H04N 13/344

(86) International application number:
**PCT/CN2016/079873**

(87) International publication number:
**WO 2017/071167 (04.05.2017 Gazette 2017/18)**

(54) **METHOD AND DEVICE FOR MULTI-VIEWPOINT VIDEO TRANSMISSION**

VERFAHREN UND VORRICHTUNG ZUR ÜBERTRAGUNG VON VIDEO MIT MEHREREN
PERSPEKTIVEN

PROCÉDÉ ET DISPOSITIF POUR ÉMISSION VIDÉO MULTI-POINTS DE VUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.10.2015 CN 201510701264**

(43) Date of publication of application:
**13.06.2018 Bulletin 2018/24**

(73) Proprietor: **Huawei Technologies Co., Ltd.
Longgang District
Shenzhen, Guangdong 518129 (CN)**

(72) Inventors:
• **ZHOU, Chao
Shenzhen
Guangdong 518129 (CN)**
• **LIU, Bo
Shenzhen
Guangdong 518129 (CN)**
• **WU, Wenhai
Shenzhen
Guangdong 518129 (CN)**

(74) Representative: **Körber, Martin Hans
Mitscherlich PartmbB
Patent- und Rechtsanwälte
Sonnenstrasse 33
80331 München (DE)**

(56) References cited:
WO-A1-2015/155406    CN-A- 101 459 837
CN-A- 102 014 280    CN-A- 102 014 280
US-A1- 2012 057 002   US-A1- 2015 249 813

**(Cont. next page)**

- KURUTEPE E ET AL: "Client-Driven Selective Streaming of Multiview Video for Interactive 3DTV", IEEE TRANSACTIONS ON CIRCUITS AND SYSTEMS FOR VIDEO TECHNOLOGY, INSTITUTE OF ELECTRICAL AND ELECTRONICS ENGINEERS, USA, vol. 17, no. 11, 1 November 2007 (2007-11-01), pages 1558-1565, XP011195137, ISSN: 1051-8215, DOI: 10.1109/TCSVT.2007.903664
- AHMED HAMZA ET AL: "A DASH-based Free Viewpoint Video Streaming System", PROCEEDINGS OF NETWORK AND OPERATING SYSTEM SUPPORT ON DIGITAL AUDIO AND VIDEO WORKSHOP, 19 March 2014 (2014-03-19), pages 55-60, XP055462787, DOI: 10.1145/2578260.2578276 ISBN: 978-1-4503-2706-0
- ZHAO MINCHENG ET AL: "A cloud-assisted DASH-based Scalable Interactive Multiview Video Streaming framework", 2015 PICTURE CODING SYMPOSIUM (PCS), IEEE, 31 May 2015 (2015-05-31), pages 221-226, XP033184737, DOI: 10.1109/PCS.2015.7170079 [retrieved on 2015-07-28]
- STEPHAN WÜRMLIN ET AL: "Image-space Free-viewpoint Video", 69. MPEG MEETING; 19-07-2004 - 23-07-2004; REDMOND; (MOTION PICTURE EXPERT GROUP OR ISO/IEC JTC1/SC29/WG11),, no. M10894, 14 July 2004 (2004-07-14), XP030039689,

**Description**

**TECHNICAL FIELD**

The present invention relates to the field of image processing technologies, and in particular, to a multi-view video transmission method and apparatus.

**BACKGROUND**

A multi-view video is a group of video signals obtained by shooting a same scene from different angles of view by using multiple video cameras having different viewpoints and is provided to a user. Video signals having different viewpoints are dynamically presented to the user according to information about a head-mounted device, such as a gesture and a location, thereby providing experience such as multi-view or three-dimensional stereoscopic vision to the user.

Multi-view videos may be divided into a one-dimensional multi-view video and a two-dimensional multi-view video according to a viewpoint location distribution status. The one-dimensional multi-view video is a series of video sequences having different angles of view in a single dimension (for example, in a horizontal or vertical direction). The two-dimensional multi-view video is a series of video sequences having different angles of view in two dimensions, that is, in the horizontal direction and the vertical direction.

A user viewpoint switching and terminal display policy may be divided into two scenarios: a viewpoint switching independent display policy and a viewpoint switching fusion display policy. In the viewpoint switching independent display policy, a discrete viewpoint video is presented to a user, that is, when a user viewpoint changes, only a viewpoint video in a multi-view video sequence is presented to the user. However, in the viewpoint switching fusion display policy, a continuous viewpoint video is presented to a user, that is, when a user viewpoint changes, a viewpoint video in a multi-view video sequence or a new viewpoint video generated after fusion processing is performed on neighboring viewpoint videos may be presented to the user.

When a multi-view video is transmitted, a free-viewpoint video transmission method based on Dynamic Adaptive Stream over HTTP (English: Hyper Text Transfer Protocol, Chinese: Hyper Text Transfer Protocol) (English: Dynamic Adaptive Stream over HTTP, DASH for short) is used. The manner is as follows: A client determines a current angle of view of a user according to a gesture of the user or a location of an eye ball of the user; then selects two viewpoint videos closest to the angle of view of the user and downloads the two viewpoint videos by using an HTTP request; and finally performs fusion processing on the two downloaded viewpoint videos to generate a new free-viewpoint video and presents the new free-viewpoint video to the user. However, when the angle of view of the user changes, viewpoint videos corresponding to an angle of view after switching need to be re-downloaded from a server end. Then, fusion processing is performed, and presentation to the user is performed. Such a method for performing re-downloading causes a long switching delay, affecting user experience.

To reduce the foregoing switching delay, a 3D multi-view video transmission method based on DASH is put forward. The method is as follows: All viewpoint videos are downloaded from a client, then viewpoint videos closest to a current angle of view of a user are extracted according to a location of the current angle of view of the user and fused, and a viewpoint video generated after fusion is displayed to the user. Because all the viewpoint videos are transmitted, a time delay caused during switching of the angle of view can be avoided. However, because only videos corresponding to the current angle of view of the user are presented to the user, transmission of all the viewpoint videos causes a waste of bandwidths.

"Client-Driven Selective Streaming of MultiviewVideo for Interactive 3DTV", XP011195137, discloses a view-selective streaming strategy for streaming multiview video for single-user interactive 3DTV applications. The proposed system features selective streaming of views, such that only the views which are required to display the user's current view are delivered.

"A DASH-based Free Viewpoint Video Streaming System", XP055462787, discloses an interactive free-viewpoint video (FVV) streaming system that is based on the dynamic adaptive streaming over HTTP (DASH) standard. The system uses standard HTTP Web servers to achieve scalability with a large number of users and performs view synthesis and rate adaptation at the client-side to achieve high response time.

US 2015/0249813 A1 discloses a method of delivering content corresponding to a 360 degree scene, comprising: partitioning said 360 degree scene into a plurality of N portions; determining a current viewing angle of a user; and determining which of said N portions to stream to a playback device corresponding to said user during a first time interval based on the current viewing angle of said user.

WO 2015/155406 A1 relates to creating and viewing stereo images, for example stereo video images, also called 3D video. At least three camera sources with overlapping fields of view are used to capture a scene so that an area of the scene is covered by at least three cameras. At the viewer, a camera pair is chosen from the multiple cameras to create a stereo camera pair that best matches the location of the eyes of the user if they were located at the place of the camera sources.

## SUMMARY

The present invention provides a multi-view video transmission method and apparatus, so as to resolve a prior-art problem that a waste of bandwidths is caused when a time delay of switching of an angle of view is avoided. The invention is defined by a multi-view video transmission method according to independent claim 1 and a multi-view video transmission apparatus according to independent claim 2. In the following, parts of the description and drawings referring to embodiments which are not covered by the claims are not presented as embodiments of the invention, but as examples useful for understanding the invention. The scope of the protection is defined by the claims.

## BRIEF DESCRIPTION OF DRAWINGS

FIG. 1a is a schematic distribution diagram of a one-dimensional multi-view video according to an embodiment of the present invention;

FIG. 1b is a schematic distribution diagram of a two-dimensional multi-view video according to an embodiment of the present invention;

FIG. 2a is a schematic diagram of independent display of viewpoint videos according to an embodiment of the present invention;

FIG. 2b is a schematic diagram of fusion display of viewpoint videos according to an embodiment of the present invention;

FIG. 3 is a schematic diagram of a DASH-based free-viewpoint video transmission system according to an embodiment of the present invention;

FIG. 4 is a schematic diagram of an entire architecture of a multi-view video service according to an embodiment of the present invention;

FIG. 5 is a schematic diagram of video transcoding and slicing of a client according to an embodiment of the present invention;

FIG. 6 is a flowchart of a multi-view video transmission method according to an embodiment of the present invention;

FIG. 7a is a schematic diagram of rightward switching of a user according to an embodiment of the present invention;

FIG. 7b is a schematic diagram of leftward switching of a user according to an embodiment of the present invention;

FIG. 8 is a schematic location diagram of predictive viewpoint videos when a left side reaches a boundary of an angle of view according to an embodiment of the present invention;

FIG. 9 is a schematic diagram of grouping one-dimensional viewpoint videos during fusion display according to an embodiment of the present invention;

FIG. 10 is a schematic diagram of grouping one-dimensional viewpoint videos during independent display according to an embodiment of the present invention;

FIG. 11a is a schematic diagram of a single viewpoint video to which attention is paid in a two-dimensional application scenario according to an embodiment of the present invention;

FIG. 11b is a schematic diagram of horizontal fusion of two viewpoint videos to which attention is paid in a two-dimensional application scenario according to an embodiment of the present invention;

FIG. 11c is a schematic diagram of vertical fusion of two viewpoint videos to which attention is paid in a two-dimensional application scenario according to an embodiment of the present invention;

FIG. 11d is a schematic diagram of four viewpoint videos to which attention is paid in a two-dimensional application scenario according to an embodiment of the present invention;

FIG. 12a is a first schematic location diagram of predictive viewpoint videos in a two-dimensional application scenario according to an embodiment of the present invention;

FIG. 12b is a second schematic location diagram of predictive viewpoint videos in a two-dimensional application scenario according to an embodiment of the present invention;

FIG. 12c is a third schematic location diagram of predictive viewpoint videos in a two-dimensional application scenario according to an embodiment of the present invention;

FIG. 12d is a fourth schematic location diagram of predictive viewpoint videos in a two-dimensional application scenario according to an embodiment of the present invention;

FIG. 13 is a schematic location diagram of predictive viewpoint videos when a left side reaches a boundary of an angle of view in a two-dimensional application scenario according to an embodiment of the present invention;

FIG. 14 is a schematic diagram of grouping two-dimensional viewpoint videos during fusion display according to an embodiment of the present invention;

FIG. 15 is a schematic diagram of grouping two-dimensional viewpoint videos during independent display according to an embodiment of the present invention;

FIG. 16 is a schematic diagram of a multi-view video transmission apparatus according to an embodiment of the present invention;

FIG. 17 is a schematic diagram of another multi-view video transmission apparatus according to an embodiment of the present invention; and

FIG. 18 is a schematic diagram of still another multi-view video transmission apparatus according to an embodiment of the present invention.

## DESCRIPTION OF EMBODIMENTS

To make the objectives, technical solutions, and advantages of the present invention clearer, the following further describes the present invention in detail with reference to the accompanying drawings. Apparently, the described embodiments are merely a part rather than all of the embodiments of the present invention.

The embodiments of the present invention provide a multi-view video transmission method and apparatus. The method and the apparatus are based on a same inventive concept. Because principles of the method and the apparatus for resolving a problem are similar, cross reference may be made between implementation of the apparatus and implementation of the method, and repetitions are not described.

The embodiments of the present invention are applied to a head-mounted device such as 3D stereoscopic glasses or a free-viewpoint navigation device.

A multi-view video is a group of video signals obtained by collecting a same scene by using multiple collection devices having different viewpoints from different angles of view. A multi-view video in the embodiments of the present invention may be a one-dimensional viewpoint video or a two-dimensional viewpoint video.

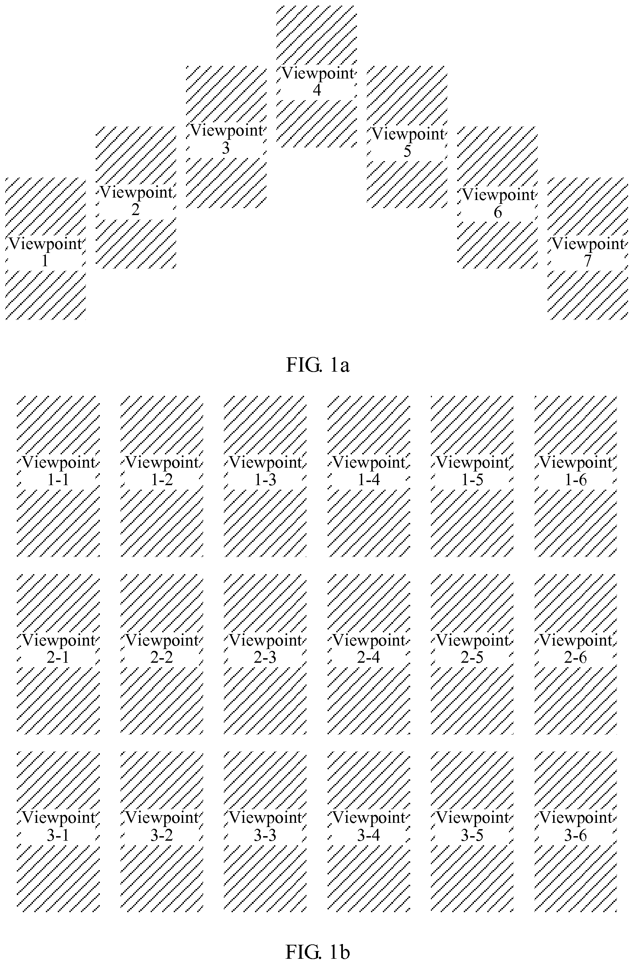

In a one-dimensional viewpoint video, shooting is performed by using a parallel video camera array, to obtain a series of video sequences having different angles of view in a single dimension, for example, in a horizontal direction or vertical direction. As shown in FIG. 1a, these viewpoint videos may be on a horizontal or vertical straight line, or may have a radian in a dimension, for example, a circular ring. For a two-dimensional multi-view video, a series of video sequences having different angles of view are obtained separately at horizontal and vertical dimensions by using a two-dimensional video camera array; or a video having an extra-large resolution may be shot by using a wide-angle camera, and then block partitioning processing is performed in both horizontal and vertical dimensions, where each sub-block may also be used as an independent viewpoint, as shown in FIG. 1b. Viewpoint videos corresponding to each dimension such as a row or a column in FIG. 1b may be arranged in a straight line, or may have a radian, for example, a two-dimensional plane, being arranged in a straight line in both horizontal and vertical directions, or a cylinder, having a radian in a horizontal or vertical direction, or a sphere, having a radian in both horizontal and vertical directions. A viewpoint switching independent display policy and a viewpoint switching fusion display policy are described in detail below.

In the viewpoint switching independent display policy, a discrete viewpoint video is presented to a user, that is, when a user viewpoint changes, only a viewpoint video in a multi-view video sequence is presented to the user. However, in the viewpoint switching fusion display policy, a continuous viewpoint video is presented to a user, that is, when a user viewpoint changes, a viewpoint video in a multi-view video sequence or a new viewpoint video generated after fusion processing is performed on neighboring viewpoint videos may be presented to the user.

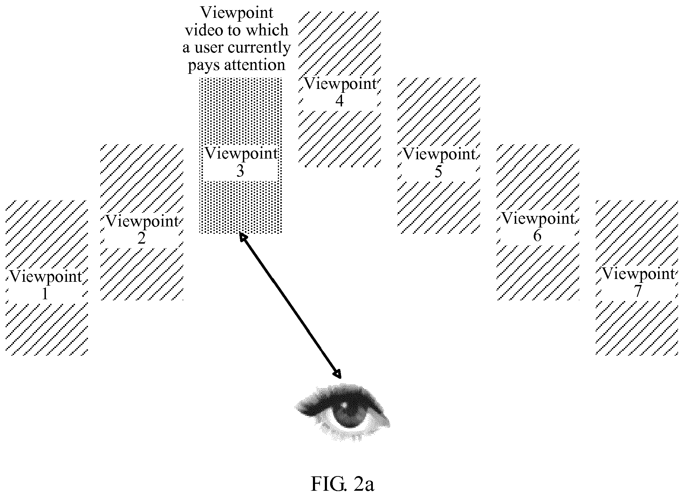

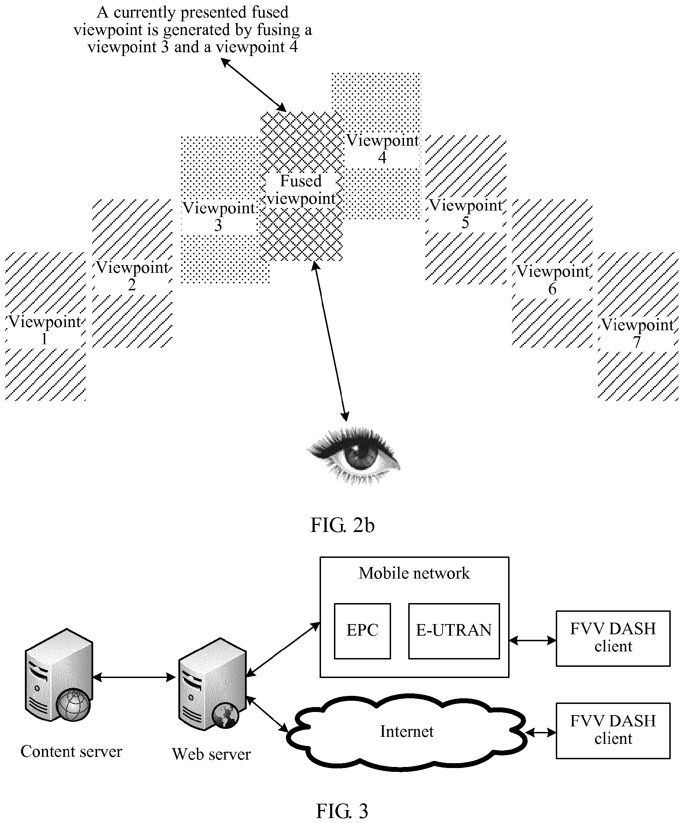

A largest difference between the viewpoint switching independent display policy and the viewpoint switching fusion display policy lies in that, in the viewpoint switching independent display policy, no new viewpoint video is generated. For example, in a one-dimensional viewpoint video, when a user viewpoint is between two viewpoint videos, a neighboring viewpoint video is selected and displayed, as shown in FIG. 2a. However, for the viewpoint switching fusion display policy, fusion processing may be performed on two neighboring viewpoint videos, a new viewpoint video is generated by means of viewpoint fusion and presented to a user, and seamless scene switching can be provided to the user. A typical application scenario is a free-viewpoint video service, as shown in FIG. 2b. In the embodiments of the present invention, for ease of description, multi-view videos are divided into three types: a viewpoint video to which attention is currently paid, a predictive viewpoint video, and a marginal viewpoint video. A viewpoint video to which attention is currently paid is a video that needs to be presented to a user, and for a one-dimensional application scenario, may be a single viewpoint video, or may be a viewpoint video obtained by fusing two neighboring viewpoint videos, as shown in FIG. 2a and FIG. 2b; or for a two-dimensional application scenario, may be a single viewpoint video, may be a viewpoint video obtained by fusing two neighboring viewpoint videos, or may be a viewpoint video obtained by fusing four neighboring viewpoint videos. A predictive viewpoint video is a viewpoint video that is predicted and may need to be presented to a user in future, and a viewpoint video whose probability of becoming a next viewpoint video attention is to be paid satisfies a preset probability value. Marginal viewpoint videos are all other viewpoint videos in a multi-view video than a viewpoint video to which attention is currently paid and a predictive viewpoint video, as shown in FIG. 2a and FIG. 2b.

Referring to FIG. 3, FIG. 3 shows a DASH-based free-viewpoint video transmission system according to an embodiment of the present invention. The system includes a free-viewpoint (English: Free-Viewpoint, FVV for short) client (Client) and servers, for example, a web server (Web Server) and a content server. A user stores each viewpoint video in the content server. The free-viewpoint client and the web server communicate with each other by using the Internet (Internet) or a mobile network (Mobile Network). The client may be a head-mounted device such as 3D stereoscopic glasses or a free-viewpoint navigation device.

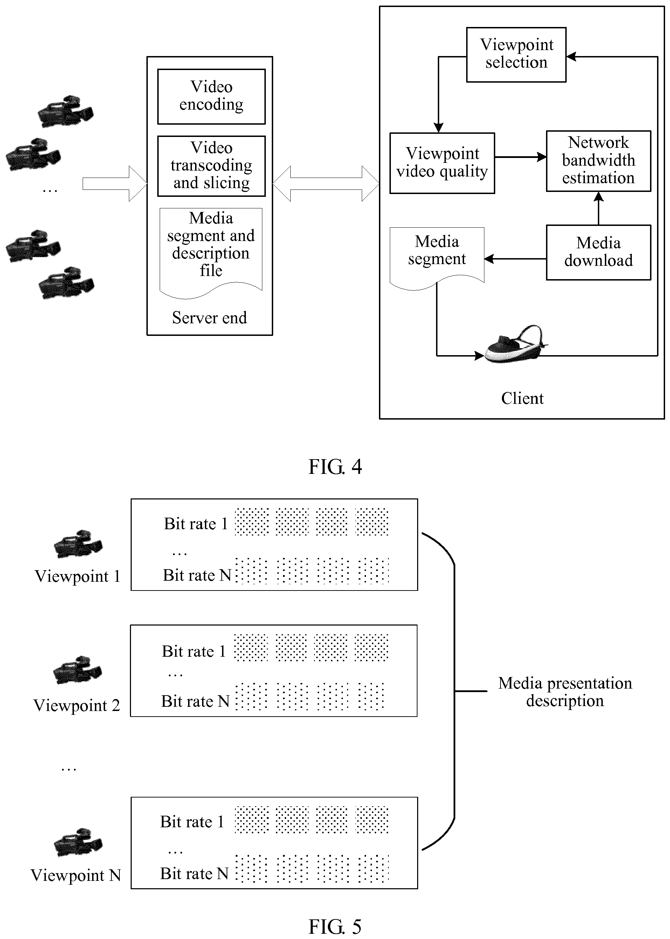

Referring to FIG. 4, FIG. 4 shows an entire architecture of a multi-view video service according to an embodiment of the present invention. At a server end, different viewpoint video streams are collected by using an array of video cameras. These video cameras are arranged in a row in a horizontal direction or arranged to have a radian, and the multiple collected viewpoint video streams are an initial source of a video source. Then, by using a video transcoding technology, the multiple collected viewpoint video streams are transcoded into different bit rate versions, and the different bit rate versions occupy different bandwidths during transmission. Each quality version of each viewpoint video stream is further split into video segments that have same duration, and finally these video segments after switching are organized and described by using a media presentation description (English: Media Presentation Description, MPD for short). Information about the organization and the description includes information such as an encoding manner, segment duration, a uniform resource locator (English: Uniform Resource Locator, URL for short) address, a frame rate, a resolution, and a video bit rate. All video segments and MPD files are stored in the server end, as shown in FIG. 5. At a client, a user first downloads an MPD file and parses the MPD file, to obtain server-end information. Then, an appropriate video segment is selected according to a bandwidth network status, a user gesture, and the like and downloaded. A DASH standard is used for an entire transmission process and a video organization manner of the server end.

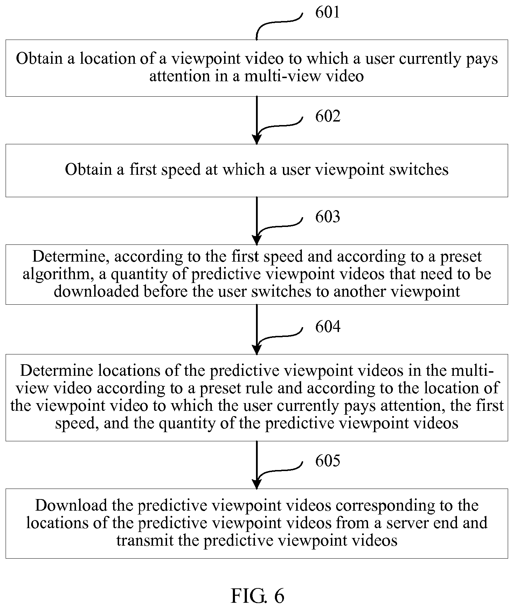

An embodiment of the present invention provides a multi-view video transmission method. As shown in FIG. 6, the method includes the following steps.

Step 601: Obtain a location of a viewpoint video to which a user currently pays attention in a multi-view video.

Information about a viewpoint video to which a user currently pays attention is obtained, where the information about the viewpoint video to which the user currently pays attention includes a location of the viewpoint video to which the user currently pays attention, and instantaneous speeds at which a user viewpoint switches. The instantaneous speeds at which the user viewpoint switches include collected instantaneous speeds at multiple moments during user viewpoint switching.

Step 602: Obtain a first speed at which a user viewpoint switches.

The first speed is a speed at which the user viewpoint switches to the location of the viewpoint video to which attention is currently paid.

When the user performs viewpoint switching, switching is performed from one viewpoint to another viewpoint, and the two viewpoints of switching may be or may not be neighboring to each other. Therefore, the obtained first speed at which the user viewpoint switches is obtained according to an instantaneous speed of the user during switching in a predetermined period of time before the user switches to the location of the viewpoint video to which attention is currently paid. The predetermined period of time may be a period of time in which switching to the location of the viewpoint video to which attention is currently paid is performed once, or may be a period of time in which switching to the location of the viewpoint video to which attention is currently paid is performed N times.

The obtaining a first speed at which a user viewpoint switches is implemented in the following manners:

First implementation:

in a predetermined period of time before the user viewpoint switches to the location of the viewpoint video to which attention is currently paid, when instantaneous speeds of the user at multiple moments are collected, an average value of the instantaneous speeds at the multiple moments is calculated, and the average value is used as the first speed.

Second implementation:

in a predetermined period of time before the user viewpoint switches to the location of the viewpoint video to which attention is currently paid, an instantaneous speed of the user at a moment is collected, and the instantaneous speed at the moment is used as the first speed.

Third implementation:

in a predetermined period of time before the user viewpoint switches to the location of the viewpoint video to which attention is currently paid, instantaneous speeds of the user at multiple moments are collected, and an instantaneous speed may be selected from the instantaneous speeds at the multiple moments and used as the first speed.

One of instantaneous speeds at multiple moments collected when the user performs viewpoint switching is randomly selected; or instantaneous speeds at multiple moments may be sorted per magnitude, and an instantaneous speed located in the middle is selected. For example, five instantaneous speeds are included, and an instantaneous speed ranked the third after sorting is selected as a user switching speed. Alternatively, a largest instantaneous speed may be selected, and so on.

Optionally, a first acceleration at which a user viewpoint switches is obtained, where the first acceleration is an acceleration at which the user viewpoint switches to the location of the viewpoint video to which attention is currently paid. Therefore, the first speed at which the user viewpoint switches may be further obtained in the following manner:

Fourth implementation:

in a predetermined period of time before the user viewpoint switches to the location of the viewpoint video to which attention is currently paid, an instantaneous speed of the user at a moment and an acceleration corresponding to the instantaneous speed at the moment are collected. Then, the first speed is determined according to a first rule and based on the instantaneous speed at the moment and the acceleration corresponding to the instantaneous speed at the moment.

Optionally, the first rule satisfies a condition of the following formula:

$$V = v(t) + \frac{1}{2}Ta(t);$$

where $V$ represents the first speed; $v(t)$ represents a collected instantaneous speed of the user at a moment $t$; $T$ represents duration of each viewpoint video; and $a(t)$ represents a viewpoint switching acceleration at the moment $t$.

Fifth implementation:

in a predetermined period of time before the user viewpoint switches to the location of the viewpoint video to which attention is currently paid, when instantaneous speeds of the user at multiple moments and an acceleration corresponding to an instantaneous speed at each moment are collected, an average value of the instantaneous speeds at the multiple moments, and an average value of the multiple accelerations corresponding to the instantaneous speeds at the multiple moments are calculated, and the first speed is determined according to a second rule and based on the average value of the instantaneous speeds at the multiple moments and the average value of the multiple accelerations.

Optionally, the second rule satisfies a condition of the following formula:

$$V = \frac{1}{n}\sum v(t) + \frac{1}{2n}T\sum a(t);$$

where n represents a quantity of instantaneous speeds at multiple moments.

Sixth implementation:

in a predetermined period of time before the user viewpoint switches to the location of the viewpoint video to which attention is currently paid, instantaneous speeds of the user at multiple moments and an acceleration corresponding to an instantaneous speed at each moment are collected. Then, an average value of the instantaneous speeds at the multiple moments is calculated, an acceleration corresponding to an instantaneous speed is selected from the accelerations corresponding to the instantaneous speeds at the multiple moments, and the first speed is determined according to a third rule and based on the average value of the instantaneous speeds at the multiple moments and the selected acceleration corresponding to the instantaneous speed.

Optionally, the third rule satisfies a condition of the following formula:

$$V = \frac{1}{n}\sum v(t) + \frac{1}{2}T\sum a(t).$$

Step 603: Determine, according to the first speed and according to a preset algorithm, a quantity $NNV$ of predictive viewpoint videos that need to be downloaded before the user switches to another viewpoint.

The preset algorithm satisfies a condition of the following formula:

$$NNV = N\frac{VT}{D};$$

where *NNV* represents the quantity of the predictive viewpoint videos; *V* represents the first speed; *N* represents a total quantity of viewpoint videos; *D* represents an angle covered by the *N* viewpoint videos; and *T* represents the duration of each viewpoint video.

For example, for a panorama image, the angle covered by the N viewpoint videos is 360 degrees.

Step 604: Determine locations of the predictive viewpoint videos in the multi-view video according to a preset rule and according to the location of the viewpoint video to which the user currently pays attention, the first speed, and the quantity *NNV* of the predictive viewpoint videos.

The predictive viewpoint videos are viewpoint videos whose probability of becoming a next viewpoint video attention is to be paid satisfies a preset probability value.

Step 605: Download the predictive viewpoint videos corresponding to the locations of the predictive viewpoint videos from a server end and transmit the predictive viewpoint videos.

By means of the method provided in this embodiment of the present invention, a location of a viewpoint video to which a user currently pays attention in a multi-view video is obtained; a first speed at which a user viewpoint switches is obtained, where the first speed is a speed at which the user viewpoint switches to the location of the viewpoint video to which attention is currently paid; a quantity *NNV* of predictive viewpoint videos that need to be downloaded before the user switches to another viewpoint is determined according to the first speed and according to a preset algorithm; locations of the predictive viewpoint videos are determined in the multi-view video according to a preset rule and according to the location of the viewpoint video to which the user currently pays attention, the first speed, and the quantity *NNV* of the predictive viewpoint videos, where the predictive viewpoint videos are viewpoint videos whose probability of becoming a next viewpoint video attention is to be paid satisfies a preset probability value; and the predictive viewpoint videos corresponding to the locations of the predictive viewpoint videos are downloaded from a server end and transmitted. Therefore, when the user pays attention to a current viewpoint video, a viewpoint video neighboring to the current viewpoint video, that is, a predictive viewpoint video, is downloaded from the server end and transmitted. When the user performs switching next time, the predictive viewpoint video may be used as a viewpoint video attention is paid. This can avoid a time delay caused during switching of an angle of view. Moreover, not all viewpoint videos need to be transmitted, and therefore a waste of bandwidths is reduced.

A one-dimensional multi-view video is used as an example below to perform description.

A1: Quantity of viewpoint videos.

(1) A quantity of fused viewpoint videos (English: Number of Concerned Views, *NCV* for short):
Fused viewpoint videos are viewpoint videos that are fused to obtain a current viewpoint video.

A viewpoint video to which the user currently pays attention is video content that needs to be presented to the user. A location of an angle of view to which the user currently pays attention may be determined according to a location of an eye ball of the user, a user gesture, and the like. Specifically, an area to which the user currently pays attention may be estimated by using information such as a current coordinate location of the user, a head declination, and a location of a distance to a video. A method for determining a viewpoint video to which a user currently pays attention is not specifically limited in the present invention, and methods for determining a viewpoint video to which a user currently pays attention in the prior art are all applicable to the present invention.

If a location of an angle of view to which a user currently pays attention is in the middle of a viewpoint video, the viewpoint video is a viewpoint video the user uniquely pays attention, that is, a quantity of viewpoint videos to which the user currently pays attention is one. If a location of an angle of view to which the user currently pays attention is not in the middle of a location of a viewpoint video, two viewpoint videos that are closest to the location of the angle of view of the user are fused, and then a viewpoint video obtained after fusion is used as a viewpoint video to which the user currently pays attention. In the present invention, viewpoint videos that are fused to obtain the viewpoint video to which the user currently pays attention are referred to as fused viewpoint videos. Therefore, the quantity of fused viewpoint videos may be one, that is, fusion is not needed, or the quantity of fused viewpoint videos may be two.

For a multi-view video service, viewpoints are independent of each other. When presentation is performed at a client, even if a viewpoint video the user pays attention is located in the middle of two viewpoint videos, fusion processing does not need to be performed, and the quantity of fused viewpoint videos is one.

(2) A quantity of predictive viewpoint videos is represented by using *NNV* whose English is Number of Near Views, that is, *NNV* viewpoint videos neighboring to a viewpoint video to which the user currently pays attention. The predictive viewpoint videos may be used in future as viewpoint videos to which attention is paid and presented to the user. The predictive viewpoint videos need to be transmitted. Therefore, during next user switching, attention may be paid to one or two viewpoint videos of the predictive viewpoint videos, so as to reduce a viewpoint switching delay.

Specifically, a first speed at which a user viewpoint switches is first obtained, and then the quantity *NNV* of the predictive viewpoint videos that need to be downloaded before the user switches to another viewpoint may be determined according to the first speed and according to a preset algorithm. For a method for obtaining the first speed, refer to any one of the first to the sixth implementations described above.

In this embodiment of the present invention, an average speed based on a time sliding window may be further used as the first speed *V*, that is, an average speed in a period of past time is used as the first speed *V*:

$$V = \frac{1}{T} \int_{t-T}^{t} v(\tau) d\tau \, ;$$

where *T* is duration of each video segment obtained by performing video slicing at a server end, that is, is used as duration of each viewpoint video.

The quantity *NNV* of predictive viewpoint videos that need to be downloaded before the user switches to another viewpoint is determined based on the first speed and according to the preset algorithm. The preset algorithm may satisfy a condition of the following formula:

$$NNV = N \frac{VT}{D} \, ;$$

where *NNV* represents the quantity of the predictive viewpoint videos; *V* represents the first speed; *N* represents a total quantity of viewpoint videos; *D* represents an angle covered by the *N* viewpoint videos, that is, an angle covered by the N viewpoint videos, for example, coverage of a panorama image is 360°; and *T* represents the duration of each viewpoint video.

(3) A quantity of marginal viewpoint videos (English: Number of Marginal Views, *NMV* for short):

All viewpoint videos other than the viewpoint video to which the user currently pays attention and the predictive viewpoint videos are marginal viewpoint videos. Therefore, the quantity of the marginal viewpoint videos is:

$$NMV = N - NCV - NNV \, .$$

A probability of converting marginal viewpoint videos into viewpoint videos to which attention is paid is relatively small, that is, a probability of presenting the marginal viewpoint videos to the user in a recent period of time is relatively small. Therefore, the marginal viewpoint videos may be not transmitted, thereby saving a transmission bandwidth.

A2: Determine a location of a viewpoint video.

(1) Location of a viewpoint video to which the user currently pays attention:

The location of the viewpoint video to which the user currently pays attention in a multi-view video is obtained. Specifically, a location of an angle of view to which the user currently pays attention may be determined according to a location of an eye ball of the user, a user gesture, and the like. This is not specifically limited in the present invention.

(2) Locations of the predictive viewpoint videos:

The locations of the predictive viewpoint videos in the multi-view video are determined according to a preset rule and according to the location of the viewpoint video to which the user currently pays attention, the first speed, and the quantity *NNV* of the predictive viewpoint videos.

Specifically, the determining is implemented in the following manner:

When the first speed is less than a predetermined speed threshold, and the quantity *NNV* of the predictive viewpoint videos is an even number, $\frac{NNV}{2}$ viewpoint videos are allocated at each of two sides neighboring to the location of the viewpoint video to which attention is currently paid, and the *NNV* viewpoint videos allocated at the two sides neighboring to the location of the viewpoint video to which attention is currently paid are used as predictive viewpoint videos.

When the first speed is less than the predetermined speed threshold, and the quantity *NNV* of the predictive viewpoint videos is an odd number, $\frac{NNV+1}{2}$ viewpoint videos neighboring to a first direction side of the viewpoint video to which attention is currently paid, and $\dfrac{NNV-1}{2}$ viewpoint videos neighboring to a second direction side of the viewpoint video to which attention is currently paid are used as predictive viewpoint videos, where the first direction side is the same as a vector direction of the first speed, and the second direction side is opposite to the vector direction of the first speed.

When the first speed is less than the predetermined speed threshold, and the quantity $NNV$ of the predictive viewpoint videos is an odd number, $\dfrac{NNV-1}{2}$ viewpoint videos neighboring to the first direction side of the location of the viewpoint video to which attention is currently paid, and $\dfrac{NNV+1}{2}$ viewpoint videos neighboring to the second direction side of the location of the viewpoint video to which attention is currently paid are used as predictive viewpoint videos.

That is, when $V < V_0$, it indicates that user switching is slow, and it may be considered that a future switching direction of the user has a relatively large uncertainty. $V_0$ represents the predetermined speed threshold.

When the user switching speed is not less than the predetermined speed threshold, $NNV$ viewpoint videos neighboring to the first direction side of the viewpoint video to which attention is currently paid are used as predictive viewpoint videos.

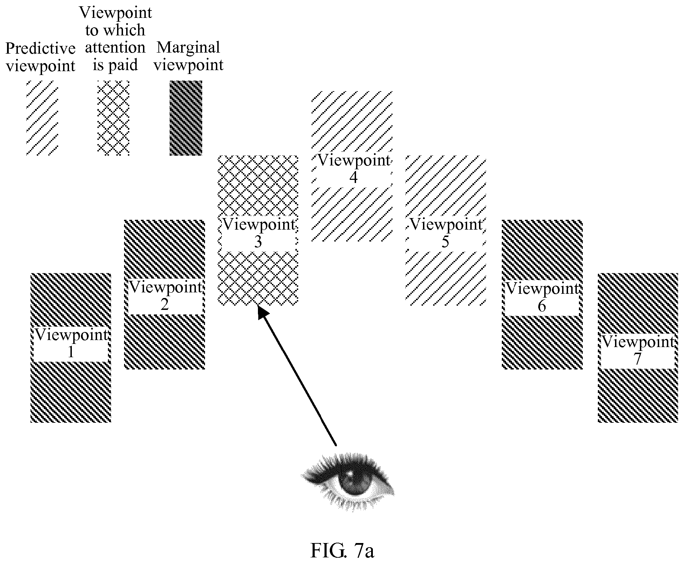

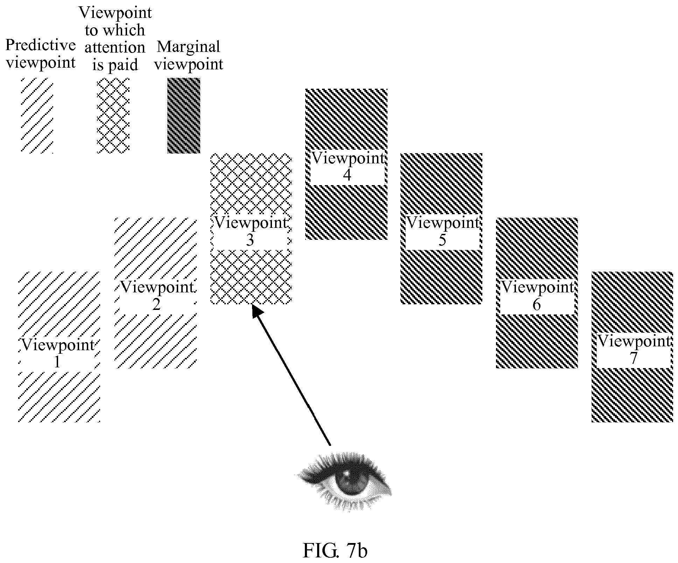

When the first speed $V$ is not less than the predetermined speed threshold $V_0$, that is, when $V \geq V_0$, it is considered that a future switching direction of the user has a relatively large certainty. Therefore, allocation of predictive viewpoint videos needs to consider a predicted direction of the first speed $V$, and $NNV$ viewpoint videos at a user switching speed direction side of the viewpoint video to which attention is currently paid are used as predictive viewpoint videos, as shown in FIG. 7a to FIG. 7b.

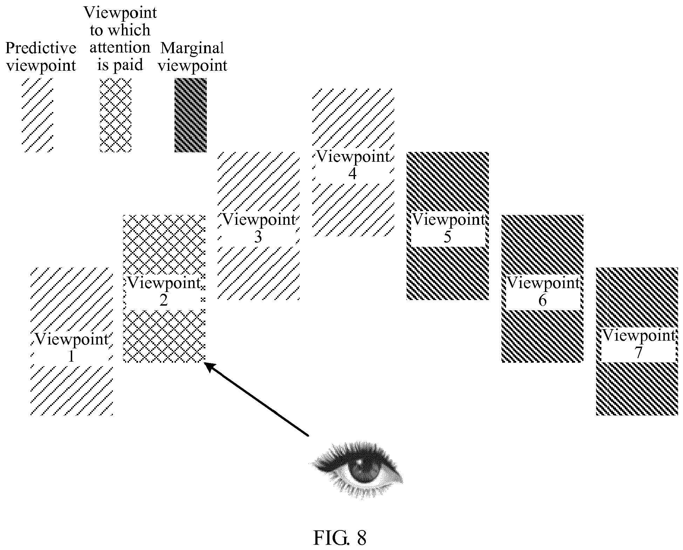

It should be noted that, when a quantity of viewpoint videos at a side of a location neighboring to the viewpoint video to which attention is currently paid is less than a quantity of allocated viewpoint videos, the quantity of all the viewpoint videos at the side of the location neighboring to the viewpoint video to which attention is currently paid is used as the quantity of the allocated viewpoint videos. Specifically, for allocation of a quantity of predictive viewpoint videos, when the viewpoint video to which attention is currently paid reaches a viewpoint boundary, allocation is stopped. For example, if $V < V_0$, when $NNV = 4$, respective two viewpoints at two sides of the viewpoint video to which attention is currently paid are theoretically all predictive viewpoint videos. Assuming that there is only one viewpoint at a left side of the viewpoint video to which attention is currently paid, and there are three viewpoints at a right side, one viewpoint video (reaching a viewpoint boundary) at the left side of the viewpoint video to which attention is currently paid, and two viewpoint videos at the right side are finally selected as predictive viewpoint videos, as shown in FIG. 8.

A3: Determine quality of a viewpoint video.

Each viewpoint video includes multiple bit rate versions, and each bit rate version requires a different bandwidth.

Each viewpoint video corresponding to the obtained location of each predictive viewpoint video may be downloaded from a server end and transmitted in the following manner.

(1) A bit rate version of the viewpoint video to which attention is currently paid and bit rate versions of the predictive viewpoint videos are determined according to a total bandwidth value allocated for viewpoint video transmission, and a preset bandwidth allocation policy.

Specifically, the preset bandwidth allocation policy includes:
determining, based on a delay and quality priority, a viewpoint type priority, and a predictive viewpoint video location priority and by using the total bandwidth value allocated for viewpoint video transmission, the transmitted bit rate version of the viewpoint video to which attention is currently paid and the transmitted bit rate versions of the predictive viewpoint videos. Herein, the determining is preferably based on the delay and quality priority, then based on the viewpoint type priority, and then based on the predictive viewpoint video location priority. The transmitted bit rate version of the viewpoint video to which attention is currently paid and the transmitted bit rate versions of the predictive viewpoint videos are determined.

The delay and quality priority is used to ensure that lowest bit rate versions of the viewpoint video to which attention is currently paid and the predictive viewpoint videos are transmitted. The viewpoint type priority includes: a priority of the viewpoint video to which attention is currently paid is higher than priorities of the predictive viewpoint videos, and therefore a bandwidth is preferably allocated to the viewpoint video to which attention is currently paid. The predictive viewpoint video location priority includes: an ascending order of distances between locations of all of the predictive viewpoint videos and the location of the viewpoint video to which attention is currently paid is equal to a descending order of priorities of all of the predictive viewpoint videos, and therefore a bandwidth is preferably allocated to a viewpoint video whose predictive viewpoint video location priority is high.

The delay and quality priority is used to ensure that lowest bit rate versions of the viewpoint video to which attention is currently paid and the predictive viewpoint videos are transmitted because the viewpoint video to which the user currently pays attention and the predictive viewpoint videos are transmitted, a probability that the predictive viewpoint videos is used in future as viewpoint videos to which attention is paid is relatively large, and transmission of the predictive viewpoint videos may reduce a viewpoint switching delay. Therefore, bandwidths are allocated to the viewpoint video to which attention is currently paid and the predictive viewpoint videos, it is preferably ensured that all lowest bit rate versions of the viewpoint video to which attention is currently paid and the predictive viewpoint videos may be transmitted. If the bandwidths are sufficiently large, the bit rate version of the viewpoint video to which attention is currently paid may be improved, thereby improving viewpoint video transmission quality.

The viewpoint type priority is that when bandwidth resource allocation is performed, according to viewpoint types, a bandwidth is preferably allocated to the viewpoint video to which attention is currently paid, and then bandwidths are allocated to the predictive viewpoint videos.

The predictive viewpoint video location priority is for a predictive viewpoint video, and when a bandwidth resource is allocated to the predictive viewpoint video, the bandwidth resource is preferably allocated to a viewpoint video relatively close to the viewpoint video to which attention is currently paid.

(2) The predictive viewpoint videos are downloaded from the server end according to the locations of the predictive viewpoint videos and the bit rate versions of the predictive viewpoint videos, and the viewpoint video to which attention is currently paid is downloaded from the server end according to the location of the viewpoint video to which attention is currently paid, and the bit rate version of the viewpoint video to which attention is currently paid.

Before switching to the viewpoint video to which attention is currently paid is performed, a bandwidth may be already allocated to the viewpoint video to which the user currently pays attention, and the viewpoint video already begins to be transmitted, and may be already transmitted completely.

Therefore, if it is determined that the viewpoint video to which the user currently pays attention is completely transmitted, the bit rate version of the completely transmitted viewpoint video to which attention is currently paid is determined. The determining, according to a total bandwidth value allocated for viewpoint video transmission, and a preset bandwidth allocation policy, a bit rate version of the viewpoint video to which attention is currently paid and bit rate versions of the predictive viewpoint videos is specifically implemented in the following manner:

A bandwidth value is sequentially allocated, based on an ascending order of distances between the predictive viewpoint videos and the viewpoint video to which attention is currently paid, for a lowest bit rate for transmitting each viewpoint video of the predictive viewpoint videos; and the bit rate version of the viewpoint video to which attention is currently paid is raised based on a difference between the total bandwidth value and the bandwidth value that is allocated for the lowest bit rate for transmitting the predictive viewpoint videos, until the bit rate version of the viewpoint video to which attention is currently paid is the highest or the total bandwidth value is exhausted, so as to determine the bit rate version of the viewpoint video to which attention is currently paid and the bit rate versions of the predictive viewpoint videos.

If it is determined that the viewpoint video to which attention is currently paid is already transmitted but is not transmitted completely, a bandwidth is reallocated to the viewpoint video to which attention is currently paid and that is not transmitted completely. A first bandwidth value is allocated, based on the total bandwidth value, for a lowest bit rate version of the incompletely transmitted viewpoint video to which attention is currently paid; a second bandwidth value is sequentially allocated, based on a difference between the total bandwidth value and the first bandwidth value, and distances between the predictive viewpoint videos and the viewpoint video to which attention is currently paid, for a lowest bit rate for transmitting each viewpoint video of the predictive viewpoint videos; and the bit rate version of the viewpoint video to which attention is currently paid is raised based on the difference between the total bandwidth value and the first bandwidth value and a difference between the total bandwidth value and the second bandwidth value, until the bit rate version of the viewpoint video to which attention is currently paid is the highest or the total bandwidth value is exhausted, so as to determine the bit rate version of the viewpoint video to which attention is currently paid and the bit rate versions of the predictive viewpoint videos.

When the bit rate version of the viewpoint video to which attention is currently paid is the highest and the total bandwidth value is not exhausted, a bit rate version of each viewpoint video of the predictive viewpoint videos is sequentially raised based on the ascending order of the distances between the predictive viewpoint videos and the viewpoint video to which attention is currently paid, until the bit rate version of each viewpoint video of the predictive viewpoint videos is the highest or the total bandwidth value is exhausted.

In this embodiment of the present invention, a bit rate version of each viewpoint video of the predictive viewpoint videos is sequentially raised based on the ascending order of the distances between the predictive viewpoint videos and the viewpoint video to which attention is currently paid, and a bit rate version may be preferably raised for a predictive viewpoint video closest to the viewpoint video to which attention is currently paid, until the bit rate version is the highest or the bandwidth is exhausted. If the bit rate version is the highest and the bandwidth is not exhausted, a bandwidth is allocated to a viewpoint video neighboring to the predictive viewpoint video closest to the viewpoint video to which attention is currently paid, and the rest can be deduced by analogy. Alternatively, bit rate versions may be separately and sequentially raised by one level based on the ascending order of the distances between the predictive viewpoint videos and the viewpoint video to which attention is currently paid. If the bandwidth is not exhausted, the bit rate versions are sequentially raised again by one level based on the ascending order of the distances between the predictive viewpoint videos and the viewpoint video to which attention is currently paid.

Specifically, during bandwidth allocation, grouping processing may be further performed on viewpoint videos.

a) Divide all viewpoint videos into three groups, that is, an H (High Priority) group, an M (Medium Priority) group, and an L (Low Priority) group.

For a case in which viewpoint video fusion may be performed:

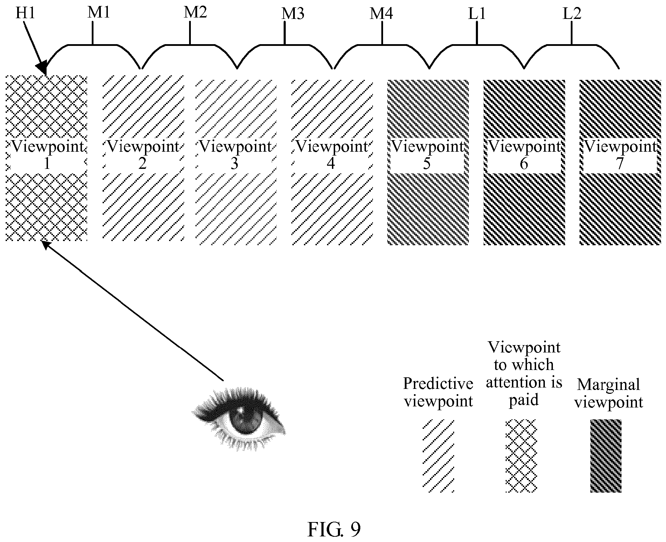

The H group represents a set of viewpoint videos to which attention is currently paid, and the set may include one viewpoint video, or may include two viewpoint videos. The M group includes one or more subgroups $\{M_1, M_2, L\}$, and each subgroup includes two viewpoint videos. It is considered that when a viewpoint video attention is currently paid switches to the middle between two viewpoints, viewpoint fusion needs to be performed on two neighboring viewpoint videos, to generate a new viewpoint video. Therefore, the M group starts from a border between the viewpoint video to which attention is currently paid and a neighboring viewpoint video, and ends at a boundary between a predictive viewpoint video and a marginal viewpoint video or an available viewpoint boundary (reaches an available viewpoint margin), and subgroups overlap with each other. The L group includes one or more subgroups $\{L_1, L_2, L\}$, and each subgroup includes two viewpoint videos. It is considered that when a viewpoint video attention is currently paid switches to the middle between two viewpoints, viewpoint fusion needs to be performed on two neighboring viewpoint videos, to generate a new viewpoint video. Therefore, the L group starts from a border between a predictive viewpoint video and a marginal viewpoint video, and ends at an available viewpoint boundary (reaches an available viewpoint margin), as shown in FIG. 9.

For a case in which no viewpoint video fusion needs to be performed:

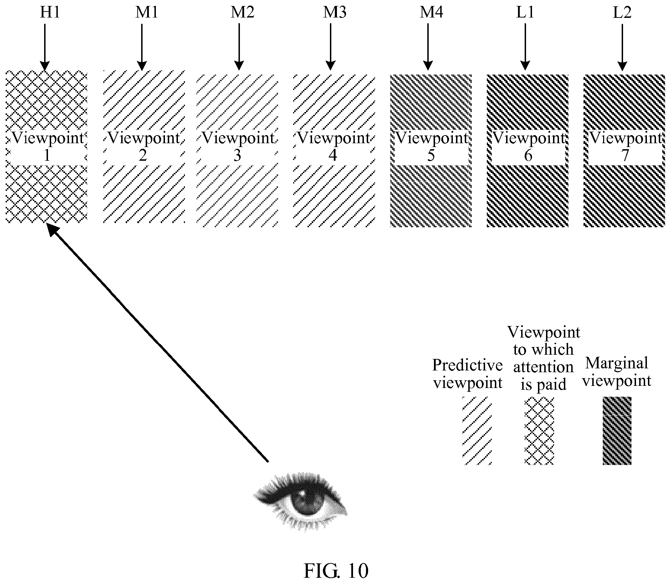

The H group represents a set of viewpoint videos to which attention is currently paid, and the set includes one viewpoint video. The M group includes one or more subgroups $\{M_1, M_2, L\}$, and each subgroup includes one viewpoint video. The M group starts from a border between the viewpoint video to which attention is currently paid and a neighboring viewpoint video, and ends at a boundary between a predictive viewpoint video and a marginal viewpoint video or an available viewpoint boundary, that is, reaches an available viewpoint margin. The L group includes one or more subgroups $\{L_1, L_2, L\}$, and each subgroup includes one viewpoint video. The L group starts from a border between a predictive viewpoint video and a marginal viewpoint video, and ends at an available viewpoint boundary, that is, reaches an available viewpoint margin, as shown in FIG. 10.

b) Determine whether each viewpoint video in the H group is already transmitted, and determine whether each viewpoint video is transmitted completely. If each viewpoint video is transmitted completely, perform step c); if it is determined that each viewpoint video is not transmitted completely, perform step d); or if each viewpoint video in the H group is not transmitted, perform step e).

c) Allocate bandwidth resources needed by lowest bit rates to subgroups in the M group based on an ascending order of distances to the H group. If the bandwidth is insufficient or the bandwidth is exhausted, perform the step g). Otherwise, perform step f).

One or more subgroups in the M group may be already transmitted in advance, or transmitted completely, and no bandwidth needs to be reallocated in this step.

d) Allocate a bandwidth resource needed by a lowest bit rate version to a viewpoint video in the H group that is not transmitted completely. If the bandwidth is insufficient or the bandwidth is exhausted, perform step g); otherwise, perform step c).

e) Allocate a bandwidth resource needed by a lowest bit rate version to a viewpoint video in the H group that is not transmitted. If the bandwidth is insufficient or the bandwidth is exhausted, perform step g); otherwise, perform step c).

f) Raise a bit rate version of a viewpoint video in the H group level by level, and allocate a bandwidth resource needed by the raised bit rate version, until a maximum bit rate version is reached. If the bandwidth is insufficient or the bandwidth is exhausted, perform step h); otherwise, perform step g).

g) For subgroups in the M group, sequentially and separately raise bit rate versions of viewpoint videos in the subgroups by one level according to the ascending order of the distances to the H group, and allocate bandwidth resources needed by the bit rate versions that are raised by one level. If the bandwidth is insufficient or the bandwidth is exhausted, perform step h); otherwise, perform step g) repetitively.

h) Allocation ends.

After the foregoing bandwidth allocation is performed, bit rate versions of viewpoint videos in the H group and the M group can be determined.

It should be noted that when bandwidth resource allocation is performed, only intra-group update can be performed. For example, when a viewpoint belongs to two groups at the same time, if bit rates of the viewpoint video in the two groups are different, versions of two bit rates need to be reserved at the same time.

Assuming that groups are shown in FIG. 10, a total bandwidth is 11 Mbps, and each viewpoint video have three available bit rates that respectively need bandwidth values 1 Mbps, 2 Mbps, and 3 Mbps, an allocation process is as follows:

If a bandwidth (1 Mbps) needed by a bit rate of 1 Mbps is allocated to the H group, a remaining bandwidth is 10 Mbps; if a bandwidth needed by a bit rate of 1 Mbps is allocated sequentially to an M2 group, an M3 group, an M4 group, and an M5 group (bit rates of viewpoints 1, 2, 3, 4, and 5 are the same, and therefore only a version of 1 Mbps needs to be reserved), a remaining bandwidth is 6 Mbps; if a bit rate of the H group is raised level by level, until the bit rate reaches 3 Mbps (the viewpoint 1 belongs to both the H group and an M1 group, and therefore two bit rate versions of 1 Mbps and 3 Mbps of the viewpoint 1 need to be reserved), a remaining bandwidth is 3 Mbps; and if a bit rate of the M1 group is raised by one level, that is, raised from 1 Mbps to 2 Mbps (the bit rate of 1 Mbps of the viewpoint 1 is updated to 2 Mbps, a bandwidth of 1 Mbps is additionally consumed, and the viewpoint 2 belongs to both M1 and M2; therefore, two bit rate versions of 1 Mbps and 2 Mbps of the viewpoint 1 need to be reserved, and a bandwidth of 2 Mbps is additionally consumed), a remaining bandwidth is 0 Mbps, and the process quits.

A final bandwidth resource and quality result is: a bandwidth of 5 Mbps is allocated to the viewpoint 1, and two quality versions of 2 Mbps and 3 Mbps are transmitted; a bandwidth of 3 Mbps is allocated to the viewpoint 2, and two quality versions of 1 Mbps and 2 Mbps are transmitted; a bandwidth of 1 Mbps is allocated to each of the viewpoint 3 to the viewpoint 5, and one quality version of 1 Mbps is transmitted; and no bandwidth resource is allocated to either a viewpoint 6 or a viewpoint 7, and no quality version is transmitted.

Each viewpoint video at the server end has multiple different bit rate versions, and all viewpoint videos need to be transmitted in the prior art. Therefore, a bandwidth needs to be allocated to all the viewpoint videos, and an average allocation solution is usually used. By using the solution provided in this embodiment of the present invention, not all the viewpoint videos need to be transmitted, and therefore a bandwidth does not need to be allocated to all the viewpoint videos. Moreover, in this solution, a bandwidth is preferably allocated to a viewpoint video to which attention is currently paid, and transmission quality of the viewpoint video to which attention is currently paid is preferably considered based on a total bandwidth value. Therefore, a waste of bandwidths is reduced, and an instant experience of the user is improved.

A two-dimensional multi-view video is used as an example below to perform description.

In a multi-view video service, a type of common application is large-screen display. In an aspect, a series of video sequences having different angles of view may be obtained separately in horizontal and vertical dimensions by using a two-dimensional video camera array; or a video having an extra-large resolution may be shot by using a wide-angle camera, and then block partitioning processing is performed in horizontal and vertical dimensions, where each sub-block may also be used as an independent viewpoint, as shown in FIG. 1b. When presentation is performed at a client, an appropriate viewpoint video is selected according to an angle of view to which a user currently pays attention, and is partitioned and displayed, or fused and displayed.

B1: Quantity of viewpoint videos

The quantity of viewpoint videos includes three parts: a quantity of viewpoint videos to which attention is currently paid, a quantity of predictive viewpoint videos, and a quantity of marginal viewpoint videos.

(1) Viewpoint video quantity $NCV$ of viewpoint videos to which attention is currently paid and that are fused:

A viewpoint video to which attention is currently paid is video content that needs to be currently presented to the user. A location of an angle of view to which the user currently pays attention is determined according to a location of an eye ball of the user, a user gesture, and the like.

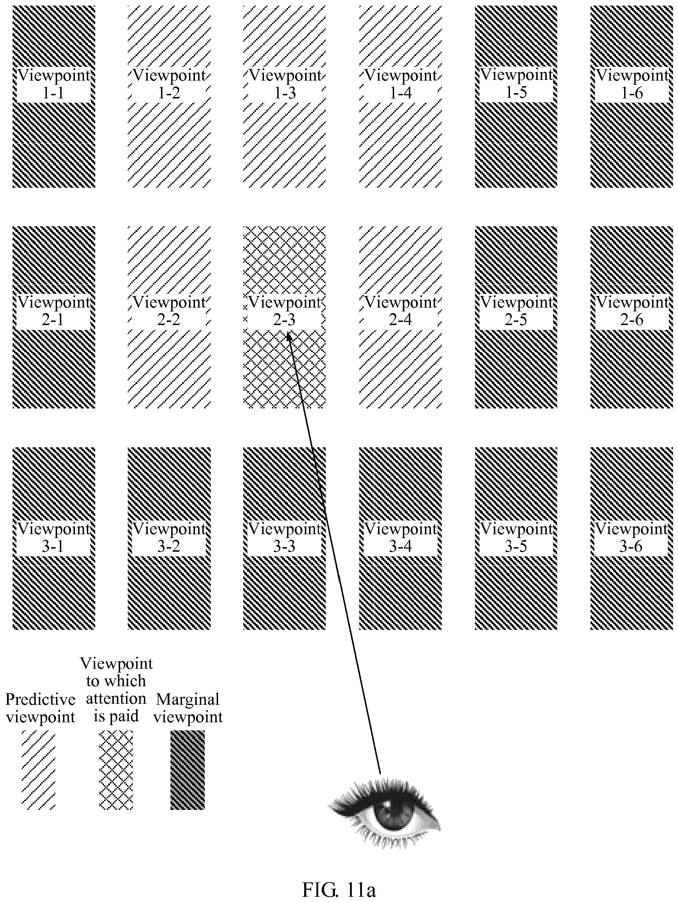

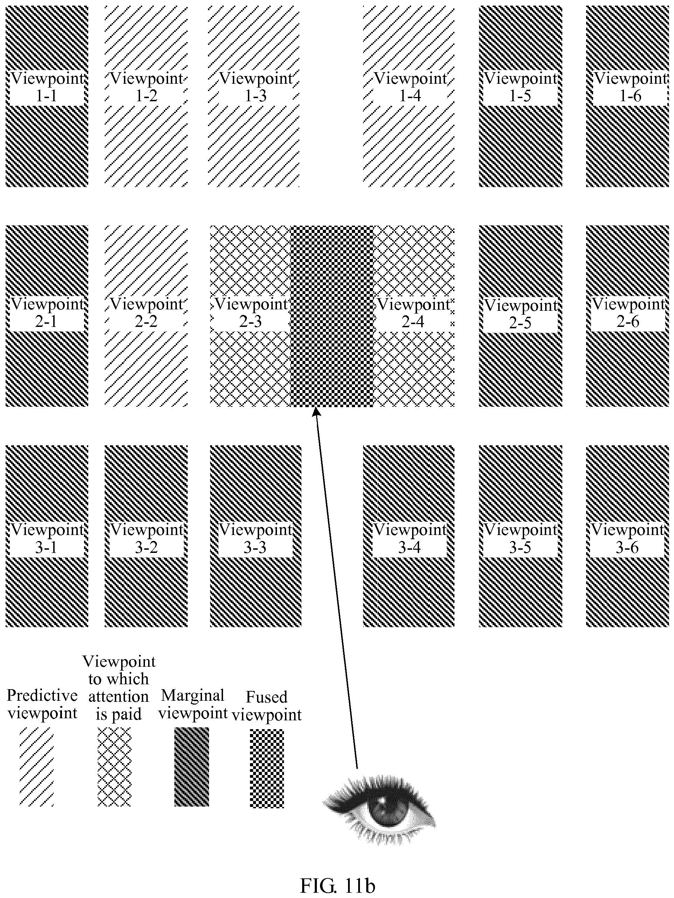

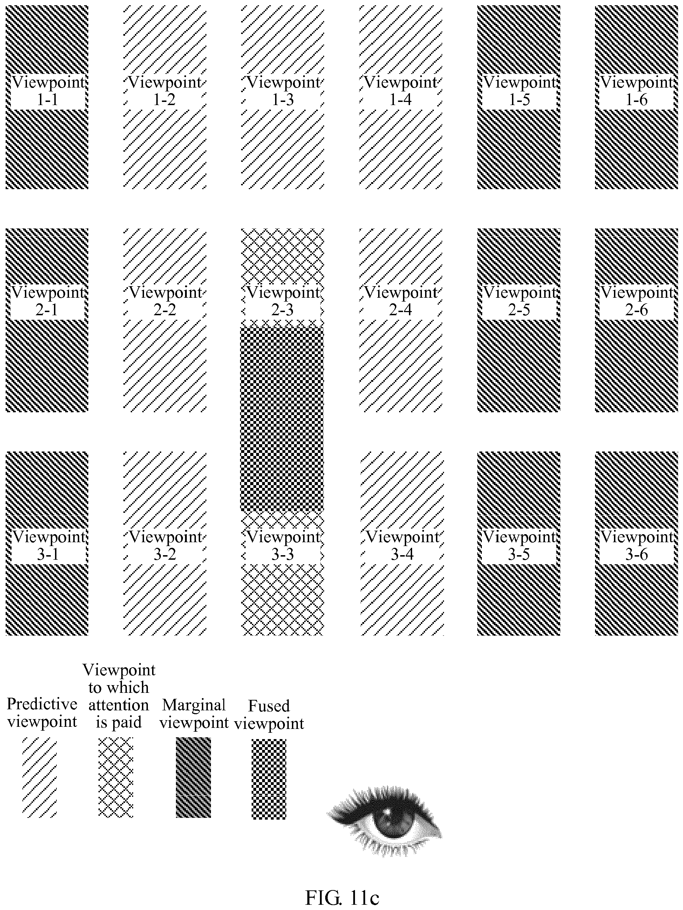

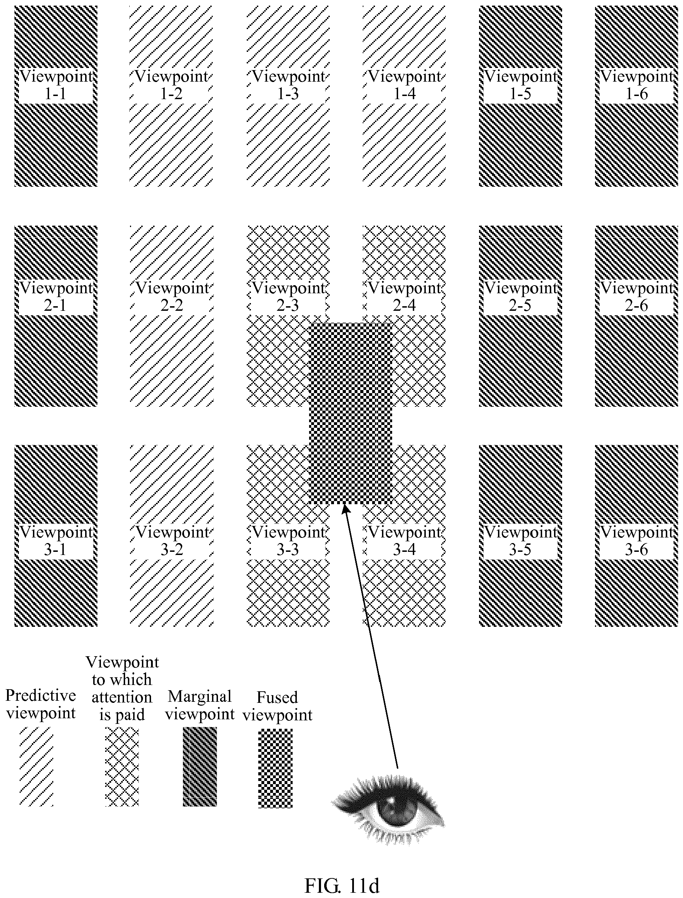

i) If a location of an angle of view to which the user currently pays attention is in the middle of a viewpoint video, as shown in FIG. 11a, the viewpoint video is a viewpoint video attention is uniquely paid, and a quantity of viewpoint videos that are fused to obtain a viewpoint video to which attention is currently paid is one, that is,

$$NCV = 1.$$

ii) If a location of an angle of view to which the user currently pays attention is in the middle of a vertical location of a viewpoint video, but is not in the middle of a horizontal location, as shown in FIG. 11b; or if a location of an angle of view to which the user currently pays attention is in the middle of a horizontal location of a viewpoint video, but is not in the middle of a vertical location, as shown in FIG. 11c, and two neighboring viewpoint videos are fused to obtain a viewpoint video to which attention is currently paid, a quantity of viewpoint videos that are fused to obtain the viewpoint video to which attention is currently paid is two, that is,

$$NCV = 2.$$

iii) If a location of an angle of view to which the user currently pays attention is neither in the middle of a horizontal location of a viewpoint video nor in the middle of a vertical location, as shown in FIG. 11d, and four neighboring viewpoint videos are fused to obtain a viewpoint video to which attention is currently paid, a quantity of viewpoint videos that are fused to obtain the viewpoint video to which attention is currently paid is four, that is,

$$NCV = 4.$$

In a two-dimensional multi-view video service, viewpoints are independent of each other sometimes. When presentation is performed at a client, even if an angle of view to which the user pays attention is not in the middle of a viewpoint video, fusion processing is not required. Therefore, a quantity of viewpoint videos that are fused to obtain a viewpoint video to which attention is currently paid is one.

(2) A quantity of predictive viewpoint videos is represented by using NNV. The predictive viewpoint videos are NNV viewpoint videos neighboring to a viewpoint video the user currently pays attention. The predictive viewpoint videos may be used in future as viewpoint videos to which attention is paid and presented to the user. The predictive viewpoint videos need to be transmitted. Therefore, during next user switching, attention may be paid to one or two viewpoint videos of the predictive viewpoint videos, so as to reduce a viewpoint switching delay.

Specifically, a first speed at which a user viewpoint switches is first obtained, and then the quantity *NNV* of the predictive viewpoint videos that need to be downloaded before the user switches to another viewpoint may be determined based on the first speed according to the first speed and according to a preset algorithm. For a method for obtaining the first speed, refer to any one of the first to the sixth implementations described above.

This embodiment is specific to a one-dimensional scenario, and a direction of the first speed *V* is either horizontal or vertical. However, in a two-dimensional scenario, the direction of the first speed is random. If an angle between the direction of the first speed *V* and the horizontal direction and an angle between the direction of the first speed *V* and the vertical direction are respectively $\alpha$ and $\theta$, a second speed in the horizontal direction and a third speed in the vertical direction that are obtained after the first speed is decomposed are respectively:

$$V_x = V\cos\alpha;\ \text{and}\ \ V_y(t) = V\sin\alpha,$$

where $V_x$ represents the second speed in the horizontal direction; and $V_y$ represents the third speed in the vertical direction.

The second speed $V_x$ and the third speed $V_y$ may be further determined in the following manner:

This embodiment is specific to a one-dimensional scenario, an instantaneous speed at a moment *t* is *v(t)*, and a direction of the instantaneous speed is either horizontal or vertical. However, in a two-dimensional scenario, the direction of the first speed is random. If an angle between the direction of the instantaneous speed *v(t)* and the horizontal direction and an angle between the direction of the instantaneous speed *v(t)* and the vertical direction are respectively $\alpha$ and $\theta$, each instantaneous speed may be decomposed into a speed in the horizontal direction and a speed in the vertical direction that are respectively:

$$v_x(t) = v(t)\cos\alpha;\ \text{and}\ \ v_y(t) = v(t)\sin\alpha,$$

where $v_x(t)$ represents the speed in the horizontal direction; and $v_y(t)$ represents the speed in the vertical direction.

Next, the second speed and the third speed are separately calculated in each of horizontal and vertical dimensions, and specifically:

an average value of speeds in the horizontal direction based on a time sliding window is used as the second speed $V_x$, and an average value of speeds in the vertical direction based on a time sliding window is used as the third speed $V_y$:

$$V_x = \frac{1}{T}\int_{t-T}^{t} v_x(\tau)d\tau;$$

and

$$V_y = \frac{1}{T} \int\limits_{t-T}^{t} v_y(\tau) d\tau \, ,$$

where $T$ is duration of each video segment obtained by performing video slicing at the server end.

Specifically, accelerations at multiple moments may be further collected, by using an acceleration sensor of a head-mounted device of the user, in a predetermined period of time before the user switches a viewpoint to the location of the viewpoint video to which attention is currently paid, and then the second speed $V_x$ and the third speed $V_y$ are determined by using instantaneous speeds at the multiple moments and the accelerations.

In a two-dimensional scenario, a direction of a viewpoint switching acceleration is random. If an angle between a direction of an acceleration $\alpha(t)$ at the moment $t$ and the horizontal direction and an angle between the direction of the acceleration $\alpha(t)$ at the moment $t$ and the vertical direction are respectively $\alpha$ and $\theta$, an acceleration $\alpha_x(t)$ in the horizontal direction and an acceleration $\alpha_y(t)$ in the vertical direction are respectively:

$$\alpha_x(t) = \alpha(t)\cos\alpha \, ; \text{ and } \alpha_y(t) = \alpha(t)\sin\alpha \, ,$$

therefore, when the user viewpoint switches to the location of the viewpoint video to which attention is currently paid, and an instantaneous speed of the user at a moment and an acceleration corresponding to the instantaneous speed at the moment are collected, the second speed $V_x$ and the third speed $V_y$ may be respectively represented by using the following formulas:

$$V_x = v_x(t) + \frac{1}{2}T\alpha_x(t) \, ; \text{ and } V_y = v_y(t) + \frac{1}{2}T\alpha_y(t) \, .$$

When the user viewpoint switches to the location of the viewpoint video to which attention is currently paid, and instantaneous speeds of the user at multiple moments and an acceleration corresponding to an instantaneous speed at each moment are collected, the second speed $V_x$ and the third speed $V_y$ may be respectively represented by using the following formulas:

$$V_x = \frac{1}{n}\sum v_x(t) + \frac{1}{2n}T\sum a_x(t) \, ; \text{ and } V_y = \frac{1}{n}\sum v_y(t) + \frac{1}{2n}T\sum a_y(t) \, ,$$

where n represents a quantity of instantaneous speeds at the multiple moments.

When the user viewpoint switches to the location of the viewpoint video to which attention is currently paid, and instantaneous speeds of the user at multiple moments and an acceleration corresponding to an instantaneous speed at each moment are collected, the second speed $V_x$ and the third speed $V_y$ may be further respectively represented by using the following formulas:

$$V_x = \frac{1}{n}\sum v_x(t) + \frac{1}{2}Ta_x(t) \, ; \text{ and } V_y = \frac{1}{n}\sum v_y(t) + \frac{1}{2}Ta_y(t) \, .$$

After the second speed $V_x$ and the third speed $V_y$ are obtained, a horizontal quantity $NNV_x$ of predictive viewpoint videos in the horizontal direction is predicted based on the second speed $V_x$ and according to a first algorithm included in the preset algorithm, and a vertical quantity $NNV_y$ of predictive viewpoint videos in the vertical direction is predicted based on the third speed $V_y$ and according to the first algorithm; and

$$NNV_x = N_x \frac{V_x T}{D_x} \, ;$$

and

$$NNV_y = N_y \frac{V_y T}{D_y},$$

where $N_x$ represents a total quantity of viewpoint videos in the horizontal direction at the server end; $N_y$ represents a total quantity of viewpoint videos in the vertical direction at the server end; $D_x$ represents a range covered by the $N_x$ viewpoint videos in the horizontal direction; $D_y$ represents an angle covered by the $N_y$ viewpoint videos in the vertical direction; and $T$ is the duration of each video segment obtained by performing video slicing at the server end.

After $NNV_x$ and $NNV_y$ are obtained, with reference to a quantity of and distribution of viewpoint videos to which attention is currently paid, a quantity of predictive viewpoint videos is divided into the following three cases:

i) $NCV = 1$, that is, there is a unique viewpoint video to which attention is currently paid, as shown in FIG. 11a, and all viewpoint videos included in a rectangle formed by using $NNV_x$ +1 and $NNV_y$ +1 as side lengths are a set of predictive viewpoint videos and the viewpoint video to which attention is currently paid, and therefore a quantity of the predictive viewpoint videos is:

$$NNV = (NNV_x + 1) * (NNV_y + 1) - 1.$$

ii) $NCV = 2$, that is, there are two fused viewpoint videos, as shown in FIG. 11b and FIG. 11c.

If horizontal fusion is performed on viewpoints, as shown in FIG. 11b, all viewpoint videos included in a rectangle formed by using $NNV_x$ + 2 and $NNV_y$ +1 as side lengths are a set of predictive viewpoint videos and the viewpoint videos to which attention is currently paid, and in this case, a quantity of the predictive viewpoint videos is:

$$NNV = (NNV_x + 2) * (NNV_y + 1) - 2.$$

If vertical fusion is performed on viewpoints, as shown in FIG. 11c, all viewpoint videos included in a rectangle formed by using $NNV_x$ +1 and $NNV_y$ + 2 as side lengths are a set of predictive viewpoint videos and the viewpoint videos to which attention is currently paid, and in this case, a quantity of the predictive viewpoint videos is:

$$NNV = (NNV_x + 1) * (NNV_y + 2) - 2.$$

iii) $NCV = 4$, that is, there are four fused viewpoint videos and two viewpoint videos are distributed in each of the horizontal direction and the vertical direction in the multi-view video, as shown in FIG. 11d.

Viewpoint videos need to be fused in both the horizontal direction and the vertical direction, and all viewpoint videos included in a rectangle formed by using $NNV_x$ + 2 and $NNV_y$ + 2 as side lengths are a set of predictive viewpoint videos and the viewpoint videos to which attention is currently paid, and in this case, a quantity of the predictive viewpoint videos is:

$$NNV = (NNV_x + 2) * (NNV_y + 2) - 4.$$

Additionally, in a two-dimensional multi-view video service, viewpoints are independent of each other sometimes. When presentation is performed at a client, even if an angle of view to which the user pays attention is not in the middle of a viewpoint video, fusion processing is not required. A quantity of fused viewpoint videos is one. Therefore, a quantity of predictive viewpoint videos is $NNV = (NNV_x + 1) * (NNV_y + 1) - 1$.

(3) Quantity $NMV$ of marginal viewpoints.

All viewpoint videos other than the viewpoint video to which attention is currently paid and the predictive viewpoint videos are marginal viewpoint videos. Therefore, the quantity of the marginal viewpoint videos is:

$$NMV = N - NCV - NNV$$

where $N$ represents a total quantity of all viewpoints, that is, $N = N_x * N_y$.

B2: Locations of viewpoint videos

After respective quantities of three types of viewpoint videos are determined, locations of these viewpoint videos need to be determined next. Likewise, the three types of viewpoint videos are separately described herein:

(1) Location of a viewpoint video to which attention is currently paid:

A location of an angle of view to which the user currently pays attention is determined according to a location of an eye ball of the user, a user gesture, and the like.

If the location of the angle of view to which the user currently pays attention is in the middle of a viewpoint video, as shown in FIG. 11a, the viewpoint video is a viewpoint video attention is uniquely paid, a quantity of viewpoints to which attention is paid is one, and a location of the viewpoint is also uniquely determined.

If the location of the angle of view to which the user currently pays attention is in the middle of a vertical location of a viewpoint video, but is not in the middle of a horizontal location, as shown in FIG. 11b, a viewpoint video to which attention is paid is a viewpoint video obtained by fusing two viewpoint videos in a horizontal direction that are closest to the current angle of view. Alternatively, if a location of an angle of view to which the user currently pays attention is in the middle of a horizontal location of a viewpoint video, but is not in the middle of a vertical location, as shown in FIG. 11c, a viewpoint video to which attention is currently paid is a viewpoint video obtained by fusing two viewpoint videos in a vertical direction that are closest to the current angle of view.

If the location of the angle of view to which the user currently pays attention is neither in the middle of a horizontal location of a viewpoint video nor in the middle of a vertical location, as shown in FIG. 11d, a viewpoint video to which attention is currently paid is a viewpoint video obtained by fusing four viewpoint videos that are closest to the current angle of view.

In a two-dimensional multi-view video service, viewpoints are independent of each other sometimes. When presentation is performed at a client, even if an angle of view to which the user pays attention is not in the middle of a viewpoint video, fusion processing is not required. A location of the viewpoint video is determined in the following manner: selecting a viewpoint video closest to a current angle of view of the user as a viewpoint video attention is uniquely paid; and if distances between multiple viewpoint videos and the current angle of view of the user are equal and minimum, selecting any one of the multiple viewpoint videos at minimum distances to the current angle of view of the user as a viewpoint video to which attention is currently paid.

(2) Locations of predictive viewpoint videos

To determine locations of predictive viewpoint videos, a magnitude and a direction of the second speed, and a magnitude and a direction of the third speed are all considered in the present invention.

When the second speed obtained by decomposing the first speed is less than a speed threshold in the horizontal direction, and the third speed obtained by decomposing the first speed is less than a speed threshold in the vertical direction, $NNV$ viewpoint videos in a first rectangular area other than the fused viewpoint videos are used as predictive viewpoint videos, where the first rectangular area is a rectangular area formed by a first side length that is the horizontal quantity of the predictive viewpoint videos plus a quantity of fused viewpoint videos in the horizontal direction, and a second side length that is the vertical quantity of the predictive viewpoint videos plus a quantity of fused viewpoint videos in the vertical direction; and a geometrical center of the first rectangular area is the viewpoint video to which attention is currently paid.

When the second speed $V_x$ is less than a speed threshold $V_{x0}$ in the horizontal direction, that is, when $V_x < V_{x0}$, it is considered that a future switching direction of a viewpoint has a relatively large uncertainty in the horizontal direction. Therefore, $NNV_x$ predictive viewpoint videos in the horizontal direction are averagely allocated at two sides of a horizontal location of the viewpoint video to which attention is currently paid.

Specifically, when $NNV_x$ is an even number, $\dfrac{NNV_x}{2}$ viewpoint videos are allocated at each of two sides closely neighboring to the horizontal location of the viewpoint video to which attention is currently paid; or when $NNV_x$ is an odd number, $\dfrac{NNV_x \pm 1}{2}$ viewpoint videos are allocated at each of two sides closely neighboring to the horizontal location of the viewpoint video attention is currently paid, or $\dfrac{NNV_x + 1}{2}$ viewpoint videos are allocated at a side closely neighboring to the horizontal location of the viewpoint video to which attention is currently paid, and $\dfrac{NNV_x - 1}{2}$ viewpoint videos are allocated at another side closely neighboring to the horizontal location of the viewpoint video to which attention is currently paid.

When the third speed $V_y$ is less than a speed threshold $V_{y0}$ in the vertical direction, that is, when $V_y < V_{y0}$, it is considered that a future switching direction of a viewpoint has a relatively large uncertainty in the vertical direction. Therefore, $NNV_y$ viewpoint videos are averagely allocated at two sides closely neighboring to a vertical location of the viewpoint video to which attention is currently paid.

Specifically, when $NNV_y$ is an even number, $\dfrac{NNV_y}{2}$ viewpoint videos are allocated at each of two sides closely neighboring to the vertical location of the viewpoint video attention is currently paid; or when $NNV_y$ is an odd number, $\dfrac{NNV_y \pm 1}{2}$ viewpoint videos are allocated at each of two sides closely neighboring to the vertical location of the viewpoint video attention is currently paid, or $\dfrac{NNV_y + 1}{2}$ viewpoint videos are allocated at a side closely neighboring to the vertical location of the viewpoint video to which attention is currently paid, and $\dfrac{NNV_y - 1}{2}$ viewpoint videos are allocated at another side closely neighboring to the vertical location of the viewpoint video to which attention is currently paid.

By means of the foregoing allocation, the first side length of the first rectangular area in the horizontal direction is the horizontal quantity $NNV_x$ of the predictive viewpoint videos plus the quantity of the fused viewpoint videos in the horizontal direction, and the second side length of the first rectangular area in the vertical direction is the vertical quantity $NNV_y$ of the predictive viewpoint videos plus the quantity of the fused viewpoint videos in the vertical direction.

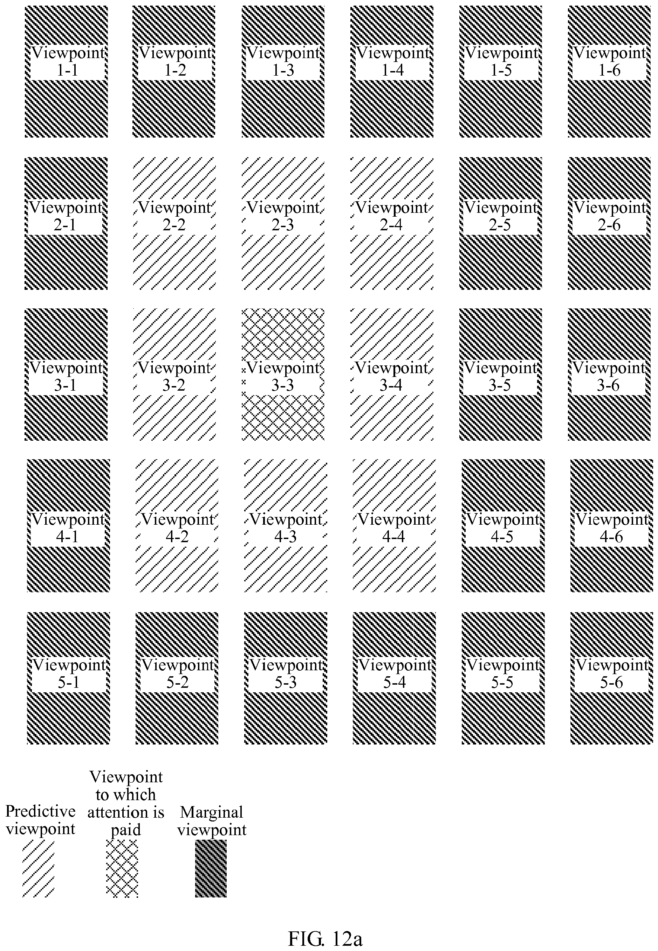

For example, a quantity of fused viewpoint videos is one, $NNV_x$ is 2, and $NNV_y$ is 2. The predictive viewpoint videos in the first rectangular area are shown in FIG. 12a.

When the second speed is less than a speed threshold in the horizontal direction, and the third speed is not less than a speed threshold in the vertical direction, $NNV$ viewpoint videos in a second rectangular area other than the fused viewpoint videos are used as predictive viewpoint videos, where the second rectangular area is a rectangular area formed by a first side length that is the horizontal quantity of the predictive viewpoint videos plus a quantity of fused viewpoint videos in the horizontal direction, and a second side length that is the vertical quantity of the predictive viewpoint videos plus a quantity of fused viewpoint videos in the vertical direction; and the predictive viewpoint videos are uniformly distributed, in the horizontal direction, at the two sides neighboring to the location of the viewpoint video to which attention is currently paid, and distributed, in the vertical direction, at a location of a side that is neighboring to the viewpoint video to which attention is currently paid and that is the same as a vector direction of the third speed.

When the third speed $V_y$ in the vertical direction is not less than the speed threshold $V_{y0}$ in the vertical direction, that is, when $V_y \geq V_{y0}$, it is considered that a future switching direction of a viewpoint has a relatively large certainty in the vertical direction. Therefore, for allocation of predictive viewpoint videos, the direction of the third speed $V_y$ needs to be considered, and the predictive viewpoint videos are distributed at a side the same as the vector direction of the third speed of the viewpoint video to which attention is currently paid.

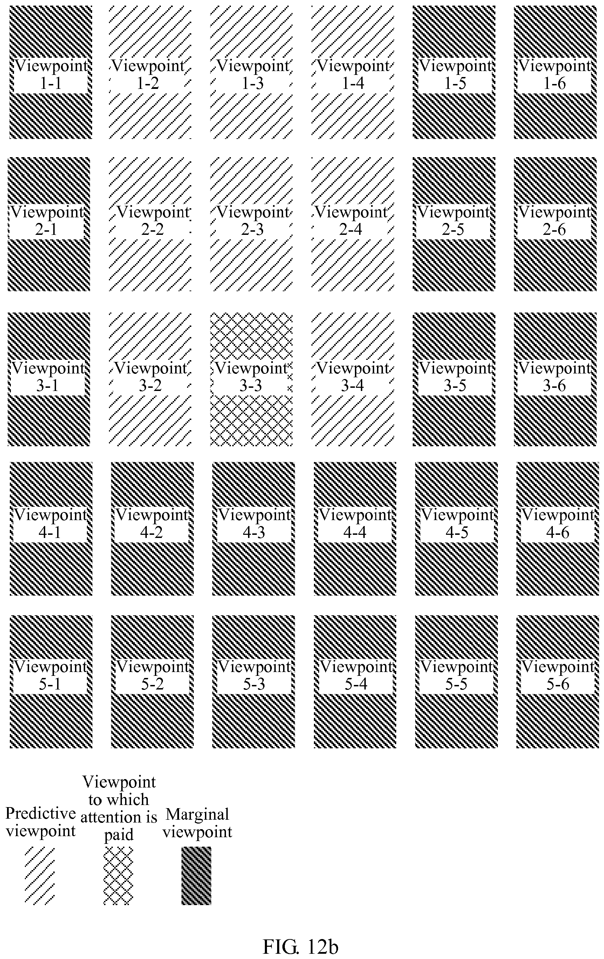

For example, a quantity of fused viewpoint videos is one, $NNV_x$ is 2, and $NNV_y$ is 2. The predictive viewpoint videos in the second rectangular area are shown in FIG. 12b.

When the second speed is not less than a speed threshold in the horizontal direction, and the third speed is less than a speed threshold in the vertical direction, $NNV$ viewpoint videos in a third rectangular area other than the fused viewpoint videos are used as predictive viewpoint videos, where the third rectangular area is a rectangular area formed by a first side length that is the horizontal quantity of the predictive viewpoint videos plus a quantity of fused viewpoint videos in the horizontal direction, and a second side length that is the vertical quantity of the predictive viewpoint videos plus a quantity of fused viewpoint videos in the vertical direction; and the predictive viewpoint videos are uniformly distributed, in the vertical direction, at the two sides neighboring to the location of the viewpoint video to which attention is currently paid, and distributed, in the horizontal direction, at a location of a side that is neighboring to the viewpoint video to which attention is currently paid and that is the same as a vector direction of the second speed.

When the second speed $V_x$ in the horizontal direction is not less than the speed threshold $V_{x0}$ in the horizontal direction, that is, when $V_x \geq V_{x0}$, it is considered that a future switching direction of a viewpoint has a relatively large certainty in the horizontal direction. Therefore, for allocation of predictive viewpoint videos, the direction of the second speed $V_x$ needs to be considered, and the predictive viewpoint videos are distributed at a side that is closely neighboring to the viewpoint video to which attention is currently paid and that is the same as the vector direction of the second speed.

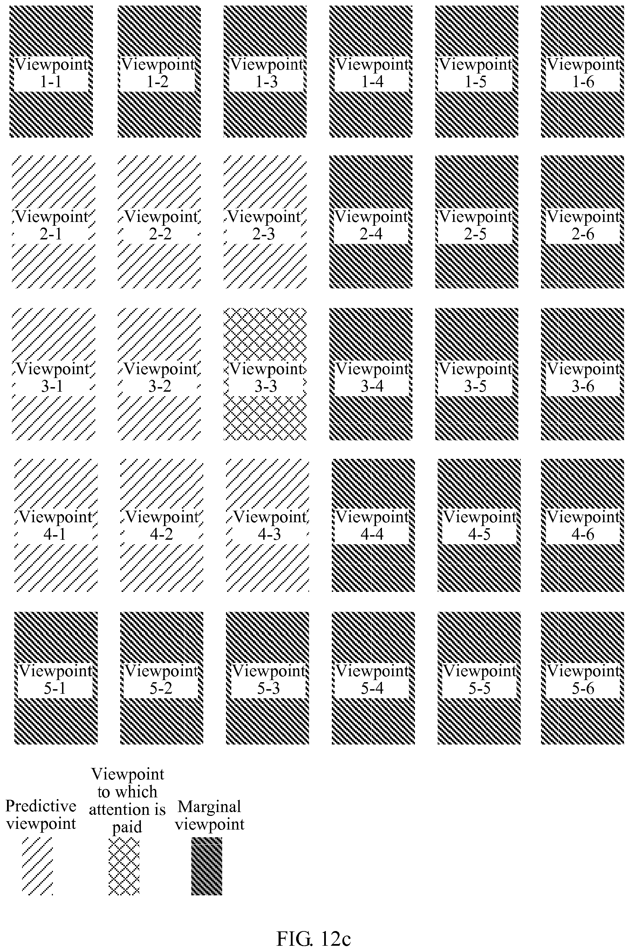

For example, a quantity of fused viewpoint videos is one, $NNV_x$ is 2, and $NNV_y$ is 2. The predictive viewpoint videos in the third rectangular area are shown in FIG. 12c.

When the second speed is not less than a speed threshold in the horizontal direction, and the third speed is not less than a speed threshold in the vertical direction, $NNV$ viewpoint videos in a fourth rectangular area other than the fused viewpoint videos are used as predictive viewpoint videos, where the fourth rectangular area is a rectangular area formed by a first side length that is the horizontal quantity of the predictive viewpoint videos plus a quantity of fused viewpoint videos in the horizontal direction, and a second side length that is the vertical quantity of the predictive viewpoint videos plus a quantity of fused viewpoint videos in the vertical direction; and the predictive viewpoint videos are distributed, in the vertical direction, at a location of a side that is neighboring to the viewpoint video to which attention is currently paid and that is the same as the vector direction of the third speed, and distributed, in the horizontal direction, at a location of a side that is neighboring to the viewpoint video to which attention is currently paid and that is the same as the vector direction of the second speed.

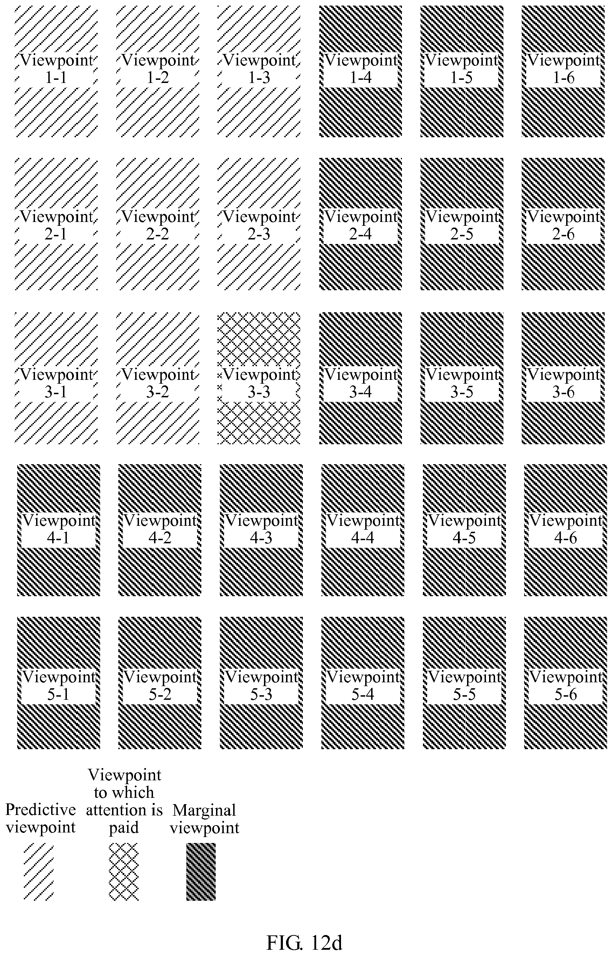

For example, a quantity of fused viewpoint videos is one, $NNV_x$ is 2, and $NNV_y$ is 2. The predictive viewpoint videos in the fourth rectangular area are shown in FIG. 12d.

In this embodiment, two-dimension is decomposed into horizontal and vertical dimensions, a location of a predictive viewpoint video is independently determined in each dimension, and a practice of the determining is the same as a practice in the embodiment corresponding to one-dimension.

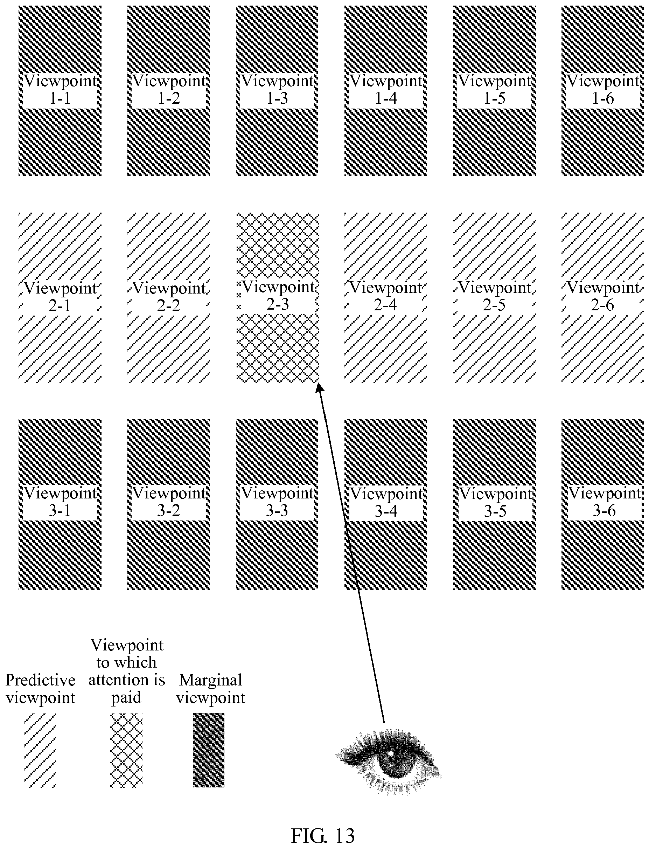

It should be noted that, during the foregoing location allocation of predictive viewpoint videos, when any side reaches a viewpoint boundary, allocation is stopped. For example, for a case in which $V_x < V_{x0}$, when $NNV_x = 6$, three viewpoints are theoretically allocated at each of two sides of the horizontal location of the viewpoint video to which attention is currently paid. If there are only two viewpoints at a left side of the viewpoint video to which attention is currently paid, and there are three viewpoints at a right side, two viewpoint videos (reaching a viewpoint boundary) at the left side of the viewpoint video to which attention is currently paid, and three viewpoint videos at the right side are finally selected, as shown in FIG. 13. Specifically, when a quantity of viewpoint videos included in any one of the first rectangular area, the second rectangular area, the third rectangular area, or the fourth rectangular area is less than a quantity of predictive viewpoint videos, all viewpoint videos included in the any one rectangular area are used as predictive viewpoint videos.

(3) Locations of marginal viewpoint videos

All viewpoint videos other than the viewpoint video to which attention is currently paid and the predictive viewpoint videos are marginal viewpoint videos. After quantities and locations of the viewpoint videos to which attention is currently paid and the predictive viewpoint videos are determined, the locations of the marginal viewpoint videos are also uniquely determined.

B3: Determine quality of a viewpoint video.

Each viewpoint video includes multiple bit rate versions, and each bit rate version requires a different bandwidth.

Each viewpoint video corresponding to the obtained location of each predictive viewpoint video may be downloaded from a server end and transmitted in the following manner.

(1) A bit rate version of the viewpoint video to which attention is currently paid and bit rate versions of the predictive viewpoint videos are determined according to a total bandwidth value allocated for viewpoint video transmission, and a preset bandwidth allocation policy.

Specifically, the preset bandwidth allocation policy includes:

determining, based on a delay and quality priority, a viewpoint type priority, and a predictive viewpoint video location priority and by using the total bandwidth value allocated for viewpoint video transmission, the transmitted bit rate version of the viewpoint video to which attention is currently paid and the transmitted bit rate versions of the predictive viewpoint videos. Herein, the determining is preferably based on the delay and quality priority, then based on the viewpoint type priority, and then based on the predictive viewpoint video location priority. The transmitted bit rate version of the viewpoint video to which attention is currently paid and the transmitted bit rate versions of the predictive viewpoint videos are determined.

The delay and quality priority is used to ensure that lowest bit rate versions of the viewpoint video to which attention is currently paid and the predictive viewpoint videos are transmitted. The viewpoint type priority includes: a priority of the viewpoint video to which attention is currently paid is higher than priorities of the predictive viewpoint videos, and therefore a bandwidth is preferably allocated to the viewpoint video to which attention is currently paid. The predictive viewpoint video location priority includes: an ascending order of distances between locations of all of the predictive viewpoint videos and the location of the viewpoint video to which attention is currently paid is equal to a descending order of priorities of all of the predictive viewpoint videos, and therefore a bandwidth is preferably allocated to a viewpoint video whose predictive viewpoint video location priority is high.

The delay and quality priority is used to ensure that lowest bit rate versions of the viewpoint video to which attention is currently paid and the predictive viewpoint videos are transmitted because the viewpoint video to which the user currently pays attention and the predictive viewpoint videos are transmitted, a probability that the predictive viewpoint videos is used in future as viewpoint videos to which attention is paid is relatively large, and transmission of the predictive viewpoint videos may reduce a viewpoint switching delay. Therefore, bandwidths are allocated to the viewpoint video to which attention is currently paid and the predictive viewpoint videos, it is preferably ensured that all lowest bit rate versions of the viewpoint video to which attention is currently paid and the predictive viewpoint videos may be transmitted. If the bandwidths are sufficiently large, the bit rate version of the viewpoint video to which attention is currently paid may be improved, thereby improving viewpoint video transmission quality.

The viewpoint type priority is that when bandwidth resource allocation is performed, according to viewpoint types, a bandwidth is preferably allocated to the viewpoint video to which attention is currently paid, and then bandwidths are allocated to the predictive viewpoint videos.

The predictive viewpoint video location priority is for a predictive viewpoint video, and when a bandwidth resource is allocated to the predictive viewpoint video, a bandwidth resource is preferably allocated to a viewpoint video relatively close to the viewpoint video to which attention is currently paid.

(2) The predictive viewpoint videos are downloaded from the server end according to the locations of the predictive viewpoint videos and the bit rate versions of the predictive viewpoint videos, and the viewpoint video to which attention is currently paid is downloaded from the server end according to the location of the viewpoint video to which attention is currently paid, and the bit rate version of the viewpoint video to which attention is currently paid.

Before switching to the viewpoint video to which attention is currently paid is performed, a bandwidth may be already allocated to the viewpoint video to which the user currently pays attention, and the viewpoint video already begins to be transmitted, and may be already transmitted completely.

Therefore, if it is determined that the viewpoint video to which the user currently pays attention is completely transmitted, the bit rate version of the completely transmitted viewpoint video to which attention is currently paid is determined. The determining, according to a total bandwidth value allocated for viewpoint video transmission, and a preset bandwidth allocation policy, a bit rate version of the viewpoint video to which attention is currently paid and bit rate versions of the predictive viewpoint videos is specifically implemented in the following manner:

A bandwidth value is sequentially allocated, based on an ascending order of distances between the predictive viewpoint videos and the viewpoint video to which attention is currently paid, for a lowest bit rate for transmitting each viewpoint video of the predictive viewpoint videos; and the bit rate version of the viewpoint video to which attention is currently paid is raised based on a difference between the total bandwidth value and the bandwidth value that is allocated for the lowest bit rate for transmitting the predictive viewpoint videos, until the bit rate version of the viewpoint video to which attention is currently paid is the highest or the total bandwidth value is exhausted, so as to determine the bit rate version of the viewpoint video to which attention is currently paid and the bit rate versions of the predictive viewpoint videos.

If it is determined that the viewpoint video to which attention is currently paid is already transmitted but is not transmitted completely, a bandwidth is reallocated to the viewpoint video to which attention is currently paid and that is not transmitted. A first bandwidth value is allocated, based on the total bandwidth value, for a lowest bit rate version of the incompletely transmitted viewpoint video to which attention is currently paid; a second bandwidth value is sequentially allocated, based on a difference between the total bandwidth value and the first bandwidth value, and distances between the predictive viewpoint videos and the viewpoint video to which attention is currently paid, for a lowest bit rate for transmitting each viewpoint video of the predictive viewpoint videos; and the bit rate version of the viewpoint video to which attention is currently paid is raised based on the difference between the total bandwidth value and the first bandwidth value and a difference between the total bandwidth value and the second bandwidth value, until the bit rate version of the viewpoint video to which attention is currently paid is the highest or the total bandwidth value is exhausted, so as to determine the bit rate version of the viewpoint video to which attention is currently paid and the bit rate versions of the predictive viewpoint videos.

When the bit rate version of the viewpoint video to which attention is currently paid is the highest and the total bandwidth value is not exhausted, a bit rate version of each viewpoint video of the predictive viewpoint videos is sequentially raised based on the ascending order of the distances between the predictive viewpoint videos and the viewpoint video to which attention is currently paid, until the bit rate version of each viewpoint video of the predictive viewpoint videos is the highest or the total bandwidth value is exhausted.

In this embodiment of the present invention, a bit rate version of each viewpoint video of the predictive viewpoint videos is sequentially raised based on the ascending order of the distances between the predictive viewpoint videos and the viewpoint video to which attention is currently paid, and a bit rate version may be preferably raised for a predictive viewpoint video closest to the viewpoint video to which attention is currently paid, until the bit rate version is the highest or the bandwidth is exhausted. If the bit rate version is the highest and the bandwidth is not exhausted, a bandwidth is allocated to a viewpoint video neighboring to the predictive viewpoint video closest to the viewpoint video to which attention is currently paid, and the rest can be deduced by analogy. Alternatively, bit rate versions may be separately and sequentially raised by one level based on the ascending order of the distances between the predictive viewpoint videos and the viewpoint video to which attention is currently paid. If the bandwidth is not exhausted, the bit rate versions are sequentially raised again by one level based on the ascending order of the distances between the predictive viewpoint videos and the viewpoint video to which attention is currently paid.

Specifically, during bandwidth allocation, grouping processing may be further performed on viewpoint videos.

a) Divide all viewpoint videos into three groups, that is, an H (High Priority) group, an M (Medium Priority) group, and an L (Low Priority) group.

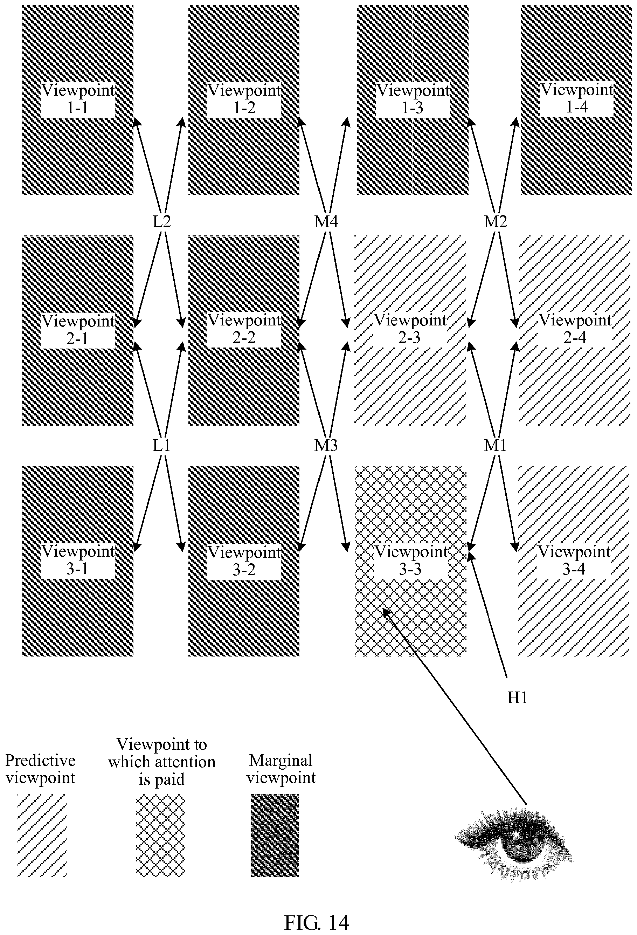

For a case in which viewpoint video fusion may be performed, as shown in FIG. 14:

The H group represents a set of viewpoint videos to which attention is currently paid, and the set may include one viewpoint video, may include two viewpoint videos, or may include four viewpoint videos. This depends on a quantity of viewpoint videos that are fused to obtain a viewpoint video to which attention is currently paid. The M group includes one or more subgroups $\{M_1, M_2, L\}$, each subgroup includes four viewpoint videos, and subgroups overlap with each other. It is considered that when a viewpoint video attention is paid switches to the middle between four viewpoints, that is, horizontal and vertical dimensions, as shown in FIG. 11d, viewpoint fusion needs to be performed on four neighboring viewpoint videos, to generate a new viewpoint video. Therefore, the M group starts from a border between the viewpoint video to which attention is currently paid and a predictive viewpoint video, and ends at a border between a predictive viewpoint video and a marginal viewpoint video or an available viewpoint boundary, that is, reaches an available viewpoint margin. The L group includes one or more subgroups $\{L_1, L_2, L\}$, each subgroup includes four viewpoint videos, and subgroups overlap with each other. The L group starts from a border between a predictive viewpoint video and a marginal viewpoint video, and ends at an available viewpoint boundary, that is, reaches an available viewpoint margin.

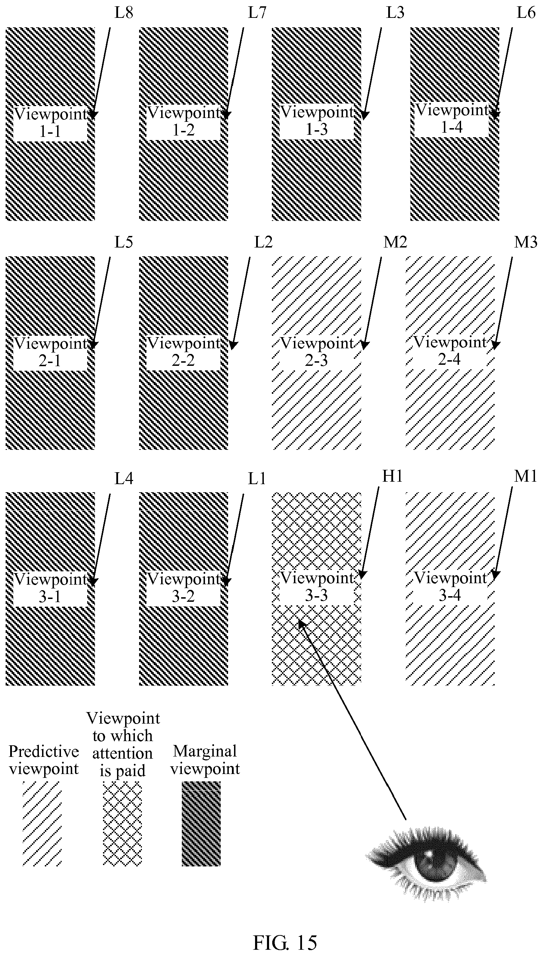

For a case in which viewpoint video fusion does not need to be performed, as shown in FIG. 15:

The H group represents a set of viewpoint videos to which attention is currently paid, and the set includes one viewpoint video. The M group includes one or more subgroups $\{M_1, M_2, L\}$, and each subgroup includes one viewpoint video. The M group starts from a border between the viewpoint video to which attention is currently paid and a neighboring viewpoint video, and ends at a boundary between a predictive viewpoint video and a marginal viewpoint video or an available viewpoint boundary, that is, reaches an available viewpoint margin. The L group includes one or more subgroups $\{L_1, L2, L\}$, and each subgroup includes one viewpoint video. The L group starts from a border between a predictive viewpoint video and a marginal viewpoint video, and ends at an available viewpoint boundary, that is, reaches an available viewpoint margin.

b) Determine whether each viewpoint video in the H group is already transmitted, and determine whether each viewpoint video is transmitted completely. If each viewpoint video is transmitted completely, perform step c); if it is determined that each viewpoint video is not transmitted completely, perform step d); or if each viewpoint video in the H group is not transmitted, perform step e).

c) Allocate bandwidth resources needed by lowest bit rates to subgroups in the M group based on an ascending order of distances to the H group. If the bandwidth is insufficient or the bandwidth is exhausted, perform the step g). Otherwise, perform step f).

One or more subgroups in the M group may be already transmitted in advance, or transmitted completely, and no bandwidth needs to be reallocated in this step.

d) Allocate a bandwidth resource needed by a lowest bit rate version to a viewpoint video in the H group that is not transmitted completely. If the bandwidth is insufficient or the bandwidth is exhausted, perform step g); otherwise, perform step c).

e) Allocate a bandwidth resource needed by a lowest bit rate version to a viewpoint video in the H group that is not transmitted. If the bandwidth is insufficient or the bandwidth is exhausted, perform step g); otherwise, perform step c).

f) Raise a bit rate version of a viewpoint video in the H group level by level, and allocate a bandwidth resource needed by the raised bit rate version, until a maximum bit rate version is reached. If the bandwidth is insufficient or the bandwidth is exhausted, perform step h); otherwise, perform step g).

g) For subgroups in the M group, sequentially and separately raise bit rate versions of viewpoint videos in the subgroups by one level according to the ascending order of the distances to the H group, and allocate bandwidth resources needed by the bit rate versions that are raised by one level. If the bandwidth is insufficient or the bandwidth is exhausted, perform step h); otherwise, perform step g) repetitively.

h) Allocation ends.

After the foregoing bandwidth allocation is performed, bit rate versions of viewpoint videos in the H group and the M group can be determined.

It should be noted that when bandwidth resource allocation is performed, only intra-group update can be performed. For example, when a viewpoint belongs to two subgroups at the same time, if bit rates of the viewpoint video in the two subgroups are different, versions of two bit rates need to be reserved at the same time.

Each viewpoint video at the server end has multiple different bit rate versions, and all viewpoint videos need to be transmitted in the prior art. Therefore, a bandwidth needs to be allocated to all the viewpoint videos, and an average allocation solution is usually used. By using the solution provided in this embodiment of the present invention, not all the viewpoint videos need to be transmitted, and therefore a bandwidth does not need to be allocated to all the viewpoint videos. Moreover, in this solution, a bandwidth is preferably allocated to a viewpoint video to which attention is currently paid, and transmission quality of the viewpoint video to which attention is currently paid is preferably considered based on a total bandwidth value. Therefore, a waste of bandwidths is reduced, and an instant experience of the user is improved.

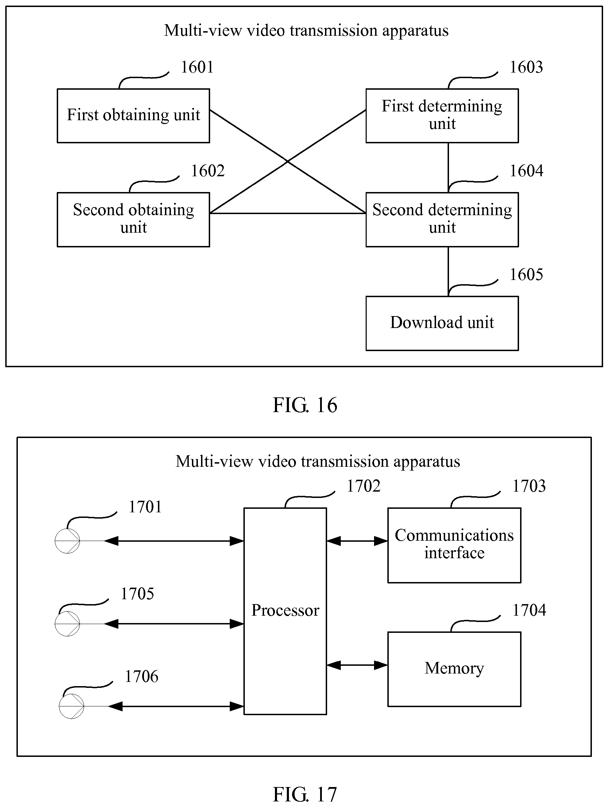

Based on an inventive concept the same as that of the embodiment of the multi-view video transmission method, an embodiment of the present invention further provides a multi-view video transmission apparatus. As shown in FIG. 16, the apparatus includes:

a first obtaining unit 1601, configured to obtain a location of a viewpoint video to which a user currently pays attention in a multi-view video;
a second obtaining unit 1602, configured to obtain a first speed at which a user viewpoint switches, where the first speed is a speed at which the user viewpoint switches to the location of the viewpoint video to which attention is currently paid;
a first determining unit 1603, configured to determine, according to the first speed obtained by the second obtaining unit 1602 and according to a preset algorithm, a quantity *NNV* of predictive viewpoint videos that need to be downloaded before the user switches to another viewpoint;
a second determining unit 1604, configured to determine locations of the predictive viewpoint videos in the multi-view video according to a preset rule and according to the location that is obtained by the first obtaining unit 1601 and that is of the viewpoint video to which the user currently pays attention, the first speed obtained by the second obtaining unit 1602, and the quantity *NNV* of the predictive viewpoint videos that is determined by the first determining unit 1603, where the predictive viewpoint videos are viewpoint videos whose probability of becoming a next viewpoint video attention is to be paid satisfies a preset probability value; and
a download unit 1605, configured to download the predictive viewpoint videos corresponding to the locations of the predictive viewpoint videos from a server end and transmit the predictive viewpoint videos, where the locations are determined by the second determining unit 1604.

The viewpoint video to which attention is currently paid is a viewpoint video in the multi-view video, or a viewpoint video obtained after two neighboring viewpoint videos in the multi-view video are fused.

When obtaining the first speed at which the user viewpoint switches, the second obtaining unit 1602 is specifically configured to: in a predetermined period of time before the user viewpoint switches to the location of the viewpoint video to which attention is currently paid, collect instantaneous speeds of the user at multiple moments; and calculate an average value of the collected instantaneous speeds at the multiple moments, and use the average value as the first speed.

The second obtaining unit 1602 is specifically configured to: in a predetermined period of time before the user viewpoint switches to the location of the viewpoint video to which attention is currently paid, collect an instantaneous speed of the user at a moment and an acceleration corresponding to the instantaneous speed at the moment; and determine the first speed according to a first rule and based on the collected instantaneous speed at the moment and the collected acceleration corresponding to the instantaneous speed at the moment;

the second obtaining unit 1602 is specifically configured to: in a predetermined period of time before the user viewpoint switches to the location of the viewpoint video to which attention is currently paid, collect instantaneous speeds of the user at multiple moments and an acceleration corresponding to an instantaneous speed at each moment; and calculate an average value of the collected instantaneous speeds at the multiple moments, calculate an average value of the multiple collected accelerations corresponding to the instantaneous speeds at the multiple moments, and determine the first speed according to a second rule and based on the average value of the instantaneous speeds at the multiple moments and the average value of the multiple accelerations; or
the second obtaining unit 1602 is specifically configured to: in a predetermined period of time before the user viewpoint switches to the location of the viewpoint video to which attention is currently paid, collect instantaneous speeds of the user at multiple moments and an acceleration corresponding to an instantaneous speed at each moment, and calculate an average value of the instantaneous speeds at the multiple moments; and select an acceleration corresponding to an instantaneous speed from the accelerations corresponding to the instantaneous speeds at the multiple moments, and determine the first speed according to a third rule and based on the average value of the instantaneous speeds at the multiple moments and the selected acceleration corresponding to the instantaneous speed.

Optionally, the first rule may include:

$$V = v(t) + \frac{1}{2} T a(t);$$

where *V* represents the first speed; *v(t)* represents a collected instantaneous speed of the user at a moment *t*; *T* represents duration of each viewpoint video; and $a(t)$ represents an acceleration corresponding to the instantaneous speed at the moment $t$;

the second rule may include:

$$V = \frac{1}{n}\sum v(t) + \frac{1}{2n}T\sum a(t);$$

where n represents a quantity of instantaneous speeds at multiple moments; or the third rule may include:

$$V = \frac{1}{n}\sum v(t) + \frac{1}{2}T\sum a(t).$$

For a one-dimensional viewpoint video, the preset algorithm is:

$$NNV = N\frac{VT}{D};$$

where $NNV$ represents the quantity of the predictive viewpoint videos; $V$ represents the first speed; $N$ represents a total quantity of viewpoint videos; $D$ represents an angle covered by the $N$ viewpoint videos; and $T$ represents the duration of each viewpoint video.

The second determining unit 1604 is specifically configured to:

when the first speed is less than a predetermined speed threshold, and the quantity $NNV$ of the predictive viewpoint videos is an even number, allocate $\frac{NNV}{2}$ viewpoint videos at each of two sides neighboring to the location of the viewpoint video to which attention is currently paid, and use the $NNV$ viewpoint videos allocated at the two sides neighboring to the location of the viewpoint video to which attention is currently paid as predictive viewpoint videos;

when the first speed is less than the predetermined speed threshold, and the quantity $NNV$ of the predictive viewpoint videos is an odd number, use $\frac{NNV+1}{2}$ viewpoint videos neighboring to a first direction side of the location of the viewpoint video to which attention is currently paid, and $\frac{NNV-1}{2}$ viewpoint videos neighboring to a second direction side of the location of the viewpoint video to which attention is currently paid as predictive viewpoint videos, where the first direction side is the same as a vector direction of the first speed, and the second direction side is opposite to the vector direction of the first speed;

when the first speed is less than the predetermined speed threshold, and the quantity $NNV$ of the predictive viewpoint videos is an odd number, use $\frac{NNV-1}{2}$ viewpoint videos neighboring to the first direction side of the location of the viewpoint video to which attention is currently paid, and $\frac{NNV+1}{2}$ viewpoint videos neighboring to the second direction side of the location of the viewpoint video to which attention is currently paid as predictive viewpoint videos; or when the user switching speed is not less than the predetermined speed threshold, use $NNV$ viewpoint videos neighboring to the first direction side of the location of the viewpoint video to which attention is currently paid as predictive viewpoint videos.

The second determining unit 1604 is further configured to: when a quantity of viewpoint videos at a side neighboring to the location of the viewpoint video to which attention is currently paid is less than a quantity of allocated viewpoint videos, use the quantity of the viewpoint videos at the side neighboring to the location of the viewpoint video to which attention is currently paid as the quantity of the allocated viewpoint videos.

For a two-dimensional viewpoint video, the first determining unit 1603 is specifically configured to:

decompose the first speed into a second speed in a horizontal direction and a third speed in a vertical direction;
predict a horizontal quantity of predictive viewpoint videos in the horizontal direction based on the second speed and according to a first algorithm included in the preset algorithm, and predict a vertical quantity of predictive viewpoint videos in the vertical direction based on the third speed and according to the first algorithm; and
determine the quantity of the predictive viewpoint videos based on a quantity of fused viewpoint videos, the horizontal quantity of the predictive viewpoint videos, and the vertical quantity of the predictive viewpoint videos and according to a second algorithm included in the preset algorithm.

The first algorithm includes:

$$NNV_x = N_x \frac{V_x T}{D_x};$$

where $NNV_x$ represents the horizontal quantity of the predictive viewpoint videos; $N_x$ represents a total quantity of viewpoint videos in the horizontal direction; $N_y$ represents a total quantity of viewpoint videos in the vertical direction; $D_x$ represents an angle covered by the $N_x$ viewpoint videos in the horizontal direction; $T$ represents the duration of each viewpoint video; and $V_x$ represents the second speed; and

$$NNV_y = N_y \frac{V_y T}{D_y};$$

where $NNV_y$ represents the horizontal quantity of the predictive viewpoint videos; $N_y$ represents a total quantity of viewpoint videos in the vertical direction; $D_y$ represents an angle covered by the $N_y$ viewpoint videos in the vertical direction; $T$ represents the duration of each viewpoint video; and $V_y$ represents the third speed.
When determining the quantity of the predictive viewpoint videos based on the quantity of the fused viewpoint videos, the horizontal quantity of the predictive viewpoint videos, and the vertical quantity of the predictive viewpoint videos and according to the second algorithm included in the preset algorithm, the first determining unit 1603 is specifically configured to:
if the quantity of the fused viewpoint videos is one, obtain the quantity $NNV$ of the predictive viewpoint videos by using the second algorithm satisfying a condition of the following formula:

$$NNV = (NNV_x + 1) * (NNV_y + 1) - 1;$$

if the quantity of the fused viewpoint videos is two and the fused viewpoint videos are distributed in the horizontal direction, obtain the quantity $NNV$ of the predictive viewpoint videos by using the second algorithm satisfying a condition of the following formula:

$$NNV = (NNV_x + 2) * (NNV_y + 1) - 2;$$

if the quantity of the fused viewpoint videos is two and the fused viewpoint videos are distributed in the vertical direction, obtain the quantity $NNV$ of the predictive viewpoint videos by using the second algorithm satisfying a condition of the following formula:

$$NNV = (NNV_x + 1) * (NNV_y + 2) - 2;$$

or
if the quantity of the fused viewpoint videos is four, obtain the quantity $NNV$ of the predictive viewpoint videos by using the second algorithm satisfying a condition of the following formula:

$$NNV = (NNV_x + 2) * (NNV_y + 2) - 4.$$

For a two-dimensional viewpoint video, the second determining unit 1604 is specifically configured to:

when the second speed obtained by decomposing the first speed is less than a speed threshold in the horizontal direction, and the third speed obtained by decomposing the first speed is less than a speed threshold in the vertical direction, use *NNV* viewpoint videos in a first rectangular area other than the fused viewpoint videos as predictive viewpoint videos, where the first rectangular area is a rectangular area formed by a first side length that is the horizontal quantity of the predictive viewpoint videos plus a quantity of fused viewpoint videos in the horizontal direction, and a second side length that is the vertical quantity of the predictive viewpoint videos plus a quantity of fused viewpoint videos in the vertical direction; and a geometrical center of the first rectangular area is the viewpoint video to which attention is currently paid;

when the second speed is less than a speed threshold in the horizontal direction, and the third speed is not less than a speed threshold in the vertical direction, use *NNV* viewpoint videos in a second rectangular area other than the fused viewpoint videos as predictive viewpoint videos, where the second rectangular area is a rectangular area formed by a first side length that is the horizontal quantity of the predictive viewpoint videos plus a quantity of fused viewpoint videos in the horizontal direction, and a second side length that is the vertical quantity of the predictive viewpoint videos plus a quantity of fused viewpoint videos in the vertical direction; and the predictive viewpoint videos are uniformly distributed, in the horizontal direction, at the two sides neighboring to the location of the viewpoint video to which attention is currently paid, and distributed, in the vertical direction, at a location of a side that is neighboring to the viewpoint video to which attention is currently paid and that is the same as a vector direction of the third speed;

when the second speed is not less than a speed threshold in the horizontal direction, and the third speed is less than a speed threshold in the vertical direction, use *NNV* viewpoint videos in a third rectangular area other than the fused viewpoint videos as predictive viewpoint videos, where the third rectangular area is a rectangular area formed by a first side length that is the horizontal quantity of the predictive viewpoint videos plus a quantity of fused viewpoint videos in the horizontal direction, and a second side length that is the vertical quantity of the predictive viewpoint videos plus a quantity of fused viewpoint videos in the vertical direction; and the predictive viewpoint videos are uniformly distributed, in the vertical direction, at the two sides neighboring to the location of the viewpoint video to which attention is currently paid, and distributed, in the horizontal direction, at a location of a side that is neighboring to the viewpoint video to which attention is currently paid and that is the same as a vector direction of the second speed; or

when the second speed is not less than a speed threshold in the horizontal direction, and the third speed is not less than a speed threshold in the vertical direction, use *NNV* viewpoint videos in a fourth rectangular area other than the fused viewpoint videos as predictive viewpoint videos, where the fourth rectangular area is a rectangular area formed by a first side length that is the horizontal quantity of the predictive viewpoint videos plus a quantity of fused viewpoint videos in the horizontal direction, and a second side length that is the vertical quantity of the predictive viewpoint videos plus a quantity of fused viewpoint videos in the vertical direction; and the predictive viewpoint videos are distributed, in the vertical direction, at a location of a side that is neighboring to the viewpoint video to which attention is currently paid and that is the same as a vector direction of the third speed, and distributed, in the horizontal direction, at a location of a side that is neighboring to the viewpoint video to which attention is currently paid and that is the same as a vector direction of the second speed.

The second determining unit 1604 is further configured to: when a quantity of viewpoint videos included in any one of the first rectangular area, the second rectangular area, the third rectangular area, or the fourth rectangular area is less than a quantity of predictive viewpoint videos, use all the viewpoint videos included in any one of the rectangular areas as predictive viewpoint videos.

Each viewpoint video includes multiple bit rate versions, each bit rate version requires a different bandwidth, and the download unit 1605 is specifically configured to:

determine, according to a total bandwidth value allocated for viewpoint video transmission, and a preset bandwidth allocation policy, a bit rate version of the viewpoint video to which attention is currently paid and bit rate versions of the predictive viewpoint videos; and

download the predictive viewpoint videos from the server end according to the locations of the predictive viewpoint videos and the bit rate versions of the predictive viewpoint videos, and download the viewpoint video to which attention is currently paid from the server end according to the location of the viewpoint video to which attention is currently paid, and the bit rate version of the viewpoint video to which attention is currently paid.

After it is determined that the viewpoint video to which attention is currently paid is completely transmitted, and the bit rate version of the completely transmitted viewpoint video to which attention is currently paid is determined, the download unit 1605 is specifically configured to:

sequentially allocate, based on an ascending order of distances between the predictive viewpoint videos and the viewpoint video to which attention is currently paid, a bandwidth value to a lowest bit rate for transmitting each viewpoint video of the predictive viewpoint videos; and

raise, based on a difference between the total bandwidth value and the bandwidth value that is allocated to the lowest bit rate for transmitting the predictive viewpoint videos, the bit rate version of the viewpoint video to which attention is currently paid, until the bit rate version of the viewpoint video to which attention is currently paid is the highest or the total bandwidth value is exhausted, so as to determine the bit rate version of the viewpoint video to which attention is currently paid and the bit rate versions of the predictive viewpoint videos.

When it is determined that the viewpoint video to which attention is currently paid is incompletely transmitted, the download unit 1605 is specifically configured to:

allocate, based on the total bandwidth value, a first bandwidth value to a lowest bit rate version of the incompletely transmitted viewpoint video to which attention is currently paid;

sequentially allocate, based on a difference between the total bandwidth value and the first bandwidth value, and distances between the predictive viewpoint videos and the viewpoint video to which attention is currently paid, a second bandwidth value to a lowest bit rate for transmitting each viewpoint video of the predictive viewpoint videos; and

raise, based on the difference between the total bandwidth value and the first bandwidth value and a difference between the total bandwidth value and the second bandwidth value, the bit rate version of the viewpoint video to which attention is currently paid, until the bit rate version of the viewpoint video to which attention is currently paid is the highest or the total bandwidth value is exhausted, so as to determine the bit rate version of the viewpoint video to which attention is currently paid and the bit rate versions of the predictive viewpoint videos.

The download unit 1605 is further configured to: when the bit rate version of the viewpoint video to which attention is currently paid is the highest and the total bandwidth value is not exhausted, sequentially raise, based on the ascending order of the distances between the predictive viewpoint videos and the viewpoint video to which attention is currently paid, a bit rate version of each viewpoint video of the predictive viewpoint videos, until the bit rate version of each viewpoint video of the predictive viewpoint videos is the highest or the total bandwidth value is exhausted.

Both the first obtaining unit 1601 and the second obtaining unit 1602 in this embodiment of the present invention may be implemented by using sensors. For example, the first obtaining unit 1601 may be implemented by using a location sensor configured to obtain a location of a viewpoint video. The second obtaining unit 1602 may be implemented by using a speed sensor configured to collect a speed at which a user performs viewpoint switching, or implemented by means of cooperation between a sensor and a processor, or the like. Each of the first determining unit 1603, the second determining unit 1604, and the download unit 1605 may be implemented by using a processor. During specific implementation, for example, as shown in FIG. 17, the apparatus may include:

a location sensor 1701, a processor 1702, and a communications interface 1703. The location sensor 1701, the processor 1702, and the communications interface 1703 are connected to each other. This embodiment of the present invention further includes a memory 1704. The memory 1704 is separately connected to the location sensor 1701, the processor 1702, and the communications interface 1703. In this embodiment of the present invention, a specific connection medium between the foregoing components is not limited. Specifically, connection may be performed by using a bus. The bus may be classified into an address bus, a data bus, a control bus, or the like.

The memory 1704 in this embodiment of the present invention is configured to store program code executed by the processor 1702. The memory 1704 may be a volatile memory (English: volatile memory), such as a random-access memory (English: random-access memory, RAM for short); the memory 1704 may be a non-volatile memory (English: non-volatile memory), such as a read-only memory (English: read-only memory, ROM for short), a flash memory (English: flash memory), a hard disk drive (English: hard disk drive, HDD for short), or a solid-state drive (English: solid-state drive, SSD for short); or the memory 1704 is any other medium that can be used to carry or store expected program code in an instruction or data structure form and that can be accessed by a computer, but is not limited thereto. The memory 1704 may be a combination of the foregoing memories.

The processor 1702 in this embodiment of the present invention may be a central processing unit (English: central processing unit, CPU for short).

FIG. 17 is only an example, and does not specifically limit structures and a quantity of devices in the multi-view video transmission apparatus.

The location sensor 1701 is configured to obtain a location of a viewpoint video to which a user currently pays attention in a multi-view video.

The processor 1702 is configured to obtain a first speed at which a user viewpoint switches, and configured to implement functions implemented by the first determining unit 1603, the second determining unit 1604, and the download unit 1605.

Optionally, in a first implementation, the apparatus may further include:

a speed sensor 1705, configured to: in a predetermined period of time before the user viewpoint switches to the location of the viewpoint video to which attention is currently paid, collect instantaneous speeds of the user at multiple moments, where

when obtaining the first speed at which the user viewpoint switches, the processor 1702 is specifically configured to: calculate an average value of the instantaneous speeds at the multiple moments, and use the average value as the first speed.

Optionally, in a second implementation, the apparatus may further include:

a speed sensor 1705, configured to: in a predetermined period of time before the user viewpoint switches to the location of the viewpoint video to which attention is currently paid, collect instantaneous speeds of the user at multiple moments; and

an acceleration sensor 1706, configured to: in the predetermined period of time before the user viewpoint switches to the location of the viewpoint video to which attention is currently paid, collect an acceleration corresponding to an instantaneous speed of the user at a moment, where

when obtaining the first speed at which the user viewpoint switches, the processor 1702 is specifically configured to determine the first speed according to a first rule and based on an instantaneous speed at a moment collected by the speed sensor 1705 and an acceleration corresponding to the instantaneous speed at the moment collected by the acceleration sensor 1706.

Optionally, in a third implementation, the apparatus may further include:

a speed sensor 1705, configured to: in a predetermined period of time before the user viewpoint switches to the location of the viewpoint video to which attention is currently paid, collect instantaneous speeds of the user at multiple moments; and

an acceleration sensor 1706, configured to: in the predetermined period of time before the user viewpoint switches to the location of the viewpoint video to which attention is currently paid, collect an acceleration corresponding to an instantaneous speed of the user at each moment, where

when obtaining the first speed at which the user viewpoint switches, the processor 1702 is specifically configured to: calculate an average value of the instantaneous speeds at the multiple moments collected by the speed sensor 1705, and an average value of the multiple accelerations corresponding to the instantaneous speeds at the multiple moments collected by the acceleration sensor 1706, and determine the first speed according to a second rule and based on the average value of the instantaneous speeds at the multiple moments and the average value of the multiple accelerations.

Optionally, in a fourth implementation, the apparatus may further include:

a speed sensor 1705, configured to: in a predetermined period of time before the user viewpoint switches to the location of the viewpoint video to which attention is currently paid, collect instantaneous speeds of the user at multiple moments; and

an acceleration sensor 1706, configured to: in the predetermined period of time before the user viewpoint switches to the location of the viewpoint video to which attention is currently paid, collect an acceleration corresponding to an instantaneous speed of the user at each moment, where

when obtaining the first speed at which the user viewpoint switches, the processor 1702 is specifically configured to: calculate an average value of the instantaneous speeds at the multiple moments collected by the speed sensor 1705, select an acceleration corresponding to an instantaneous speed from the accelerations corresponding to the instantaneous speeds at the multiple moments collected by the acceleration sensor 1706, and determine the first speed according to a third rule and based on the average value of the instantaneous speeds at the multiple moments and the selected acceleration corresponding to the instantaneous speed.

The location sensor, the speed sensor, and the acceleration sensor in this embodiment of the present invention may be further implemented by using one sensor, and the sensor not only may collect a viewpoint location and a user switching speed, but also may collect a user switching acceleration.

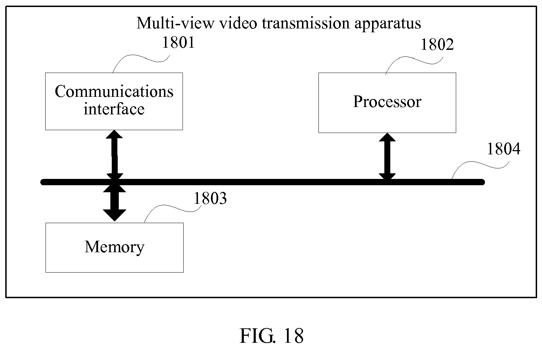

An embodiment of the present invention further provides another multi-view video transmission apparatus. As shown in FIG. 18, the apparatus includes: a communications interface 1801, a processor 1802, and a memory 1803. The communications interface 1801, the processor 1802, and the memory 1803 are connected to each other. In this embodiment of the present invention, a specific connection medium between the foregoing components is not limited. In this embodiment of the present invention, in FIG. 18, the memory 1803, the processor 1802, and the communications interface 1801 are connected to each other by using a bus 1804. The bus is represented by using a bold line in FIG. 18. A manner of connection between other components is only schematically described, but is not used as a limitation. The bus may be classified into an address bus, a data bus, a control bus, or the like. For convenience of representation, the bus is represented only by using one bold line in FIG. 18, but it does not mean that there is only one bus or one type of bus.

The memory 1803 in this embodiment of the present invention is configured to store program code executed by the processor 1802. The memory 1803 may be a volatile memory, such as a RAM; the memory 1803 may be a non-volatile memory, such as a ROM, a flash memory, an HDD, or an SSD; or the memory 1803 is any other medium that can be used to carry or store expected program code in an instruction or data structure form and that can be accessed by a computer, but is not limited thereto. The memory 1803 may be a combination of the foregoing memories.

The processor 1802 in this embodiment of the present invention may be a CPU.

The processor 1802 is configured to execute the program code stored in the memory 1803, and is specifically configured to perform the multi-view video transmission method described in the embodiment corresponding to FIG. 6. For details, refer to the embodiment corresponding to FIG. 6, and details are not described herein again.

By means of the solution provided in this embodiment of the present invention, a location of a viewpoint video to which a user currently pays attention in a multi-view video is obtained; a first speed at which a user viewpoint switches is obtained, where the first speed is a speed at which the user viewpoint switches to the location of the viewpoint video to which attention is currently paid; a quantity *NNV* of predictive viewpoint videos that need to be downloaded before the user switches to another viewpoint is determined according to the first speed and according to a preset algorithm; locations of the predictive viewpoint videos are determined in the multi-view video according to a preset rule and according to the location of the viewpoint video to which the user currently pays attention, the first speed, and the quantity *NNV* of the predictive viewpoint videos, where the predictive viewpoint videos are viewpoint videos whose probability of becoming a next viewpoint video attention is to be paid satisfies a preset probability value; and the predictive viewpoint videos corresponding to the locations of the predictive viewpoint videos are downloaded from a server end and transmitted. Therefore, when the user pays attention to a current viewpoint video, a viewpoint video neighboring to the current viewpoint video, that is, a predictive viewpoint video, is downloaded from the server end and transmitted. When the user performs switching next time, the predictive viewpoint video may be used as a viewpoint video attention is paid. This can avoid a time delay caused during switching of an angle of view. Moreover, not all viewpoint videos need to be transmitted, and therefore a waste of bandwidths is reduced. Each viewpoint video at the server end has multiple different bit rate versions, and all viewpoint videos need to be transmitted in the prior art. Therefore, a bandwidth needs to be allocated to all the viewpoint videos, and an average allocation solution is usually used. By using the solution provided in this embodiment of the present invention, not all the viewpoint videos need to be transmitted, and therefore a bandwidth does not need to be allocated to all the viewpoint videos. Moreover, in this solution, a bandwidth is preferably allocated to a viewpoint video to which attention is currently paid, and transmission quality of the viewpoint video to which attention is currently paid is preferably considered based on a total bandwidth value. Therefore, a waste of bandwidths is reduced, and an instant experience of the user is improved.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although embodiments of the present invention have been described, persons skilled in the art can make changes and modifications to these embodiments within the scope of the appended claims.

**Claims**

1. A multi-view video transmission method, comprising:

obtaining a location of a viewpoint video to which a user currently pays attention in a multi-view video;
obtaining a first speed at which a user viewpoint switches to the location of the viewpoint video to which attention is currently paid;
determining, according to the first speed and according to a preset algorithm, a quantity *NNV* of predictive viewpoint videos that need to be downloaded before the user switches to another viewpoint;
determining locations of the predictive viewpoint videos in the multi-view video according to a preset rule and according to the location of the viewpoint video to which the user currently pays attention, the first speed, and the quantity *NNV* of the predictive viewpoint videos, wherein the predictive viewpoint videos are viewpoint videos whose probability of becoming a next viewpoint video attention is to be paid satisfies a preset probability value; and
downloading the predictive viewpoint videos corresponding to the locations of the predictive viewpoint videos from a server end and transmitting the predictive viewpoint videos;
wherein the obtaining the first speed at which the user viewpoint switches comprises:

in a predetermined period of time before the user viewpoint switches to the location of the viewpoint video to which attention is currently paid, when an instantaneous speed of the user at a moment and an acceleration corresponding to the instantaneous speed at the moment are collected, determining the first speed according to a first rule and based on the instantaneous speed at the moment and the acceleration corresponding to the instantaneous speed at the moment;
in a predetermined period of time before the user viewpoint switches to the location of the viewpoint video to which attention is currently paid, when instantaneous speeds of the user at multiple moments and an acceleration corresponding to an instantaneous speed at each moment are collected, calculating an average value of the instantaneous speeds at the multiple moments, and an average value of the multiple accelerations corresponding to the instantaneous speeds at the multiple moments, and determining the first speed according to a second rule and based on the average value of the instantaneous speeds at the multiple moments and the average value of the multiple accelerations; or
in a predetermined period of time before the user viewpoint switches to the location of the viewpoint video to which attention is currently paid, when instantaneous speeds of the user at multiple moments and an acceleration corresponding to an instantaneous speed at each moment are collected, calculating an average value of the instantaneous speeds at the multiple moments, selecting an acceleration corresponding to an instantaneous speed from the accelerations corresponding to the instantaneous speeds at the multiple moments, and determining the first speed according to a third rule and based on the average value of the instantaneous speeds at the multiple moments and the selected acceleration corresponding to the instantaneous speed;
wherein for a one-dimensional viewpoint video, the preset algorithm comprises:

$$NNV = N\frac{VT}{D};$$

wherein *NNV* represents the quantity of the predictive viewpoint videos; *V* represents the first speed; *N* represents a total quantity of viewpoint videos; *D* represents an angle covered by the *N* viewpoint videos; and *T* represents a duration of each viewpoint video;

wherein for the one-dimensional viewpoint video, the determining locations of the predictive viewpoint videos in the multi-view video according to the preset rule and according to the location of the viewpoint video to which the user currently pays attention, the first speed, and the quantity $NNV$ of the predictive viewpoint videos comprises:

when the first speed is less than a predetermined speed threshold, and the quantity $NNV$ of the predictive viewpoint videos is an even number, allocating $\dfrac{NNV}{2}$ viewpoint videos at each of two sides neighboring to the location of the viewpoint video to which attention is currently paid and using the $NNV$ viewpoint videos as predictive viewpoint videos;

when the first speed is less than a predetermined speed threshold, and the quantity $NNV$ of the predictive viewpoint videos is an odd number, using $\dfrac{NNV+1}{2}$ viewpoint videos neighboring to a side of the location of the viewpoint video to which attention is currently paid, and $\dfrac{NNV-1}{2}$ viewpoint videos neighboring to an opposite side of the viewpoint video to which attention is currently paid as predictive viewpoint videos;

when the first speed is not less than the predetermined speed threshold, using $NNV$ viewpoint videos neighboring to a first direction side of the location of the viewpoint video to which attention is currently paid as predictive viewpoint videos, wherein the first direction side is the same as a vector direction of the first speed; and

if a quantity of viewpoint videos at a side neighboring to the location of the viewpoint video to which attention is currently paid is less than a quantity of allocated viewpoint videos, using the quantity of all the viewpoint videos at the side neighboring to the location of the viewpoint video to which attention is currently paid as the quantity of the allocated viewpoint videos;

wherein for a two-dimensional viewpoint video, the determining, according to the first speed and according to a preset algorithm, the quantity $NNV$ of predictive viewpoint videos that need to be downloaded before the user switches to another viewpoint comprises:

decomposing the first speed into a second speed $V_x$ in a horizontal direction and a third speed $V_y$ in a vertical direction;

predicting a horizontal quantity $NNV_x$ of predictive viewpoint videos in the horizontal direction based on the second speed and according to a first algorithm comprised in the preset algorithm, and predicting a vertical quantity $NNV_y$ of predictive viewpoint videos in the vertical direction based on the third speed and according to the first algorithm; and

determining the quantity of the predictive viewpoint videos based on a quantity of fused viewpoint videos, the horizontal quantity $NNV_x$ of the predictive viewpoint videos, and the vertical quantity $NNV_y$ of the predictive viewpoint videos and according to a second algorithm comprised in the preset algorithm, wherein

the fused viewpoint videos are viewpoint videos that are fused in the multi-view video to obtain the viewpoint video to which attention is currently paid; and,

wherein the first algorithm comprises:

$$NNV_x = N_x \frac{V_x T}{D_x};$$

wherein $N_x$ represents a total quantity of viewpoint videos in the horizontal direction; $D_x$ represents an angle covered by the $N_x$ viewpoint videos in the horizontal direction; and $T$ represents said duration of each viewpoint video; and

$$NNV_y = N_y \frac{V_y T}{D_y} \; ;$$

wherein $N_y$ represents a total quantity of viewpoint videos in the vertical direction; $D_y$ represents an angle covered by the $N_y$ viewpoint videos in the vertical direction; and $T$ represents said duration of each viewpoint video;

wherein the determining the quantity of the predictive viewpoint videos based on the quantity of fused viewpoint videos, the horizontal quantity $NNV_x$ of the predictive viewpoint videos, and the vertical quantity $NNV_y$ of the predictive viewpoint videos and according to a second algorithm comprised in the preset algorithm comprises:

if the quantity of the fused viewpoint videos is one, obtaining the quantity $NNV$ of the predictive viewpoint videos by using the second algorithm satisfying a condition of the following formula:

$$NNV = \left( NNV_x + 1 \right) * \left( NNV_y + 1 \right) - 1 \; ;$$

if the quantity of the fused viewpoint videos is two and the fused viewpoint videos are distributed in the horizontal direction in the multi-view video, obtaining the quantity $NNV$ of the predictive viewpoint videos by using the second algorithm satisfying a condition of the following formula:

$$NNV = \left( NNV_x + 2 \right) * \left( NNV_y + 1 \right) - 2 \; ;$$

if the quantity of the fused viewpoint videos is two and the fused viewpoint videos are distributed in the vertical direction in the multi-view video, obtaining the quantity $NNV$ of the predictive viewpoint videos by using the second algorithm satisfying a condition of the following formula:

$$NNV = \left( NNV_x + 1 \right) * \left( NNV_y + 2 \right) - 2 \; ;$$

or

if the quantity of the fused viewpoint videos is four and two viewpoint videos are distributed in each of the horizontal direction and the vertical direction in the multi-view video, obtaining the quantity $NNV$ of the predictive viewpoint videos by using the second algorithm satisfying a condition of the following formula:

$$NNV = \left( NNV_x + 2 \right) * \left( NNV_y + 2 \right) - 4 \; ;$$

wherein for the two-dimensional viewpoint video, the determining locations of the predictive viewpoint videos in the multi-view video according to the preset rule and according to the location of the viewpoint video to which the user currently pays attention, the first speed, and the quantity $NNV$ of the predictive viewpoint videos comprises:

using $NNV$ viewpoint videos in a rectangular area other than the fused viewpoint videos as predictive viewpoint videos, wherein the rectangular area is formed by a first side length that is the horizontal quantity $NNV_x$ of the predictive viewpoint videos plus a quantity of fused viewpoint videos in the horizontal direction, and a second side length that is the vertical quantity $NNV_y$ of the predictive viewpoint videos plus a quantity of fused viewpoint videos in the vertical direction, and if a quantity of viewpoint videos comprised in the rectangular area is less than the quantity $NNV$ of the predictive viewpoint videos, using all the viewpoint videos comprised in the rectangular area as predictive viewpoint videos;

when the second speed is less than a speed threshold in the horizontal direction, and the third speed is less than a speed threshold in the vertical direction, a geometrical center of the first rectangular area is the viewpoint video to which attention is currently paid;

when the second speed is less than a speed threshold in the horizontal direction, and the third speed is not less than a speed threshold in the vertical direction, the predictive viewpoint videos are uniformly distributed, in the horizontal direction, at the two sides neighboring to the location of the viewpoint video to which attention is currently paid, and distributed, in the vertical direction, at a location of a side that is neighboring to the viewpoint video to which attention is currently paid and that is the same as a vector direction of the third speed;

when the second speed is not less than a speed threshold in the horizontal direction, and the third speed is less than a speed threshold in the vertical direction, the predictive viewpoint videos are uniformly distributed, in the vertical direction, at the two sides neighboring to the location of the viewpoint video to which attention is currently paid, and distributed, in the horizontal direction, at a location of a side that is neighboring to the viewpoint video to which attention is currently paid and that is the same as a vector direction of the second speed;

when the second speed is not less than a speed threshold in the horizontal direction, and the third speed is not less than a speed threshold in the vertical direction, the predictive viewpoint videos are distributed, in the vertical direction, at a location of a side that is neighboring to the viewpoint video to which attention is currently paid and that is the same as a vector direction of the third speed, and distributed, in the horizontal direction, at a location of a side that is neighboring to the viewpoint video to which attention is currently paid and that is the same as a vector direction of the second speed.

2. A multi-view video transmission apparatus, comprising:

a first obtaining unit, configured to obtain a location of a viewpoint video to which a user currently pays attention in a multi-view video;

a second obtaining unit, configured to obtain a first speed at which a user viewpoint switches to the location of the viewpoint video to which attention is currently paid;

a first determining unit, configured to determine, according to the first speed obtained by the second obtaining unit and according to a preset algorithm, a quantity $NNV$ of predictive viewpoint videos that need to be downloaded before the user switches to another viewpoint;

a second determining unit, configured to determine locations of the predictive viewpoint videos in the multi-view video according to a preset rule and according to the location that is obtained by the first obtaining unit and that is of the viewpoint video to which the user currently pays attention, the first speed obtained by the second obtaining unit, and the quantity $NNV$ of the predictive viewpoint videos that is determined by the first determining unit, wherein the predictive viewpoint videos are viewpoint videos whose probability of becoming a next viewpoint video attention is to be paid satisfies a preset probability value; and

a download unit, configured to: download the predictive viewpoint videos corresponding to the locations of the predictive viewpoint videos from a server end and transmit the predictive viewpoint videos, wherein the locations are determined by the second determining unit;

wherein

the second obtaining unit is specifically configured to: in a predetermined period of time before the user viewpoint switches to the location of the viewpoint video to which attention is currently paid, collect an instantaneous speed of the user at a moment and an acceleration corresponding to the instantaneous speed at the moment; and determine the first speed according to a first rule and based on the collected instantaneous speed at the moment and the collected acceleration corresponding to the instantaneous speed at the moment;

the second obtaining unit is specifically configured to: in a predetermined period of time before the user viewpoint switches to the location of the viewpoint video to which attention is currently paid, collect instantaneous speeds of the user at multiple moments and an acceleration corresponding to an instantaneous speed at each moment; and calculate an average value of the collected instantaneous speeds at the multiple moments, calculate an average value of the multiple collected accelerations corresponding to the instantaneous speeds at the multiple moments, and determine the first speed according to a second rule and based on the average value of the instantaneous speeds at the multiple moments and the average value of the multiple accelerations; or

the second obtaining unit is specifically configured to: in a predetermined period of time before the user viewpoint switches to the location of the viewpoint video to which attention is currently paid, collect instantaneous speeds of the user at multiple moments and an acceleration corresponding to an instantaneous speed at each moment, and calculate an average value of the instantaneous speeds at the multiple moments; and select an acceleration corresponding to an instantaneous speed from the accelerations corresponding to the instantaneous speeds at the multiple moments, and determine the first speed according to a third rule and based on the average value of the instantaneous speeds at the multiple moments and the selected acceleration corresponding to the instantaneous speed;

wherein for a one-dimensional viewpoint video, the preset algorithm comprises:

$$NNV = N\frac{VT}{D};$$

wherein $NNV$ represents the quantity of the predictive viewpoint videos; $V$ represents the first speed; $N$ represents a total quantity of viewpoint videos; $D$ represents an angle covered by the $N$ viewpoint videos; and $T$ represents the duration of each viewpoint video;

wherein the second determining unit is specifically configured to:

when the first speed is less than a predetermined speed threshold, and the quantity $NNV$ of the predictive viewpoint videos is an even number, allocate $\dfrac{NNV}{2}$ viewpoint videos at each of two sides neighboring to the location of the viewpoint video to which attention is currently paid, and use the $NNV$ viewpoint videos allocated at the two sides neighboring to the location of the viewpoint video to which attention is currently paid as predictive viewpoint videos;

when the first speed is less than the predetermined speed threshold, and the quantity $NNV$ of the predictive viewpoint videos is an odd number, use $\dfrac{NNV+1}{2}$ viewpoint videos neighboring to a first side of the location of the viewpoint video to which attention is currently paid, and $\dfrac{NNV-1}{2}$ viewpoint videos neighboring to an opposite side of the location of the viewpoint video to which attention is currently paid as predictive viewpoint videos;

when the user switching speed is not less than the predetermined speed threshold, use $NNV$ viewpoint videos neighboring to a first direction side of the viewpoint video to which attention is currently paid as predictive viewpoint videos, wherein the first direction side is the same as a vector direction of the first speed; and

if a quantity of viewpoint videos at a side neighboring to the location of the viewpoint video to which attention is currently paid is less than a quantity of allocated viewpoint videos, use the quantity of all the viewpoint videos at the side neighboring to the location of the viewpoint video to which attention is currently paid as the quantity of the allocated viewpoint videos;

wherein for a two-dimensional viewpoint video, the first determining unit is specifically configured to:

decompose the first speed into a second speed $V_x$ in a horizontal direction and a third speed $V_y$ in a vertical direction;

predict a horizontal quantity $NNV_x$ of predictive viewpoint videos in the horizontal direction based on the second speed and according to a first algorithm comprised in the preset algorithm, and predict a vertical quantity $NNV_y$ of predictive viewpoint videos in the vertical direction based on the third speed and according to the first algorithm; and

determine the quantity of the predictive viewpoint videos based on a quantity of fused viewpoint videos, the horizontal quantity $NNV_x$ of the predictive viewpoint videos, and the vertical quantity $NNV_y$ of the predictive viewpoint videos and according to a second algorithm comprised in the preset algorithm, wherein

the fused viewpoint videos are viewpoint videos that are fused in the multi-view video to obtain the viewpoint video to which attention is currently paid; and,

wherein the first algorithm comprises:

$$NNV_x = N_x\frac{V_xT}{D_x};$$

wherein $N_x$ represents a total quantity of viewpoint videos in the horizontal direction; $N_y$ represents a total quantity of viewpoint videos in the vertical direction; $D_x$ represents an angle covered by the $N_x$ viewpoint videos in the horizontal direction; and $T$ represents said duration of each viewpoint video and

$$NNV_y = N_y \frac{V_y T}{D_y};$$

wherein $N_y$ represents a total quantity of viewpoint videos in the vertical direction; $D_y$ represents an angle covered by the $N_y$ viewpoint videos in the vertical direction; and $T$ represents said duration of each viewpoint video;

wherein when determining the quantity of the predictive viewpoint videos based on the quantity of the fused viewpoint videos, the horizontal quantity $NNV_x$ of the predictive viewpoint videos, and the vertical quantity $NNV_y$ of the predictive viewpoint videos and according to the second algorithm comprised in the preset algorithm, the first determining unit is specifically configured to:

if the quantity of all the fused viewpoint videos is one, obtain the quantity $NNV$ of the predictive viewpoint videos by using the second algorithm satisfying a condition of the following formula:

$$NNV = \left(NNV_x + 1\right) * \left(NNV_y + 1\right) - 1;$$

if the quantity of the fused viewpoint videos is two and the fused viewpoint videos are distributed in the horizontal direction in the multi-view video, obtain the quantity $NNV$ of the predictive viewpoint videos by using the second algorithm satisfying a condition of the following formula:

$$NNV = \left(NNV_x + 2\right) * \left(NNV_y + 1\right) - 2;$$

if the quantity of the fused viewpoint videos is two and the fused viewpoint videos are distributed in the vertical direction in the multi-view video, obtain the quantity $NNV$ of the predictive viewpoint videos by using the second algorithm satisfying a condition of the following formula:

$$NNV = \left(NNV_x + 1\right) * \left(NNV_y + 2\right) - 2;$$

or

if the quantity of the fused viewpoint videos is four and two viewpoint videos are distributed in each of the horizontal direction and the vertical direction in the multi-view video, obtain the quantity $NNV$ of the predictive viewpoint videos by using the second algorithm satisfying a condition of the following formula:

$$NNV = \left(NNV_x + 2\right) * \left(NNV_y + 2\right) - 4;$$

wherein for the two-dimensional viewpoint video, the second determining unit is specifically configured to:

use $NNV$ viewpoint videos in a rectangular area other than the fused viewpoint videos as predictive viewpoint videos, wherein the rectangular area is formed by a first side length that is the horizontal quantity $NNV_x$ of the predictive viewpoint videos plus a quantity of fused viewpoint videos in the horizontal direction, and a second side length that is the vertical quantity $NNV_y$ of the predictive viewpoint videos plus a quantity of fused viewpoint videos in the vertical direction, and if a quantity of viewpoint videos comprised in the rectangular area is less than the quantity $NNV$ of the predictive viewpoint videos, use all the viewpoint videos comprised in the rectangular area as predictive viewpoint videos;

when the second speed is less than a speed threshold in the horizontal direction, and the third speed is less than a speed threshold in the vertical direction, a geometrical center of the first rectangular area is the viewpoint video to which attention is currently paid;

when the second speed is less than a speed threshold in the horizontal direction, and the third speed is not less than a speed threshold in the vertical direction, the predictive viewpoint videos are uniformly distributed, in the horizontal direction, at the two sides neighboring to the location of the viewpoint video to which attention is currently paid, and distributed, in the vertical direction, at a location of a side that is neighboring to the viewpoint video to which attention is currently paid and that is the same as a vector direction of the third speed;

when the second speed is not less than a speed threshold in the horizontal direction, and the third speed is less than a speed threshold in the vertical direction, the predictive viewpoint videos are uniformly distributed, in the vertical direction, at the two sides neighboring to the location of the viewpoint video to which attention is currently paid, and distributed, in the horizontal direction, at a location of a side that is neighboring to the viewpoint video to which attention is currently paid and that is the same as a vector direction of the second speed;

when the second speed is not less than a speed threshold in the horizontal direction, and the third speed is not less than a speed threshold in the vertical direction, the predictive viewpoint videos are distributed, in the vertical direction, at a location of a side that is neighboring to the viewpoint video to which attention is currently paid and that is the same as a vector direction of the third speed, and distributed, in the horizontal direction, at a location of a side that is neighboring to the viewpoint video to which attention is currently paid and that is the same as a vector direction of the second speed.

**Patentansprüche**

1.  Mehrfachansichtsvideoübertragungsverfahren, umfassend:

    Erhalten einer Stelle eines Ansichtspunktvideos, dem ein Benutzer in einem Mehrfachansichtsvideo aktuell Aufmerksamkeit schenkt;
    Erhalten einer ersten Geschwindigkeit, mit der ein Benutzeransichtspunkt zur Stelle des Ansichtspunktvideos wechselt, dem aktuell Aufmerksamkeit geschenkt wird;
    Bestimmen, gemäß der ersten Geschwindigkeit und gemäß einem vorgegebenen Algorithmus, einer Menge *NNV* von prädiktiven Ansichtspunktvideos, die heruntergeladen werden müssen, bevor der Benutzer zu einem anderen Ansichtspunkt wechselt;
    Bestimmen von Stellen der prädiktiven Ansichtspunktvideos im Mehrfachansichtsvideo gemäß einer vorgegebenen Regel und gemäß der Stelle des Ansichtspunktvideos, dem der Benutzer aktuell Aufmerksamkeit schenkt, der ersten Geschwindigkeit und der Menge *NNV* der prädiktiven Ansichtspunktvideos, wobei die prädiktiven Ansichtspunktvideos Ansichtspunktvideos sind, deren Wahrscheinlichkeit, ein nächstes Ansichtspunktvideo zu werden, dem Aufmerksamkeit zu schenken ist, einen vorgegebenen Wahrscheinlichkeitswert erfüllt; und
    Herunterladen der prädiktiven Ansichtspunktvideos entsprechend den Stellen der prädiktiven Ansichtspunktvideos von einem Serverende und Übertragen der prädiktiven Ansichtspunktvideos;
    wobei das Erhalten der ersten Geschwindigkeit, mit der der Benutzeransichtspunkt wechselt, umfasst:

    in einem vorbestimmten Zeitraum, bevor der Benutzeransichtspunkt zur Stelle des Ansichtspunktvideos wechselt, dem aktuell Aufmerksamkeit geschenkt wird, wenn eine Momentangeschwindigkeit des Benutzers zu einem Zeitpunkt und eine Beschleunigung entsprechend der Momentangeschwindigkeit zu dem Zeitpunkt erfasst werden, Bestimmen der ersten Geschwindigkeit gemäß einer ersten Regel und basierend auf der Momentangeschwindigkeit zu dem Zeitpunkt und der Beschleunigung entsprechend der Momentangeschwindigkeit zu dem Zeitpunkt;
    in einem vorbestimmten Zeitraum, bevor der Benutzeransichtspunkt zur Stelle des Ansichtspunktvideos wechselt, dem aktuell Aufmerksamkeit geschenkt wird, wenn Momentangeschwindigkeiten des Benutzers zu mehreren Zeitpunkten und eine Beschleunigung entsprechend einer Momentangeschwindigkeit zu jedem Zeitpunkt erfasst werden, Berechnen eines Durchschnittswerts der Momentangeschwindigkeiten zu den mehreren Zeitpunkten und eines Durchschnittswerts der mehreren Beschleunigungen entsprechend den Momentangeschwindigkeiten zu den mehreren Zeitpunkten und Bestimmen der ersten Geschwindigkeit gemäß einer zweiten Regel und basierend auf dem Durchschnittswert der Momentangeschwindigkeiten zu den mehreren Zeitpunkten und dem Durchschnittswert der mehreren Beschleunigungen oder
    in einem vorbestimmten Zeitraum, bevor der Benutzeransichtspunkt zur Stelle des Ansichtspunktvideos wechselt, dem aktuell Aufmerksamkeit geschenkt wird, wenn Momentangeschwindigkeiten des Benutzers zu mehreren Zeitpunkten und eine Beschleunigung entsprechend einer Momentangeschwindigkeit zu jedem Zeitpunkt erfasst werden, Berechnen eines Durchschnittswerts der Momentangeschwindigkeiten zu den mehreren Zeitpunkten, Auswählen einer Beschleunigung entsprechend einer Momentangeschwindigkeit von den Beschleunigungen entsprechend den Momentangeschwindigkeiten zu den mehreren Zeitpunkten und Bestimmen der ersten Geschwindigkeit gemäß einer dritten Regel und basierend auf dem Durchschnittswert der Momentangeschwindigkeiten zu den mehreren Zeitpunkten und der ausgewählten Beschleunigung entsprechend der Momentangeschwindigkeit;

wobei der vorgegebene Algorithmus für ein eindimensionales Ansichtspunktvideo umfasst:

$$NNV = N\frac{VT}{D};$$

wobei $NNV$ für die Menge der prädiktiven Ansichtspunktvideos steht; $V$ für die erste Geschwindigkeit steht; $N$ für eine Gesamtmenge von Ansichtspunktvideos steht; D für einen Winkel steht, der durch die $N$ Ansichtspunktvideos abgedeckt wird; und $T$ für eine Dauer jedes Ansichtspunktvideos steht;

wobei für das eindimensionale Ansichtspunktvideo das Bestimmen von Stellen der prädiktiven Ansichtspunktvideos im Mehrfachansichtsvideo gemäß der vorgegebenen Regel und gemäß der Stelle des Ansichtspunktvideos, dem der Benutzer aktuell Aufmerksamkeit schenkt, der ersten Geschwindigkeit und der Menge $NNV$ der prädiktiven Ansichtspunktvideos umfasst:

wenn die erste Geschwindigkeit niedriger als eine vorbestimmte Geschwindigkeitsschwelle ist und die Menge $NNV$ der prädiktiven Ansichtspunktvideos eine gerade Zahl ist, Zuordnen von $\frac{NNV}{2}$ Ansichtspunktvideos an jeder von zwei Seiten, die an die Stelle des Ansichtspunktvideos, dem aktuell Aufmerksamkeit geschenkt wird, angrenzen, und Verwenden der $NNV$ Ansichtspunktvideos als prädiktive Ansichtspunktvideos;

wenn die erste Geschwindigkeit niedriger als eine vorbestimmte Geschwindigkeitsschwelle ist und die Menge $NNV$ der prädiktiven Ansichtspunktvideos eine ungerade Zahl ist, Verwenden von $\frac{NNV + 1}{2}$ Ansichtspunktvideos, die an eine Seite der Stelle des Ansichtspunktvideos, dem aktuell Aufmerksamkeit geschenkt wird, angrenzen, und von $\frac{NNV - 1}{2}$ Ansichtspunktvideos, die an eine gegenüberliegende Seite des Ansichtspunktvideos, dem aktuell Aufmerksamkeit geschenkt wird, angrenzen, als prädiktive Ansichtspunktvideos;

wenn die erste Geschwindigkeit nicht niedriger als die vorbestimmte Geschwindigkeitsschwelle ist, Verwenden von $NNV$ Ansichtspunktvideos, die an eine erste Richtungsseite der Stelle des Ansichtspunktvideos, dem aktuell Aufmerksamkeit geschenkt wird, angrenzen, als prädiktive Ansichtspunktvideos, wobei die erste Richtungsseite dieselbe wie eine Vektorrichtung der ersten Geschwindigkeit ist; und

wenn eine Menge von Ansichtspunktvideos an einer Seite, die an die Stelle des Ansichtspunktvideos, dem aktuell Aufmerksamkeit geschenkt wird, angrenzt, niedriger als eine Menge von zugeordneten Ansichtspunktvideos ist, Verwenden der Menge von allen Ansichtspunktvideos an der Seite, die an die Stelle des Ansichtspunktvideos, dem aktuell Aufmerksamkeit geschenkt wird, angrenzt, als die Menge der zugeordneten Ansichtspunktvideos;

wobei für ein zweidimensionales Ansichtspunktvideo das Bestimmen, gemäß der ersten Geschwindigkeit und gemäß einem vorgegebenen Algorithmus, der Menge $NNV$ von prädiktiven Ansichtspunktvideos, die heruntergeladen werden müssen, bevor der Benutzer zu einem anderen Ansichtspunkt wechselt, umfasst:

Zerlegen der ersten Geschwindigkeit in eine zweite Geschwindigkeit $V_x$ in einer horizontalen Richtung und eine dritte Geschwindigkeit $V_y$ in einer vertikalen Richtung;
Vorhersagen einer horizontalen Menge $NNV_x$ von prädiktiven Ansichtspunktvideos in der horizontalen Richtung basierend auf der zweiten Geschwindigkeit und gemäß einem ersten Algorithmus, der im vorgegebenen Algorithmus enthalten ist, und Vorhersagen einer vertikalen Menge $NNV_y$ von prädiktiven Ansichtspunktvideos in der vertikalen Richtung basierend auf der dritten Geschwindigkeit und gemäß dem ersten Algorithmus und
Bestimmen der Menge der prädiktiven Ansichtspunktvideos basierend auf einer Menge von zusammengeschlossenen Ansichtspunktvideos, der horizontalen Menge $NNV_x$ der prädiktiven Ansichtspunktvideos und der vertikalen Menge $NNV_y$ der prädiktiven Ansichtspunktvideos und gemäß einem zweiten Algorithmus, der im vorgegebenen Algorithmus enthalten ist, wobei die zusammengeschlossenen Ansichtspunktvideos Ansichtspunktvideos sind, die im Mehrfachansichtsvideo zusammengeschlossen sind, um das Ansichtspunktvideo, dem aktuell Aufmerksamkeit geschenkt wird, zu erhalten; und,
wobei der erste Algorithmus umfasst:

$$NNV_x = N_x \, \frac{V_x T}{D_x};$$

wobei $N_x$ für eine Gesamtmenge von Ansichtspunktvideos in der horizontalen Richtung steht; $D_x$ für einen Winkel steht, der durch die $N_x$ Ansichtspunktvideos in der horizontalen Richtung abgedeckt wird; und $T$ für die Dauer jedes Ansichtspunktvideos steht; und

$$NNV_y = N_y \, \frac{V_y T}{D_y};$$

wobei $N_y$ für eine Gesamtmenge von Ansichtspunktvideos in der vertikalen Richtung steht; $D_y$ für einen Winkel steht, der durch die $N_y$ Ansichtspunktvideos in der vertikalen Richtung abgedeckt wird; und $T$ für die Dauer jedes Ansichtspunktvideos steht;
wobei das Bestimmen der Menge der prädiktiven Ansichtspunktvideos basierend auf der Menge von zusammengeschlossenen Ansichtspunktvideos, der horizontalen Menge $NNV_x$ der prädiktiven Ansichtspunktvideos und der vertikalen Menge $NNV_y$ der prädiktiven Ansichtspunktvideos und gemäß einem zweiten Algorithmus, der im vorgegebenen Algorithmus enthalten ist, umfasst:

wenn die Menge der zusammengeschlossenen Ansichtspunktvideos eins ist, Erhalten der Menge $NNV$ der prädiktiven Ansichtspunktvideos durch Verwenden des zweiten Algorithmus, der eine Bedingung der folgenden Formel erfüllt:

$$NNV = (NNV_x + 1) * (NNV_y + 1) - 1;$$

wenn die Menge der zusammengeschlossenen Ansichtspunktvideos zwei ist und die zusammengeschlossenen Ansichtspunktvideos im Mehrfachansichtsvideo in der horizontalen Richtung verteilt sind, Erhalten der Menge $NNV$ der prädiktiven Ansichtspunktvideos durch Verwenden des zweiten Algorithmus, der eine Bedingung der folgenden Formel erfüllt:

$$NNV = (NNV_x + 2) * (NNV_y + 1) - 2;$$

wenn die Menge der zusammengeschlossenen Ansichtspunktvideos zwei ist und die zusammengeschlossenen Ansichtspunktvideos im Mehrfachansichtsvideo in der vertikalen Richtung verteilt sind, Erhalten der Menge $NNV$ der prädiktiven Ansichtspunktvideos durch Verwenden des zweiten Algorithmus, der eine Bedingung der folgenden Formel erfüllt:

$$NNV = (NNV_x + 1) * (NNV_y + 2) - 2 \text{ oder}$$

wenn die Menge der zusammengeschlossenen Ansichtspunktvideos vier ist und zwei Ansichtspunktvideos im Mehrfachansichtsvideo in jeder von der horizontalen Richtung und der vertikalen Richtung verteilt sind, Erhalten der Menge $NNV$ der prädiktiven Ansichtspunktvideos durch Verwenden des zweiten Algorithmus, der eine Bedingung der folgenden Formel erfüllt:

$$NNV = (NNV_x + 2) * (NNV_y + 2) - 4;$$

wobei für das zweidimensionale Ansichtspunktvideo das Bestimmen von Stellen der prädiktiven Ansichtspunktvideos im Mehrfachansichtsvideo gemäß der vorgegebenen Regel und gemäß der Stelle des Ansichtspunktvideos, dem der Benutzer aktuell Aufmerksamkeit schenkt, der ersten Geschwindigkeit und der Menge *NNV* der prädiktiven Ansichtspunktvideos umfasst:

Verwenden von *NNV* Ansichtspunktvideos in einem rechteckigen Bereich außer den zusammengeschlossenen Ansichtspunktvideos als prädiktive Ansichtspunktvideos, wobei der rechteckige Bereich durch eine erste Seitenlänge, die die horizontale Menge $NNV_x$ der prädiktiven Ansichtspunktvideos plus eine Menge von zusammengeschlossenen Ansichtspunktvideos in der horizontalen Richtung ist, und eine zweite Seitenlänge, die die vertikale Menge $NNV_y$ der prädiktiven Ansichtspunktvideos plus eine Menge von zusammengeschlossenen Ansichtspunktvideos in der vertikalen Richtung ist, gebildet ist, und wenn eine Menge von Ansichtspunktvideos, die im rechteckigen Bereich enthalten ist, niedriger als die Menge *NNV* der prädiktiven Ansichtspunktvideos ist, Verwenden aller Ansichtspunktvideos, die im rechteckigen Bereich enthalten sind, als prädiktive Ansichtspunktvideos;

wobei, wenn die zweite Geschwindigkeit niedriger als eine Geschwindigkeitsschwelle in der horizontalen Richtung ist und die dritte Geschwindigkeit niedriger als eine Geschwindigkeitsschwelle in der vertikalen Richtung ist, eine geometrische Mitte des ersten rechteckigen Bereichs das Ansichtspunktvideo, dem aktuell Aufmerksamkeit geschenkt wird, ist;

wobei, wenn die zweite Geschwindigkeit niedriger als eine Geschwindigkeitsschwelle in der horizontalen Richtung ist und die dritte Geschwindigkeit nicht niedriger als eine Geschwindigkeitsschwelle in der vertikalen Richtung ist, die prädiktiven Ansichtspunktvideos in der horizontalen Richtung an den zwei Seiten, die an die Stelle des Ansichtspunktvideos, dem aktuell Aufmerksamkeit geschenkt wird, angrenzen, gleichmäßig verteilt sind und in der vertikalen Richtung an einer Stelle einer Seite, die an das Ansichtspunktvideo, dem aktuell Aufmerksamkeit geschenkt wird, angrenzt, und die dieselbe wie eine Vektorrichtung der dritten Geschwindigkeit ist, verteilt sind; wobei, wenn die zweite Geschwindigkeit nicht niedriger als eine Geschwindigkeitsschwelle in der horizontalen Richtung ist und die dritte Geschwindigkeit niedriger als eine Geschwindigkeitsschwelle in der vertikalen Richtung ist, die prädiktiven Ansichtspunktvideos in der vertikalen Richtung an den zwei Seiten, die an die Stelle des Ansichtspunktvideos, dem aktuell Aufmerksamkeit geschenkt wird, angrenzen, gleichmäßig verteilt sind und in der horizontalen Richtung an einer Stelle einer Seite, die an das Ansichtspunktvideo, dem aktuell Aufmerksamkeit geschenkt wird, angrenzt, und die dieselbe wie eine Vektorrichtung der zweiten Geschwindigkeit ist, verteilt sind;

wobei, wenn die zweite Geschwindigkeit nicht niedriger als eine Geschwindigkeitsschwelle in der horizontalen Richtung ist und die dritte Geschwindigkeit nicht niedriger als eine Geschwindigkeitsschwelle in der vertikalen Richtung ist, die prädiktiven Ansichtspunktvideos in der vertikalen Richtung an einer Stelle einer Seite, die an das Ansichtspunktvideo, dem aktuell Aufmerksamkeit geschenkt wird, angrenzt, und die dieselbe wie eine Vektorrichtung der dritten Geschwindigkeit ist, verteilt sind und in der horizontalen Richtung an einer Stelle einer Seite, die an das Ansichtspunktvideo, dem aktuell Aufmerksamkeit geschenkt wird, angrenzt, und die dieselbe wie eine Vektorrichtung der zweiten Geschwindigkeit ist, verteilt sind.

2. Mehrfachansichtsvideoübertragungseinrichtung, umfassend:

eine erste Erhaltungseinheit, die zum Erhalten einer Stelle eines Ansichtspunktvideos, dem ein Benutzer in einem Mehrfachansichtsvideo aktuell Aufmerksamkeit schenkt, ausgelegt ist;
eine zweite Erhaltungseinheit, die zum Erhalten einer ersten Geschwindigkeit, mit der ein Benutzeransichtspunkt zur Stelle des Ansichtspunktvideos wechselt, dem aktuell Aufmerksamkeit geschenkt wird, ausgelegt ist;
eine erste Bestimmungseinheit, die zum Bestimmen, gemäß der ersten Geschwindigkeit, die durch die zweite Erhaltungseinheit erhalten wird, und gemäß einem vorgegebenen Algorithmus, einer Menge *NNV* von prädiktiven Ansichtspunktvideos, die heruntergeladen werden müssen, bevor der Benutzer zu einem anderen Ansichtspunkt wechselt, ausgelegt ist;
eine zweite Bestimmungseinheit, die zum Bestimmen von Stellen der prädiktiven Ansichtspunktvideos im Mehrfachansichtsvideo gemäß einer vorgegebenen Regel und gemäß der Stelle, die durch die erste Erhaltungseinheit erhalten wird und die von dem Ansichtspunktvideo, dem der Benutzer aktuell Aufmerksamkeit schenkt, ist, der ersten Geschwindigkeit, die durch die zweite Erhaltungseinheit erhalten wird, und der Menge *NNV* der prädiktiven Ansichtspunktvideos, die durch die erste Bestimmungseinheit bestimmt wird, wobei die prädiktiven Ansichtspunktvideos Ansichtspunktvideos sind, deren Wahrscheinlichkeit, ein nächstes Ansichtspunktvideo zu werden, dem Aufmerksamkeit zu schenken ist, einen vorgegebenen Wahrscheinlichkeitswert erfüllt, ausgelegt ist; und

eine Herunterladeeinheit, ausgelegt zum: Herunterladen der prädiktiven Ansichtspunktvideos entsprechend den Stellen der prädiktiven Ansichtspunktvideos von einem Serverende und Übertragen der prädiktiven Ansichtspunktvideos, wobei die Stellen durch die zweite Bestimmungseinheit bestimmt werden;
wobei

die zweite Erhaltungseinheit insbesondere ausgelegt ist zum: in einem vorbestimmten Zeitraum, bevor der Benutzeransichtspunkt zur Stelle des Ansichtspunktvideos wechselt, dem aktuell Aufmerksamkeit geschenkt wird, Erfassen einer Momentangeschwindigkeit des Benutzers zu einem Zeitpunkt und einer Beschleunigung entsprechend der Momentangeschwindigkeit zu dem Zeitpunkt und Bestimmen der ersten Geschwindigkeit gemäß einer ersten Regel und basierend auf der erfassten Momentangeschwindigkeit zu dem Zeitpunkt und der erfassten Beschleunigung entsprechend der Momentangeschwindigkeit zu dem Zeitpunkt;

die zweite Erhaltungseinheit insbesondere ausgelegt ist zum: in einem vorbestimmten Zeitraum, bevor der Benutzeransichtspunkt zur Stelle des Ansichtspunktvideos wechselt, dem aktuell Aufmerksamkeit geschenkt wird, Erfassen von Momentangeschwindigkeiten des Benutzers zu mehreren Zeitpunkten und einer Beschleunigung entsprechend einer Momentangeschwindigkeit zu jedem Zeitpunkt und Berechnen eines Durchschnittswerts der erfassten Momentangeschwindigkeiten zu den mehreren Zeitpunkten und Berechnen eines Durchschnittswerts der mehreren erfassten Beschleunigungen entsprechend den Momentangeschwindigkeiten zu den mehreren Zeitpunkten und Bestimmen der ersten Geschwindigkeit gemäß einer zweiten Regel und basierend auf dem Durchschnittswert der Momentangeschwindigkeiten zu den mehreren Zeitpunkten und dem Durchschnittswert der mehreren Beschleunigungen; oder

die zweite Erhaltungseinheit insbesondere ausgelegt ist zum: in einem vorbestimmten Zeitraum, bevor der Benutzeransichtspunkt zur Stelle des Ansichtspunktvideos wechselt, dem aktuell Aufmerksamkeit geschenkt wird, Erfassen von Momentangeschwindigkeiten des Benutzers zu mehreren Zeitpunkten und einer Beschleunigung entsprechend einer Momentangeschwindigkeit zu jedem Zeitpunkt und Berechnen eines Durchschnittswerts der Momentangeschwindigkeiten zu den mehreren Zeitpunkten und Auswählen einer Beschleunigung entsprechend einer Momentangeschwindigkeit von den Beschleunigungen entsprechend den Momentangeschwindigkeiten zu den mehreren Zeitpunkten und Bestimmen der ersten Geschwindigkeit gemäß einer dritten Regel und basierend auf dem Durchschnittswert der Momentangeschwindigkeiten zu den mehreren Zeitpunkten und der ausgewählten Beschleunigung entsprechend der Momentangeschwindigkeit;
wobei der vorgegebene Algorithmus für ein eindimensionales Ansichtspunktvideo umfasst:

$$NNV = N\frac{VT}{D} \; ;$$

wobei *NNV* für die Menge der prädiktiven Ansichtspunktvideos steht; *V* für die erste Geschwindigkeit steht; *N* für eine Gesamtmenge von Ansichtspunktvideos steht; *D* für einen Winkel steht, der durch die *N* Ansichtspunktvideos abgedeckt wird; und *T* für die Dauer jedes Ansichtspunktvideos steht;
wobei die zweite Bestimmungseinheit insbesondere ausgelegt ist zum:

wenn die erste Geschwindigkeit niedriger als eine vorbestimmte Geschwindigkeitsschwelle ist und die Menge *NNV* der prädiktiven Ansichtspunktvideos eine gerade Zahl ist, Zuordnen von $\frac{NNV}{2}$ Ansichtspunktvideos an jeder von zwei Seiten, die an die Stelle des Ansichtspunktvideos, dem aktuell Aufmerksamkeit geschenkt wird, angrenzen, und Verwenden der *NNV* Ansichtspunktvideos, die an den zwei Seiten, die an die Stelle des Ansichtspunktvideos, dem aktuell Aufmerksamkeit geschenkt wird, angrenzen, zugeordnet sind, als prädiktive Ansichtspunktvideos;

wenn die erste Geschwindigkeit niedriger als die vorbestimmte Geschwindigkeitsschwelle ist und die Menge *NNV* der prädiktiven Ansichtspunktvideos eine ungerade Zahl ist, Verwenden von $\frac{NNV+1}{2}$ Ansichtspunktvideos, die an eine erste Seite der Stelle des Ansichtspunktvideos, dem aktuell Aufmerksamkeit geschenkt wird, angrenzen, und von $\dfrac{NNV-1}{2}$ Ansichtspunktvideos, die an eine gegenüberliegende Seite der Stelle des Ansichtspunktvideos, dem aktuell Aufmerksamkeit geschenkt wird, angrenzen, als prädiktive Ansichtspunktvideos;

wenn die Benutzerwechselgeschwindigkeit nicht niedriger als die vorbestimmte Geschwindigkeitsschwelle ist, Verwenden von *NNV* Ansichtspunktvideos, die an eine erste Richtungsseite des Ansichtspunktvideos, dem aktuell Aufmerksamkeit geschenkt wird, angrenzen, als prädiktive Ansichtspunktvideos, wobei die erste Richtungsseite dieselbe wie eine Vektorrichtung der ersten Geschwindigkeit ist; und

wenn eine Menge von Ansichtspunktvideos an einer Seite, die an die Stelle des Ansichtspunktvideos, dem aktuell Aufmerksamkeit geschenkt wird, angrenzt, niedriger als eine Menge von zugeordneten Ansichtspunktvideos ist, Verwenden der Menge von allen Ansichtspunktvideos an der Seite, die an die Stelle des Ansichtspunktvideos, dem aktuell Aufmerksamkeit geschenkt wird, angrenzt, als die Menge der zugeordneten Ansichtspunktvideos;

wobei für ein zweidimensionales Ansichtspunktvideo die erste Bestimmungseinheit insbesondere ausgelegt ist zum:

Zerlegen der ersten Geschwindigkeit in eine zweite Geschwindigkeit $V_x$ in einer horizontalen Richtung und eine dritte Geschwindigkeit $V_y$ in einer vertikalen Richtung; Vorhersagen einer horizontalen Menge $NNV_x$ von prädiktiven Ansichtspunktvideos in der horizontalen Richtung basierend auf der zweiten Geschwindigkeit und gemäß einem ersten Algorithmus, der im vorgegebenen Algorithmus enthalten ist, und Vorhersagen einer vertikalen Menge $NNV_y$ von prädiktiven Ansichtspunktvideos in der vertikalen Richtung basierend auf der dritten Geschwindigkeit und gemäß dem ersten Algorithmus und

Bestimmen der Menge der prädiktiven Ansichtspunktvideos basierend auf einer Menge von zusammengeschlossenen Ansichtspunktvideos, der horizontalen Menge $NNV_x$ der prädiktiven Ansichtspunktvideos und der vertikalen Menge $NNV_y$ der prädiktiven Ansichtspunktvideos und gemäß einem zweiten Algorithmus, der im vorgegebenen Algorithmus enthalten ist, wobei

die zusammengeschlossenen Ansichtspunktvideos Ansichtspunktvideos sind, die im Mehrfachansichtsvideo zusammengeschlossen sind, um das Ansichtspunktvideo, dem aktuell Aufmerksamkeit geschenkt wird, zu erhalten; und,

wobei der erste Algorithmus umfasst:

$$NNV_x = N_x \, \frac{V_x T}{D_x};$$

wobei $N_x$ für eine Gesamtmenge von Ansichtspunktvideos in der horizontalen Richtung steht; $N_y$ für eine Gesamtmenge von Ansichtspunktvideos in der vertikalen Richtung steht; $D_x$ für einen Winkel steht, der durch die $N_x$ Ansichtspunktvideos in der horizontalen Richtung abgedeckt wird; und $T$ für die Dauer jedes Ansichtspunktvideos steht und

$$NNV_y = N_y \, \frac{V_y T}{D_y};$$

wobei $N_y$ für eine Gesamtmenge von Ansichtspunktvideos in der vertikalen Richtung steht; $D_y$ für einen Winkel steht, der durch die $N_y$ Ansichtspunktvideos in der vertikalen Richtung abgedeckt wird; und $T$ für die Dauer jedes Ansichtspunktvideos steht;

wobei beim Bestimmen der Menge der prädiktiven Ansichtspunktvideos basierend auf der Menge der zusammengeschlossenen Ansichtspunktvideos, der horizontalen Menge $NNV_x$ der prädiktiven Ansichtspunktvideos und der vertikalen Menge $NNV_y$ der prädiktiven Ansichtspunktvideos und gemäß dem zweiten Algorithmus, der im vorgegebenen Algorithmus enthalten ist, die erste Bestimmungseinheit insbesondere ausgelegt ist zum:

wenn die Menge aller zusammengeschlossenen Ansichtspunktvideos eins ist, Erhalten der Menge *NNV* der prädiktiven Ansichtspunktvideos durch Verwenden des zweiten Algorithmus, der eine Bedingung der folgenden Formel erfüllt:

$$NNV = (NNV_x + 1) * (NNV_y + 1) - 1;$$

wenn die Menge der zusammengeschlossenen Ansichtspunktvideos zwei ist und die zusammengeschlossenen Ansichtspunktvideos im Mehrfachansichtsvideo in der horizontalen Richtung verteilt sind, Erhalten der Menge *NNV* der prädiktiven Ansichtspunktvideos durch Verwenden des zweiten Algorithmus, der eine Bedingung der folgenden Formel erfüllt:

$$NNV = (NNV_x + 2) * (NNV_y + 1) - 2;$$

wenn die Menge der zusammengeschlossenen Ansichtspunktvideos zwei ist und die zusammengeschlossenen Ansichtspunktvideos im Mehrfachansichtsvideo in der vertikalen Richtung verteilt sind, Erhalten der Menge *NNV* der prädiktiven Ansichtspunktvideos durch Verwenden des zweiten Algorithmus, der eine Bedingung der folgenden Formel erfüllt:

$$NNV = (NNV_x + 1) * (NNV_y + 2) - 2 \text{ oder}$$

wenn die Menge der zusammengeschlossenen Ansichtspunktvideos vier ist und zwei Ansichtspunktvideos im Mehrfachansichtsvideo in jeder von der horizontalen Richtung und der vertikalen Richtung verteilt sind, Erhalten der Menge *NNV* der prädiktiven Ansichtspunktvideos durch Verwenden des zweiten Algorithmus, der eine Bedingung der folgenden Formel erfüllt:

$$NNV = (NNV_x + 2) * (NNV_y + 2) - 4;$$

wobei für das zweidimensionale Ansichtspunktvideo die zweite Bestimmungseinheit insbesondere ausgelegt ist zum:

Verwenden von *NNV* Ansichtspunktvideos in einem rechteckigen Bereich außer den zusammengeschlossenen Ansichtspunktvideos als prädiktive Ansichtspunktvideos, wobei der rechteckige Bereich durch eine erste Seitenlänge, die die horizontale Menge $NNV_x$ der prädiktiven Ansichtspunktvideos plus eine Menge von zusammengeschlossenen Ansichtspunktvideos in der horizontalen Richtung ist, und eine zweite Seitenlänge, die die vertikale Menge $NNV_y$ der prädiktiven Ansichtspunktvideos plus eine Menge von zusammengeschlossenen Ansichtspunktvideos in der vertikalen Richtung ist, gebildet ist, und wenn eine Menge von Ansichtspunktvideos, die im rechteckigen Bereich enthalten ist, niedriger als die Menge *NNV* der prädiktiven Ansichtspunktvideos ist, Verwenden aller Ansichtspunktvideos, die im rechteckigen Bereich enthalten sind, als prädiktive Ansichtspunktvideos;
wobei, wenn die zweite Geschwindigkeit niedriger als eine Geschwindigkeitsschwelle in der horizontalen Richtung ist und die dritte Geschwindigkeit niedriger als eine Geschwindigkeitsschwelle in der vertikalen Richtung ist, eine geometrische Mitte des ersten rechteckigen Bereichs das Ansichtspunktvideo, dem aktuell Aufmerksamkeit geschenkt wird, ist;
wobei, wenn die zweite Geschwindigkeit niedriger als eine Geschwindigkeitsschwelle in der horizontalen Richtung ist und die dritte Geschwindigkeit nicht niedriger als eine Geschwindigkeitsschwelle in der vertikalen Richtung ist, die prädiktiven Ansichtspunktvideos in der horizontalen Richtung an den zwei Seiten, die an die Stelle des Ansichtspunktvideos, dem aktuell Aufmerksamkeit geschenkt wird, angrenzen, gleichmäßig verteilt sind und in der vertikalen Richtung an einer Stelle einer Seite, die an das Ansichtspunktvideo, dem aktuell Aufmerksamkeit geschenkt wird, angrenzt, und die dieselbe wie eine Vektorrichtung der dritten Geschwindigkeit ist, verteilt sind; wobei, wenn die zweite Geschwindigkeit nicht niedriger als eine Geschwindigkeitsschwelle in der horizontalen Richtung ist und die dritte Geschwindigkeit niedriger als eine Geschwindigkeitsschwelle in der vertikalen Richtung ist, die prädiktiven Ansichtspunktvideos in der vertikalen Richtung an den zwei Seiten, die an die Stelle des Ansichtspunktvideos, dem aktuell Aufmerksamkeit geschenkt wird, angrenzen, gleichmäßig verteilt sind und in der horizontalen Richtung an einer Stelle einer Seite, die an das Ansichtspunktvideo, dem aktuell Aufmerksamkeit geschenkt wird, angrenzt, und die dieselbe wie eine Vektorrichtung der zweiten Geschwindigkeit ist, verteilt sind;

wobei, wenn die zweite Geschwindigkeit nicht niedriger als eine Geschwindigkeitsschwelle in der horizontalen Richtung ist und die dritte Geschwindigkeit nicht niedriger als eine Geschwindigkeitsschwelle in der vertikalen Richtung ist, die prädiktiven Ansichtspunktvideos in der vertikalen Richtung an einer Stelle einer Seite, die an das Ansichtspunktvideo, dem aktuell Aufmerksamkeit geschenkt wird, angrenzt, und die dieselbe wie eine Vektorrichtung der dritten Geschwindigkeit ist, verteilt sind und in der horizontalen Richtung an einer Stelle einer Seite, die an das Ansichtspunktvideo, dem aktuell Aufmerksamkeit geschenkt wird, angrenzt und die dieselbe wie eine Vektorrichtung der zweiten Geschwindigkeit ist, verteilt sind.

**Revendications**

1. Procédé de transmission vidéo multivues, comprenant :

l'obtention d'un emplacement d'une vidéo de point de vue sur laquelle un utilisateur porte actuellement son attention dans une vidéo multivues ;
l'obtention d'une première vitesse à laquelle un point de vue d'utilisateur bascule vers l'emplacement de la vidéo de point de vue sur laquelle l'attention est actuellement portée ;
la détermination, en fonction de la première vitesse et en fonction d'un algorithme prédéfini, d'une quantité *NNV* de vidéos de point de vue prédictives qui doivent être téléchargées avant que l'utilisateur bascule vers un autre point de vue ;
la détermination d'emplacements des vidéos de point de vue prédictives dans la vidéo multivues en fonction d'une règle prédéfinie et en fonction de l'emplacement de la vidéo de point de vue sur laquelle l'utilisateur porte actuellement son attention, de la première vitesse et de la quantité *NNV* des vidéos de point de vue prédictives, les vidéos de point de vue prédictives étant des vidéos de point de vue dont la probabilité de devenir une vidéo de point de vue ultérieure sur laquelle l'attention sera portée satisfait à une valeur de probabilité prédéfinie ; et
le téléchargement des vidéos de point de vue prédictives correspondant aux emplacements des vidéos de point de vue prédictives à partir d'une extrémité de serveur et la transmission des vidéos de point de vue prédictives ;
dans lequel l'obtention de la première vitesse à laquelle le point de vue de l'utilisateur bascule comprend :

dans une période temporelle prédéterminée avant que le point de vue de l'utilisateur bascule vers l'emplacement de la vidéo de point de vue sur laquelle l'attention est actuellement portée, quand une vitesse instantanée de l'utilisateur à un moment donné et une accélération correspondant à la vitesse instantanée à ce moment sont collectées, la détermination de la première vitesse en fonction d'une première règle et sur la base de la vitesse instantanée au moment donné et de l'accélération correspondant à la vitesse instantanée à ce moment ;
dans une période temporelle prédéterminée avant que le point de vue de l'utilisateur bascule vers l'emplacement de la vidéo de point de vue sur laquelle l'attention est actuellement portée, quand des vitesses instantanées de l'utilisateur à plusieurs moments et une accélération correspondant à une vitesse instantanée à chaque moment sont collectées, le calcul d'une valeur moyenne des vitesses instantanées aux multiples moments, et d'une valeur moyenne des multiples accélérations correspondant aux vitesses instantanées aux multiples moments, et la détermination de la première vitesse en fonction d'une deuxième règle et sur la base de la valeur moyenne des vitesses instantanées aux multiples moments et de la valeur moyenne des multiples accélérations ; ou
dans une période temporelle prédéterminée avant que le point de vue de l'utilisateur bascule vers l'emplacement de la vidéo de point de vue sur laquelle l'attention est actuellement portée, quand des vitesses instantanées de l'utilisateur à plusieurs moments et une accélération correspondant à une vitesse instantanée à chaque moment sont collectées, le calcul d'une valeur moyenne des vitesses instantanées aux multiples moments, la sélection d'une accélération correspondant à une vitesse instantanée parmi les accélérations correspondant aux vitesses instantanées aux multiples moments, et la détermination de la première vitesse en fonction d'une troisième règle et sur la base de la valeur moyenne des vitesses instantanées aux multiples moments et de l'accélération sélectionnée correspondant à la vitesse instantanée ;
dans lequel, pour une vidéo à point de vue unidimensionnel, l'algorithme prédéfini comprend :

$$NNV = N\frac{VT}{D};$$

dans laquelle *NNV* représente la quantité des vidéos de point de vue prédictives ; *V* représente la première vitesse ; *N* représente une quantité totale de vidéos de point de vue ; *D* représente un angle couvert par les *N* vidéos de point de vue ; et *T* représente une durée de chaque vidéo de point de vue ;

dans lequel, pour la vidéo de point de vue unidimensionnel, la détermination d'emplacements des vidéos de point de vue prédictives dans la vidéo multivues en fonction de la règle prédéfinie et en fonction de l'emplacement de la vidéo de point de vue sur laquelle l'utilisateur porte actuellement son attention, de la première vitesse et de la quantité *NNV* des vidéos de point de vue prédictives comprend :

quand la première vitesse est inférieure à un seuil de vitesse prédéfini, et que la quantité *NNV* des vidéos de point de vue prédictives est un nombre pair, l'attribution de $\frac{NNV}{2}$ vidéos de point de vue au niveau de chacun de deux côtés voisins de l'emplacement de la vidéo de point de vue sur laquelle l'attention est actuellement portée et l'utilisation des *NNV* vidéos de point de vue en tant que vidéos de point de vue prédictives ;

quand la première vitesse est inférieure à un seuil de vitesse prédéfini, et que la quantité *NNV* des vidéos de point de vue prédictives est un nombre impair, l'utilisation de $\frac{NNV+1}{2}$ vidéos de point de vue voisines d'un côté de l'emplacement de la vidéo de point de vue sur laquelle l'attention est actuellement portée, et de $\frac{NNV-1}{2}$ vidéos de point de vue voisines d'un côté opposé de la vidéo de point de vue sur laquelle l'attention est actuellement portée en tant que vidéos de point de vue prédictives ;

quand la première vitesse est supérieure ou égale au seuil de vitesse prédéfini, l'utilisation de *NNV* vidéos de point de vue voisines d'un premier côté de direction de l'emplacement de la vidéo de point de vue sur laquelle l'attention est actuellement portée en tant que vidéos de point de vue prédictives, le premier côté de direction étant le même qu'une direction vectorielle de la première vitesse ; et si une quantité de vidéos de point de vue au niveau d'un côté voisin de l'emplacement de la vidéo de point de vue sur laquelle l'attention est actuellement portée est inférieure à une quantité de vidéos de point de vue attribuées, l'utilisation de la quantité de toutes les vidéos de point de vue au niveau du côté voisin de l'emplacement de la vidéo de point de vue sur laquelle l'attention est actuellement portée en tant que la quantité des vidéos de point de vue attribuées ;

dans lequel, pour une vidéo de point de vue bidimensionnel, la détermination, en fonction de la première vitesse et en fonction d'un algorithme prédéfini, de la quantité *NNV* de vidéos de point de vue prédictives qui doivent être téléchargées avant que l'utilisateur bascule vers un autre point de vue comprend :

la décomposition de la première vitesse en une deuxième vitesse $V_x$ dans une direction horizontale et une troisième vitesse $V_y$ dans une direction verticale ;

la prédiction d'une quantité horizontale $NNV_x$ de vidéos de point de vue prédictives dans la direction horizontale sur la base de la deuxième vitesse et en fonction d'un premier algorithme compris dans l'algorithme prédéfini, et la prédiction d'une quantité verticale $NNV_y$ de vidéos de point de vue prédictives dans la direction verticale sur la base de la troisième vitesse et en fonction du premier algorithme ; et la détermination de la quantité des vidéos de point de vue prédictives sur la base d'une quantité de vidéos de point de vue fusionnées, de la quantité horizontale $NNV_x$ des vidéos de point de vue prédictives, et de la quantité verticale $NNV_y$ des vidéos de point de vue prédictives et en fonction d'un second algorithme compris dans l'algorithme prédéfini, dans lequel

les vidéos de point de vue fusionnées sont des vidéos de point de vue qui sont fusionnées dans la vidéo multivues pour obtenir la vidéo de point de vue sur laquelle l'attention est actuellement portée ; et, dans lequel le premier algorithme comprend :

$$NNV_x = N_x \frac{V_x T}{D_x} \, ;$$

dans laquelle $N_x$ représente une quantité totale de vidéos de point de vue dans la direction horizontale ; $D_x$ représente un angle couvert par les $N_x$ vidéos de point de vue dans la direction horizontale ; et *T* représente ladite durée de chaque vidéo de point de vue ; et

$$NNV_y = N_y \frac{V_y T}{D_y} \; ;$$

dans laquelle $N_y$ représente une quantité totale de vidéos de point de vue dans la direction verticale ; $D_y$ représente un angle couvert par les $N_y$ vidéos de point de vue dans la direction verticale ; et $T$ représente ladite durée de chaque vidéo de point de vue ;

dans lequel la détermination de la quantité des vidéos de point de vue prédictives sur la base de la quantité de vidéos de point de vue fusionnées, de la quantité horizontale $NNV_x$ des vidéos de point de vue prédictives, et de la quantité verticale $NNV_y$ des vidéos de point de vue prédictives et en fonction d'un second algorithme compris dans l'algorithme prédéfini comprend :

si la quantité des vidéos de point de vue fusionnées est de un, l'obtention de la quantité $NNV$ des vidéos de point de vue prédictives en utilisant le second algorithme satisfaisant à une condition de la formule suivante :

$$NNV = (NNV_x + 1)*(NNV_y + 1) - 1 \; ;$$

si la quantité des vidéos de point de vue fusionnées est de deux et que les vidéos de point de vue fusionnées sont réparties dans la direction horizontale dans la vidéo multivues, l'obtention de la quantité $NNV$ des vidéos de point de vue prédictives en utilisant le second algorithme satisfaisant à une condition de la formule suivante :

$$NNV = (NNV_x + 2)*(NNV_y + 1) - 2 \; ;$$

si la quantité des vidéos de point de vue fusionnées est de deux et que les vidéos de point de vue fusionnées sont réparties dans la direction verticale dans la vidéo multivues, l'obtention de la quantité $NNV$ des vidéos de point de vue prédictives en utilisant le second algorithme satisfaisant à une condition de la formule suivante :

$$NNV = (NNV_x + 1)*(NNV_y + 2) - 2 \; ; \text{ ou}$$

si la quantité des vidéos de point de vue fusionnées est de quatre et que deux vidéos de point de vue fusionnées sont réparties dans chacune de la direction horizontale et de la direction verticale dans la vidéo multivues, l'obtention de la quantité $NNV$ des vidéos de point de vue prédictives en utilisant le second algorithme satisfaisant à une condition de la formule suivante :

$$NNV = (NNV_x + 2)*(NNV_y + 2) - 4 \; ;$$

dans lequel, pour la vidéo de point de vue bidimensionnel, la détermination d'emplacements des vidéos de point de vue prédictives dans la vidéo multivues en fonction de la règle prédéfinie et en fonction de l'emplacement de la vidéo de point de vue sur laquelle l'utilisateur porte actuellement son attention, de la première vitesse et de la quantité $NNV$ des vidéos de point de vue prédictives comprend :

l'utilisation de $NNV$ vidéos de point de vue dans une zone rectangulaire autres que les vidéos de point de vue fusionnées en tant que vidéos de point de vue prédictives, la zone rectangulaire étant formée par une première longueur de côté qui est la quantité horizontale $NNV_x$ des vidéos de point de vue prédictives plus une quantité de vidéos de point de vue fusionnées dans la direction horizontale, et une seconde longueur de côté qui est la quantité verticale $NNV_y$ des vidéos de point de vue prédictives plus une quantité de vidéos de point de vue fusionnées dans la direction verticale, et si une quantité de vidéos de point de vue comprises dans la zone rectangulaire est inférieure à la quantité $NNV$ de vidéos de point de vue prédictives, l'utilisation de toutes les vidéos de point de vue comprises dans la zone rectangulaire en tant que vidéos de point de vue prédictives ;

quand la deuxième vitesse est inférieure à un seuil de vitesse dans la direction horizontale, et que la troisième vitesse est inférieure à un seuil de vitesse dans la direction verticale, un centre géométrique de la première zone rectangulaire est la vidéo de point de vue sur laquelle l'attention est actuellement portée ;

quand la deuxième vitesse est inférieure à un seuil de vitesse dans la direction horizontale, et que la troisième vitesse est supérieure ou égale à un seuil de vitesse dans la direction verticale, les vidéos de point de vue prédictives sont uniformément réparties, dans la direction horizontale, au niveau des deux côtés voisins de l'emplacement de la vidéo de point de vue sur laquelle l'attention est actuellement portée, et réparties, dans la direction verticale, au niveau d'un emplacement d'un côté qui est voisin de la vidéo de point de vue sur laquelle l'attention est actuellement portée et qui est le même qu'une direction vectorielle de la troisième vitesse ;

quand la deuxième vitesse est supérieure ou égale à un seuil de vitesse dans la direction horizontale, et que la troisième vitesse est inférieure à un seuil de vitesse dans la direction verticale, les vidéos de point de vue prédictives sont uniformément réparties, dans la direction verticale, au niveau des deux côtés voisins de l'emplacement de la vidéo de point de vue sur laquelle l'attention est actuellement portée, et réparties, dans la direction horizontale, au niveau d'un emplacement d'un côté qui est voisin de la vidéo de point de vue sur laquelle l'attention est actuellement portée et qui est le même qu'une direction vectorielle de la deuxième vitesse ;

quand la deuxième vitesse est supérieure ou égale à un seuil de vitesse dans la direction horizontale, et que la troisième vitesse est supérieure ou égale à un seuil de vitesse dans la direction verticale, les vidéos de point de vue prédictives sont réparties, dans la direction verticale, au niveau d'un emplacement d'un côté qui est voisin de la vidéo de point de vue sur laquelle l'attention est actuellement portée et qui est le même qu'une direction vectorielle de la troisième vitesse, et réparties, dans la direction horizontale, au niveau d'un emplacement d'un côté qui est voisin de la vidéo de point de vue sur laquelle l'attention est actuellement portée et qui est le même qu'une direction vectorielle de la deuxième vitesse.

2. Appareil de transmission vidéo multivues, comprenant :

une première unité d'obtention, configurée pour obtenir un emplacement d'une vidéo de point de vue sur laquelle un utilisateur porte actuellement son attention dans une vidéo multivues ;

une seconde unité d'obtention, configurée pour obtenir une première vitesse à laquelle un point de vue d'utilisateur bascule vers l'emplacement de la vidéo de point de vue sur laquelle l'attention est actuellement portée ;

une première unité de détermination, configurée pour déterminer, en fonction de la première vitesse obtenue par la seconde unité d'obtention et en fonction d'un algorithme prédéfini, une quantité *NNV* de vidéos de point de vue prédictives qui doivent être téléchargées avant que l'utilisateur bascule vers un autre point de vue ;

une seconde unité de détermination, configurée pour déterminer des emplacements des vidéos de point de vue prédictives dans la vidéo multivues en fonction d'une règle prédéfinie et en fonction de l'emplacement qui est obtenu par la première unité d'obtention et qui est de la vidéo de point de vue sur laquelle l'utilisateur porte actuellement son attention, de la première vitesse obtenue par la seconde unité d'obtention et de la quantité *NNV* des vidéos de point de vue prédictives qui est déterminée par la première unité de détermination, dans lequel les vidéos de point de vue prédictives sont des vidéos de point de vue dont la probabilité de devenir une vidéo de point de vue ultérieure sur laquelle il faut porter son attention satisfait à une valeur de probabilité prédéfinie ; et

une unité de téléchargement, configurée pour : télécharger les vidéos de point de vue prédictives correspondant aux emplacements des vidéos de point de vue prédictives à partir d'une extrémité de serveur et transmettre les vidéos de point de vue prédictives, les emplacements étant déterminés par la seconde unité de détermination ;

dans lequel

la seconde unité d'obtention est plus particulièrement configurée pour : dans une période temporelle prédéterminée avant que le point de vue de l'utilisateur bascule vers l'emplacement de la vidéo de point de vue sur laquelle l'attention est actuellement portée, collecter une vitesse instantanée de l'utilisateur à un moment donné et une accélération correspondant à la vitesse instantanée à ce moment ; et déterminer la première vitesse en fonction d'une première règle et sur la base de la vitesse instantanée collectée à ce moment et de l'accélération collectée correspondant à la vitesse instantanée ce moment ;

la seconde unité d'obtention est plus particulièrement configurée pour : dans une période temporelle prédéterminée avant que le point de vue de l'utilisateur bascule vers l'emplacement de la vidéo de point de vue sur laquelle l'attention est actuellement portée, collecter des vitesses instantanées de l'utilisateur à plusieurs moments et une accélération correspondant à une vitesse instantanée à chaque moment ; et calculer une valeur moyenne des vitesses instantanées collectées aux multiples moments, calculer une valeur moyenne des multiples accélérations collectées correspondant aux vitesses instantanées aux multiples moments, et déterminer la première vitesse en fonction d'une deuxième règle et sur la base de la valeur moyenne des vitesses instantanées aux multiples moments et de la valeur moyenne des multiples accélérations ; ou

la seconde unité d'obtention est plus particulièrement configurée pour : dans une période temporelle prédéterminée avant que le point de vue de l'utilisateur bascule vers l'emplacement de la vidéo de point de vue sur laquelle l'attention est actuellement portée, collecter des vitesses instantanées de l'utilisateur à plusieurs moments et une accélération correspondant à une vitesse instantanée à chaque moment, et calculer une valeur moyenne des vitesses instantanées aux multiples moments ; et sélectionner une accélération correspondant à une vitesse instantanée parmi les accélérations correspondant aux vitesses instantanées aux multiples moments, et déterminer la première vitesse en fonction d'une troisième règle et sur la base de la valeur moyenne des vitesses instantanées aux multiples moments et de l'accélération sélectionnée correspondant à la vitesse instantanée ;

dans lequel, pour une vidéo à point de vue unidimensionnel, l'algorithme prédéfini comprend :

$$NNV = N\frac{VT}{D};$$

dans laquelle *NNV* représente la quantité des vidéos de point de vue prédictives ; *V* représente la première vitesse ; *N* représente une quantité totale de vidéos de point de vue ; *D* représente un angle couvert par les *N* vidéos de point de vue ; et *T* représente la durée de chaque vidéo de point de vue ;

dans lequel la seconde unité de détermination est particulièrement configurée pour :

quand la première vitesse est inférieure à un seuil de vitesse prédéfini, et que la quantité *NNV* des vidéos de point de vue prédictives est un nombre pair, attribuer $\frac{NNV}{2}$ vidéos de point de vue au niveau de chacun de deux côtés voisins de l'emplacement de la vidéo de point de vue sur laquelle l'attention est actuellement portée, et utiliser les *NNV* vidéos de point de vue attribuées au niveau des deux côtés voisins de l'emplacement de la vidéo de point de vue sur laquelle l'attention est actuellement portée en tant que vidéos de point de vue prédictives ;

quand la première vitesse est inférieure au seuil de vitesse prédéfini, et que la quantité *NNV* des vidéos de point de vue prédictives est un nombre impair, utiliser $\frac{NNV+1}{2}$ vidéos de point de vue voisines d'un premier côté de l'emplacement de la vidéo de point de vue sur laquelle l'attention est actuellement portée, et $\frac{NNV-1}{2}$ vidéos de point de vue voisines d'un côté opposé de l'emplacement de la vidéo de point de vue sur laquelle l'attention est actuellement portée en tant que vidéos de point de vue prédictives ;

quand la vitesse de bascule de l'utilisateur est supérieure ou égale au seuil de vitesse prédéfini, utiliser *NNV* vidéos de point de vue voisines d'un premier côté de direction de la vidéo de point de vue sur laquelle l'attention est actuellement portée en tant que vidéos de point de vue prédictives, le premier côté de direction étant le même qu'une direction vectorielle de la première vitesse ; et

si une quantité de vidéos de point de vue au niveau d'un côté voisin de l'emplacement de la vidéo de point de vue sur laquelle l'attention est actuellement portée est inférieure à une quantité de vidéos de point de vue attribuées, utiliser la quantité de toutes les vidéos de point de vue au niveau du côté voisin de l'emplacement de la vidéo de point de vue sur laquelle l'attention est actuellement portée en tant que la quantité des vidéos de point de vue attribuées ;

dans lequel, pour une vidéo de point de vue bidimensionnel, la première unité de détermination est particulièrement configurée pour :

décomposer la première vitesse en une deuxième vitesse $V_x$ dans une direction horizontale et une troisième vitesse $V_y$ dans une direction verticale ;

prédire une quantité horizontale $NNV_x$ de vidéos de point de vue prédictives dans la direction horizontale sur la base de la deuxième vitesse et en fonction d'un premier algorithme compris dans l'algorithme prédéfini, et

prédire une quantité verticale $NNV_y$ de vidéos de point de vue prédictives dans la direction verticale sur la base de la troisième vitesse et en fonction du premier algorithme ; et

déterminer la quantité des vidéos de point de vue prédictives sur la base d'une quantité de vidéos de point de vue fusionnées, de la quantité horizontale $NNV_x$ des vidéos de point de vue prédictives, et de la quantité verticale $NNV_y$ des vidéos de point de vue prédictives et en fonction d'un second algorithme compris dans l'algorithme prédéfini, dans lequel

les vidéos de point de vue fusionnées sont des vidéos de point de vue qui sont fusionnées dans la vidéo multivues pour obtenir la vidéo de point de vue sur laquelle l'attention est actuellement portée ; et, dans lequel le premier algorithme comprend :

$$NNV_x = N_x \frac{V_x T}{D_x} \, ;$$

dans laquelle $N_x$ représente une quantité totale de vidéos de point de vue dans la direction horizontale ; $N_y$ représente une quantité totale de vidéos de point de vue dans la direction verticale ; $D_x$ représente un angle couvert par les $N_x$ vidéos de point de vue dans la direction horizontale ; et $T$ représente ladite durée de chaque vidéo de point de vue et

$$NNV_y = N_y \frac{V_y T}{D_y} \, ;$$

dans laquelle $N_y$ représente une quantité totale de vidéos de point de vue dans la direction verticale ; $D_y$ représente un angle couvert par les $N_y$ vidéos de point de vue dans la direction verticale ; et $T$ représente ladite durée de chaque vidéo de point de vue ;

dans lequel lors de la détermination de la quantité des vidéos de point de vue prédictives sur la base de la quantité des vidéos de point de vue fusionnées, de la quantité horizontale $NNV_x$ des vidéos de point de vue prédictives et de la quantité verticale $NNV_y$ des vidéos de point de vue prédictives et en fonction du second algorithme compris dans l'algorithme prédéfini, la première unité de détermination est particulièrement configurée pour :

si la quantité de toutes les vidéos de point de vue fusionnées est de un, obtenir la quantité $NNV$ des vidéos de point de vue prédictives en utilisant le second algorithme satisfaisant à une condition de la formule suivante :

$$NNV = (NNV_x + 1)*(NNV_y + 1) - 1 \, ;$$

si la quantité des vidéos de point de vue fusionnées est de deux et que les vidéos de point de vue fusionnées sont réparties dans la direction horizontale dans la vidéo multivues, obtenir la quantité $NNV$ des vidéos de point de vue prédictives en utilisant le second algorithme satisfaisant à une condition de la formule suivante :

$$NNV = (NNV_x + 2)*(NNV_y + 1) - 2 \, ;$$

si la quantité des vidéos de point de vue fusionnées est de deux et que les vidéos de point de vue fusionnées sont réparties dans la direction verticale dans la vidéo multivues, obtenir la quantité $NNV$ des vidéos de point de vue prédictives en utilisant le second algorithme satisfaisant à une condition de la formule suivante :

$$NNV = (NNV_x + 1)*(NNV_y + 2) - 2 \, ;$$

ou

si la quantité des vidéos de point de vue fusionnées est de quatre et que deux vidéos de point de vue sont réparties dans chacune de la direction horizontale et de la direction verticale dans la vidéo multivues, obtenir la quantité *NNV* des vidéos de point de vue prédictives en utilisant le second algorithme satisfaisant à une condition de la formule suivante :

$$NNV = (NNV_x + 2)*(NNV_y + 2) - 4 ;$$

dans lequel, pour la vidéo de point de vue bidimensionnel, la seconde unité de détermination est particulièrement configurée pour :

utiliser *NNV* vidéos de point de vue dans une zone rectangulaire autres que les vidéos de point de vue fusionnées en tant que vidéos de point de vue prédictives, la zone rectangulaire étant formée par une première longueur de côté qui est la quantité horizontale $NNV_x$ des vidéos de point de vue prédictives plus une quantité de vidéos de point de vue fusionnées dans la direction horizontale, et une seconde longueur de côté qui est la quantité verticale $NNV_y$ des vidéos de point de vue prédictives plus une quantité de vidéos de point de vue fusionnées dans la direction verticale, et si une quantité de vidéos de point de vue comprises dans la zone rectangulaire est inférieure à la quantité *NNV* des vidéos de point de vue prédictives, utiliser toutes les vidéos de point de vue comprises dans la zone rectangulaire en tant que vidéos de point de vue prédictives ;
quand la deuxième vitesse est inférieure à un seuil de vitesse dans la direction horizontale, et que la troisième vitesse est inférieure à un seuil de vitesse dans la direction verticale, un centre géométrique de la première zone rectangulaire est la vidéo de point de vue sur laquelle l'attention est actuellement portée ;
quand la deuxième vitesse est inférieure à un seuil de vitesse dans la direction horizontale, et que la troisième vitesse est supérieure ou égale à un seuil de vitesse dans la direction verticale, les vidéos de point de vue prédictives sont uniformément réparties, dans la direction horizontale, au niveau des deux côtés voisins de l'emplacement de la vidéo de point de vue sur laquelle l'attention est actuellement portée, et réparties, dans la direction verticale, au niveau d'un emplacement d'un côté qui est voisin de la vidéo de point de vue sur laquelle l'attention est actuellement portée et qui est le même qu'une direction vectorielle de la troisième vitesse ;
quand la deuxième vitesse est supérieure ou égale à un seuil de vitesse dans la direction horizontale, et que la troisième vitesse est inférieure à un seuil de vitesse dans la direction verticale, les vidéos de point de vue prédictives sont uniformément réparties, dans la direction verticale, au niveau des deux côtés voisins de l'emplacement de la vidéo de point de vue sur laquelle l'attention est actuellement portée, et réparties, dans la direction horizontale, au niveau d'un emplacement d'un côté qui est voisin de la vidéo de point de vue sur laquelle l'attention est actuellement portée et qui est le même qu'une direction vectorielle de la deuxième vitesse ;
quand la deuxième vitesse est supérieure ou égale à un seuil de vitesse dans la direction horizontale, et que la troisième vitesse est supérieure ou égale à un seuil de vitesse dans la direction verticale, les vidéos de point de vue prédictives sont réparties, dans la direction verticale, au niveau d'un emplacement d'un côté qui est voisin de la vidéo de point de vue sur laquelle l'attention est actuellement portée et qui est le même qu'une direction vectorielle de la troisième vitesse, et réparties, dans la direction horizontale, au niveau d'un emplacement d'un côté qui est voisin de la vidéo de point de vue sur laquelle l'attention est actuellement portée et qui est le même qu'une direction vectorielle de la deuxième vitesse.

Viewpoint
4

Viewpoint
3

Viewpoint
5

Viewpoint
2

Viewpoint
6

Viewpoint
1

Viewpoint
7

FIG. 1a

Viewpoint
1-1

Viewpoint
1-2

Viewpoint
1-3

Viewpoint
1-4

Viewpoint
1-5

Viewpoint
1-6

Viewpoint
2-1

Viewpoint
2-2

Viewpoint
2-3

Viewpoint
2-4

Viewpoint
2-5

Viewpoint
2-6

Viewpoint
3-1

Viewpoint
3-2

Viewpoint
3-3

Viewpoint
3-4

Viewpoint
3-5

Viewpoint
3-6

FIG. 1b

Viewpoint
video to which
a user currently
pays attention

Viewpoint
4

Viewpoint
3

Viewpoint
5

Viewpoint
2

Viewpoint
6

Viewpoint
1

Viewpoint
7

FIG. 2a

A currently presented fused
viewpoint is generated by fusing a
viewpoint 3 and a viewpoint 4

Viewpoint
4

Fused
viewpoint

Viewpoint
3

Viewpoint
5

Viewpoint
2

Viewpoint
6

Viewpoint
1

Viewpoint
7

FIG. 2b

Mobile network

EPC

E-UTRAN

FVV DASH
client

Content server

Web server

Internet

FVV DASH
client

FIG. 3

FIG. 4

FIG. 5

601

Obtain a location of a viewpoint video to which a user currently pays attention in a multi-view video

602

Obtain a first speed at which a user viewpoint switches

603

Determine, according to the first speed and according to a preset algorithm, a quantity of predictive viewpoint videos that need to be downloaded before the user switches to another viewpoint

604

Determine locations of the predictive viewpoint videos in the multi-view video according to a preset rule and according to the location of the viewpoint video to which the user currently pays attention, the first speed, and the quantity of the predictive viewpoint videos

605

Download the predictive viewpoint videos corresponding to the locations of the predictive viewpoint videos from a server end and transmit the predictive viewpoint videos

FIG. 6

FIG. 7a

FIG. 7b

FIG. 8

FIG. 9

FIG. 10

FIG. 11a

FIG. 11b

| | | | | | |
|---|---|---|---|---|---|
| Viewpoint 1-1 | Viewpoint 1-2 | Viewpoint 1-3 | Viewpoint 1-4 | Viewpoint 1-5 | Viewpoint 1-6 |
| Viewpoint 2-1 | Viewpoint 2-2 | Viewpoint 2-3 | Viewpoint 2-4 | Viewpoint 2-5 | Viewpoint 2-6 |
| Viewpoint 3-1 | Viewpoint 3-2 | Viewpoint 3-3 | Viewpoint 3-4 | Viewpoint 3-5 | Viewpoint 3-6 |

Predictive viewpoint    Viewpoint to which attention is paid    Marginal viewpoint    Fused viewpoint

FIG. 11c

Viewpoint 1-1

Viewpoint 1-2

Viewpoint 1-3

Viewpoint 1-4

Viewpoint 1-5

Viewpoint 1-6

Viewpoint 2-1

Viewpoint 2-2

Viewpoint 2-3

Viewpoint 2-4

Viewpoint 2-5

Viewpoint 2-6

Viewpoint 3-1

Viewpoint 3-2

Viewpoint 3-3

Viewpoint 3-4

Viewpoint 3-5

Viewpoint 3-6

Predictive viewpoint

Viewpoint to which attention is paid

Marginal viewpoint

Fused viewpoint

FIG. 11d

| | | | | | |
|---|---|---|---|---|---|
| Viewpoint 1-1 | Viewpoint 1-2 | Viewpoint 1-3 | Viewpoint 1-4 | Viewpoint 1-5 | Viewpoint 1-6 |
| Viewpoint 2-1 | Viewpoint 2-2 | Viewpoint 2-3 | Viewpoint 2-4 | Viewpoint 2-5 | Viewpoint 2-6 |
| Viewpoint 3-1 | Viewpoint 3-2 | Viewpoint 3-3 | Viewpoint 3-4 | Viewpoint 3-5 | Viewpoint 3-6 |
| Viewpoint 4-1 | Viewpoint 4-2 | Viewpoint 4-3 | Viewpoint 4-4 | Viewpoint 4-5 | Viewpoint 4-6 |
| Viewpoint 5-1 | Viewpoint 5-2 | Viewpoint 5-3 | Viewpoint 5-4 | Viewpoint 5-5 | Viewpoint 5-6 |

Predictive viewpoint

Viewpoint to which attention is paid

Marginal viewpoint

FIG. 12a

FIG. 12b

| | | | | | |
|---|---|---|---|---|---|
| Viewpoint 1-1 | Viewpoint 1-2 | Viewpoint 1-3 | Viewpoint 1-4 | Viewpoint 1-5 | Viewpoint 1-6 |
| Viewpoint 2-1 | Viewpoint 2-2 | Viewpoint 2-3 | Viewpoint 2-4 | Viewpoint 2-5 | Viewpoint 2-6 |
| Viewpoint 3-1 | Viewpoint 3-2 | Viewpoint 3-3 | Viewpoint 3-4 | Viewpoint 3-5 | Viewpoint 3-6 |
| Viewpoint 4-1 | Viewpoint 4-2 | Viewpoint 4-3 | Viewpoint 4-4 | Viewpoint 4-5 | Viewpoint 4-6 |
| Viewpoint 5-1 | Viewpoint 5-2 | Viewpoint 5-3 | Viewpoint 5-4 | Viewpoint 5-5 | Viewpoint 5-6 |

| Predictive viewpoint | Viewpoint to which attention is paid | Marginal viewpoint |
|---|---|---|

FIG. 12c

| | | | | | |
|---|---|---|---|---|---|
| Viewpoint 1-1 | Viewpoint 1-2 | Viewpoint 1-3 | Viewpoint 1-4 | Viewpoint 1-5 | Viewpoint 1-6 |
| Viewpoint 2-1 | Viewpoint 2-2 | Viewpoint 2-3 | Viewpoint 2-4 | Viewpoint 2-5 | Viewpoint 2-6 |
| Viewpoint 3-1 | Viewpoint 3-2 | Viewpoint 3-3 | Viewpoint 3-4 | Viewpoint 3-5 | Viewpoint 3-6 |
| Viewpoint 4-1 | Viewpoint 4-2 | Viewpoint 4-3 | Viewpoint 4-4 | Viewpoint 4-5 | Viewpoint 4-6 |
| Viewpoint 5-1 | Viewpoint 5-2 | Viewpoint 5-3 | Viewpoint 5-4 | Viewpoint 5-5 | Viewpoint 5-6 |

Predictive viewpoint

Viewpoint to which attention is paid

Marginal viewpoint

FIG. 12d

| | | | | | |
|---|---|---|---|---|---|
| Viewpoint 1-1 | Viewpoint 1-2 | Viewpoint 1-3 | Viewpoint 1-4 | Viewpoint 1-5 | Viewpoint 1-6 |
| Viewpoint 2-1 | Viewpoint 2-2 | Viewpoint 2-3 | Viewpoint 2-4 | Viewpoint 2-5 | Viewpoint 2-6 |
| Viewpoint 3-1 | Viewpoint 3-2 | Viewpoint 3-3 | Viewpoint 3-4 | Viewpoint 3-5 | Viewpoint 3-6 |

Predictive viewpoint

Viewpoint to which attention is paid

Marginal viewpoint

FIG. 13

FIG. 14

FIG. 15

Multi-view video transmission apparatus

1601

First obtaining unit

1602

Second obtaining unit

1603

First determining unit

1604

Second determining unit

1605

Download unit

FIG. 16

Multi-view video transmission apparatus

1701

1705

1706

1702

Processor

1703

Communications interface

1704

Memory

FIG. 17

FIG. 18

**REFERENCES CITED IN THE DESCRIPTION**

**Patent documents cited in the description**

- US 20150249813 A1

- WO 2015155406 A1

**Non-patent literature cited in the description**

- *Client-Driven Selective Streaming of Multiview Video for Interactive 3DTV*

- *A DASH-based Free Viewpoint Video Streaming System*